(19) 

**Europäisches Patentamt**
**European Patent Office**
**Office européen des brevets**

(11) **EP 4 727 238 A1**

(12) **EUROPEAN PATENT APPLICATION**
published in accordance with Art. 153(4) EPC

(43) Date of publication:
**15.04.2026 Bulletin 2026/16**

(21) Application number: **23940130.0**

(22) Date of filing: **08.06.2023**

(51) International Patent Classification (IPC):
*H04W 72/1268* (2023.01)

(52) Cooperative Patent Classification (CPC):
H04W 72/1268

(86) International application number:
**PCT/CN2023/099218**

(87) International publication number:
**WO 2024/250244 (12.12.2024 Gazette 2024/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **GAO, Ning**
  **Dongguan, Guangdong 523860 (CN)**

• **LU, Liuming**
  **Dongguan, Guangdong 523860 (CN)**
• **LUO, Chaoming**
  **Dongguan, Guangdong 523860 (CN)**
• **ZHOU, Pei**
  **Dongguan, Guangdong 523860 (CN)**
• **LI, Yapu**
  **Dongguan, Guangdong 523860 (CN)**

(74) Representative: **Taor, Simon Edward William et al**
**Venner Shipley LLP**
**200 Aldersgate**
**London EC1A 4HD (GB)**

(54) **WIRELESS COMMUNICATION METHOD AND DEVICE**

(57) Embodiments of the present application provide a wireless communication method and a device. An AP has the uplink multi-user sounding capability in a channel contention phase, so that the AP can reasonably select, on the basis of an uplink service demand quantity and a downlink service demand quantity, to grant a TXOP to an STA or an AP, thereby reducing the delay of uplink and downlink data transmission and relieving the delay jitter. The wireless communication method comprises: a first STA sends a first PPDU, the first STA having uplink data to be transmitted, wherein the first PPDU comprises a first MAC frame and a first identification field, the first MAC frame is used for channel contention, and the first identification field is used for indicating an AID of the first STA; or, the first PPDU comprises a second MAC frame, the second MAC frame is used for channel contention, and the second MAC frame is further used for triggering all STAs receiving the second MAC frame to feed back whether a medium needs to be acquired so as to transmit uplink data.

FIG. 13

**Description**

TECHNICAL FIELD

Embodiments of the disclosure relate to the field of communications, and more particularly to methods and devices for wireless communication.

BACKGROUND

In a Wireless Local Area Network (WLAN), an Enhanced Distributed Channel Access (EDCA) mechanism is introduced to improve performance of channel access. However, in some scenarios, the number of stations (STAs) is large, and performance of the EDCA mechanism at the current stage still needs to be further improved.

SUMMARY

The embodiments of the disclosure provide methods and devices for wireless communication, in which an Access Point (AP) has a capability of uplink (UL) multi-user (MU) detection at a channel contention stage, such that the AP may reasonably select to grant a Transmission Opportunity (TXOP) to a STA or the AP based on the UL service demand and the downlink (DL) service demand, thereby reducing delay of UL and DL data transmissions and alleviating delay jitter.

According to a first aspect, there is provided a method for wireless communication, the method is applied to a first STA with to-be-transmitted UL data, and the method includes the following operations.

The first STA sends a first Physical Layer Protocol Data Unit (PPDU).

The first PPDU includes a first Media Access Control (MAC) frame and a first identification (ID) field, the first MAC frame is used for channel contention, and the first ID field is used for indicating an Association Identifier (AID) of the first STA.

Alternatively, the first PPDU includes a second MAC frame, the second MAC frame is used for channel contention, and the second MAC frame is further used for triggering all STAs receiving the second MAC frame to feed back whether the STAs need to acquire media to transmit UL data respectively.

According to a second aspect, there is provided a method for wireless communication, the method is applied to a second STA, and the method includes the following operations.

The second STA receives a first PPDU sent by a first STA with to-be-transmitted UL data.

The first PPDU includes a first MAC frame and a first ID field, the first MAC frame is used for channel contention, and the first ID field is used for indicating an AID of the first STA.

Alternatively, the first PPDU includes a second MAC frame, the second MAC frame is used for channel contention, and the second MAC frame is further used for triggering all STAs receiving the second MAC frame to feed back whether the STAs need to acquire media to transmit UL data respectively.

According to a third aspect, there is provided a method for wireless communication, the method is applied to an AP, and the method includes the following operations.

The AP receives a first PPDU sent by a first STA with to-be-transmitted UL data.

The first PPDU includes a first MAC frame and a first ID field, the first MAC frame is used for channel contention, and the first ID field is used for indicating an AID of the first STA.

Alternatively, the first PPDU includes a second MAC frame, the second MAC frame is used for channel contention, and the second MAC frame is further used for triggering all STAs receiving the second MAC frame to feed back whether the STAs need to acquire media to transmit UL data respectively.

According to a fourth aspect, there is provided a STA, the STA is a first STA and is configured to perform the method in the above first aspect.

Specifically, the STA includes functional modules configured to perform the method in the above first aspect.

According to a fifth aspect, there is provided a STA, the STA is a second STA and is configured to perform the method in the above second aspect.

Specifically, the STA includes functional modules configured to perform the method in the above second aspect.

According to a sixth aspect, there is provided an AP, the AP is configured to perform the method in the above third aspect.

Specifically, the AP includes functional modules configured to perform the method in the above third aspect.

According to a seventh aspect, there is provided a STA, the STA is a first STA and includes a processor and a memory. The memory is configured to store a computer program, and the processor is configured to call and execute the computer program stored in the memory, to enable the STA to perform the method in the above first aspect.

According to an eighth aspect, there is provided a STA, the STA is a second STA and includes a processor and a memory. The memory is configured to store a computer program, and the processor is configured to call and execute the computer program stored in the memory, to enable the STA to perform the method in the above second aspect.

According to a ninth aspect, there is provided an AP, the AP includes a processor and a memory. The memory is configured to store a computer program, and the processor is configured to call and execute the computer program stored in the memory, to enable the AP to perform the method in the above third aspect.

According to a tenth aspect, there is provided an apparatus, the apparatus is configured to implement the method in any one of the above first to third aspects.

Specifically, the apparatus includes a processor. The processor is configured to call and execute a computer program from a memory, to enable a device mounted with the apparatus to perform the method in any one of the above first to third aspects.

According to an eleventh aspect, there is provided a computer-readable storage medium, the computer-readable storage medium is configured to store a computer program. The computer program enables a computer to perform the method in any one of the above first to third aspects.

According to a twelfth aspect, there is provided a computer program product, the computer program product includes computer program instructions. The computer program instructions enable a computer to perform the method in any one of the above first to third aspects.

According to a thirteenth aspect, there is provided a computer program. When the computer program is executed on a computer, the computer program enables the computer to perform the method in any one of the above first to third aspects.

With the above technical solutions, the AP may acquire the number and AIDs of STAs that need to acquire media to transmit UL data respectively at the channel contention stage. That is, the AP has a capability of UL MU detection at the channel contention stage, such that the AP may reasonably select to grant the TXOP to a STA or the AP based on the UL service demand and the DL service demand, thereby reducing delay of UL and DL data transmissions and alleviating delay jitter.

BRIEF DESCRIPTION OF THE DRAWINGS

FIG. 1 is a schematic diagram of an architecture of a communication system to which the embodiments of the disclosure are applied.

FIG. 2 is a schematic diagram of channel access priorities and timings of a Quality of Service (QoS) STA and a Non-QoS STA according to the disclosure.

FIG. 3 is a schematic diagram of a timing relationship of an EDCA mechanism according to the disclosure.

FIG. 4 is a schematic diagram of a single user uplink (SU UL) according to the disclosure.

FIG. 5 is a schematic diagram of a multi-user uplink (MU UL) according to the disclosure.

FIG. 6 is a schematic diagram of a Null Data Physical Protocol Data Unit (NDP) feedback report mechanism according to the disclosure.

FIG. 7 is a schematic diagram of a frame format of a Null Data Physical Protocol Data Unit Feedback Report Polling (NFRP) Trigger frame according to the disclosure.

FIG. 8 is a schematic diagram of a frame format of a common information (Common Info) field according to the disclosure.

FIG. 9 is a schematic diagram of a frame format of a user information list (User Info List) field according to the disclosure.

FIG. 10 is a schematic diagram of a frame format of a High Efficiency (HE) Trigger Based Feedback Null Data Physical Protocol Data Unit (TB feedback NDP) according to the disclosure.

FIG. 11 is a schematic diagram of a probability of a STA or an AP obtaining a TXOP in a channel contention according to the disclosure.

FIG. 12 is a schematic diagram of three stages of the channel contention according to an embodiment of the disclosure.

FIG. 13 is a schematic flowchart of a method for wireless communication according to an embodiment of the disclosure.

FIG. 14 to FIG. 19 are schematic diagrams of User Identifying Extension (UIE) fields according to embodiments of the disclosure

FIG. 20 to FIG. 27 are schematic diagrams of channel contention and data transmission according to embodiments of the disclosure.

FIG. 28 is a schematic diagram of an extended NFRP Trigger frame according to an embodiment of the disclosure.

FIG. 29 is a schematic diagram of an extended Triggered Response Scheduling (TRS) Control field according to an embodiment of the disclosure.

FIG. 30 is a schematic diagram of a newly defined Null Data Physical Protocol Data Unit Feedback Report (NFR) Control field according to an embodiment of the disclosure.

FIG. 31 is a schematic diagram of channel contention and SU UL data transmission according to an embodiment of the disclosure.

FIG. 32 is a schematic diagram of channel contention and MU UL data transmission according to an embodiment of the disclosure.

FIG. 33 is a schematic block diagram of a STA according to an embodiment of the disclosure.

FIG. 34 is a schematic block diagram of another STA according to an embodiment of the disclosure.

FIG. 35 is a schematic block diagram of an AP according to an embodiment of the disclosure.

FIG. 36 is a schematic block diagram of a communication device according to an embodiment of the disclosure.

FIG. 37 is a schematic block diagram of an apparatus according to an embodiment of the disclosure.

FIG. 38 is a schematic block diagram of a communication system according to an embodiment of the disclosure.

DETAILED DESCRIPTION

The technical solutions in the embodiments of the disclosure will be described below with reference to the drawings in the embodiments of the disclosure. It is apparent that the described embodiments are part of the embodiments of the disclosure, rather than all of the embodiments. Based on the embodiments in the disclosure, all other embodiments obtained by those of ordinary skill in the art without paying any creative work belong to the scope of protection of the disclosure.

The technical solutions of the embodiments of the disclosure may be applied to various communication systems, such as a Wireless Local Area Network (WLAN), Wireless Fidelity (WiFi), or other communication systems, etc.

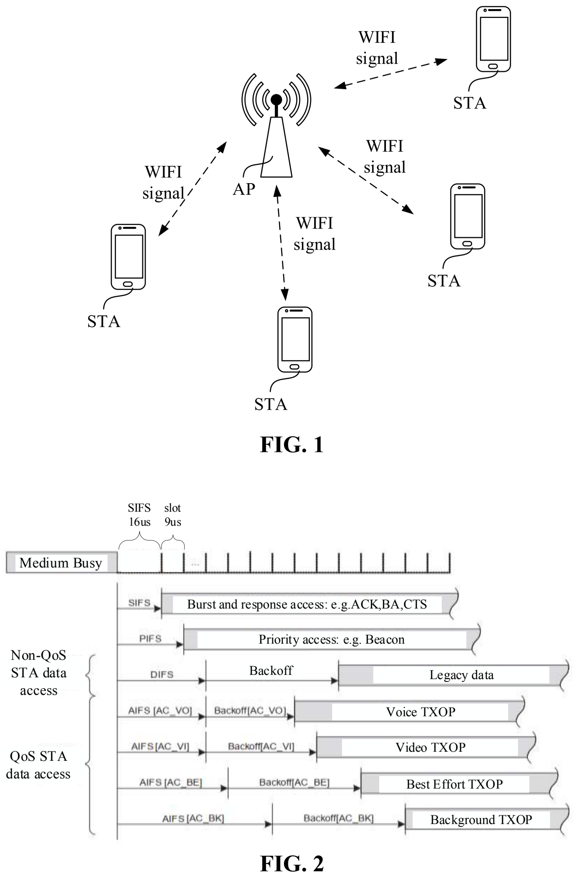

With reference to FIG. 1, a schematic diagram of a wireless communication system provided in an embodiment of the disclosure is shown. As shown in FIG. 1, the wireless communication system may include an Access Point (AP) and stations (STAs).

In some scenarios, the AP may be referred to as an AP STA, that is, the AP is also a STA in a certain sense. In some scenarios, the STA may be referred to as a Non-AP STA.

In some embodiments, the STAs may include AP STAs and Non-AP STAs. Communication in the communication system may be communication between the AP and the Non-AP STA, or communication between the Non-AP STAs, or communication between the STA and a peer STA. The peer STA may refer to a device communicated with a peer side of the STA. For example, the peer STA may be an AP or a Non-AP STA.

The AP is equivalent to a bridge connecting a wired network to a wireless network, a main function of the AP is to connect various wireless network clients together and then access the wireless network to Ethernet. An AP device may be a terminal device (such as a mobile phone) or a network device (such as a router) with a WiFi chip.

It should be understood that roles of the STAs in the communication system are not absolute. For example, in some scenarios, when a mobile phone is connected to a router, the mobile phone is a Non-AP STA, while when the mobile phone is used as a hotspot for other mobile phones, the mobile phone plays a role of an AP.

The AP and the Non-AP STA may be devices used in Internet of Vehicles; Internet of Things (IoT) nodes, sensors or the like in the IoT; smart cameras, smart remote controls, smart water and electricity meters, or the like in a smart home; sensors in a smart city, etc.

In some embodiments, the Non-AP STA may support the 802.11be standard. The Non-AP STA may also support various current and future WLAN standards in the 802.11 family, such as 802.11ax, 802.11ac, 802.11n, 802.11g, 802.11b, 802.11a, etc.

In some embodiments, the AP may be a device supporting the 802.11be standard. The AP may also be a device supporting various current and future WLAN standards in the 802.11 family, such as 802.11ax, 802.11ac, 802.11n, 802.11g, 802.11b, 802.11a, etc.

In the embodiments of the disclosure, the STA may be a device supporting WLAN/WiFi technologies, such as a mobile phone, a Pad, a computer, a Virtual Reality (VR) device, an Augmented Reality (AR) device, a wireless device in industrial control, a set-top box, a wireless device in self-driving, a vehicle-mounted communication device, a wireless device in remote medical, a wireless device in a smart grid, a wireless device in transportation safety, a wireless device in a smart city, or a wireless device in a smart home, a wireless communication chip, an Application Specific Integrated Circuit (ASIC), a System on Chip (SOC), etc.

Bands supported by the WLAN technology may include, but are not limited to low bands (2.4GHz, 5GHz, 6GHz) and high bands (45GHz, 60GHz).

There are one or more links between the STA and the AP. In some embodiments, multi-band communication is supported by the STA and the AP. For example, the STA and the AP perform communication on bands of 2.4GHz, 5GHz, 6GHz, 45GHz and 60GHz simultaneously, or perform communication on different channels of the same band (or different bands) simultaneously, thereby improving throughput and/or reliability of communication between devices. Such device is usually referred to as a multi-band device or a Multi-Link Device (MLD); sometimes, such device is also referred to as a multi-link entity or a multi-band entity. A MLD may be an AP device or a STA device. If the MLD is an AP device, the MLD includes one or more APs; if the MLD is a STA device, the MLD includes one or more Non-AP STAs.

The MLD including one or more APs may be referred to as an Access Point Multi-Link Device (AP MLD), and the MLD including one or more Non-AP STAs may be referred to as a Non-AP Multi-Link Device (Non-AP MLD).

In the embodiments of the disclosure, the AP may include multiple APs, the Non-AP may include multiple STAs, multiple links may be formed between the APs in the AP and the STAs in the Non-AP, and data communication may be performed between the APs in the AP and corresponding STAs in the Non-AP through corresponding links.

The AP is a device deployed in the WLAN to provide a wireless communication function for the STA. The STA may include a User Equipment (UE), an access terminal, a user unit, a user station, a mobile station, a mobile radio station, a remote station, a remote terminal, a mobile device, a wireless communication device, a user agent or a user device. Optionally, the STA may also be a cellphone, a cordless phone, a Session Initiation Protocol (SIP) phone, a Wireless Local Loop (WLL) station, a Personal Digital Assistant (PDA), a handheld device with a wireless communication function, a computing device or other processing devices connected to a wireless modem, a vehicle-mounted device, and a wearable device, which is not limited in the embodiments of the disclosure.

In some embodiments, both the STA and the AP support the IEEE 802.11 standard.

It should be understood that terms "system" and "network" in the disclosure are often used interchangeably in the disclosure. In the disclosure, term "and/or" is only an association relationship describing associated objects, and represents that three relationships may exist. For example, A and/or B may represent three situations, that is, existence of A alone, existence of both A and B, and existence of B alone. Furthermore, character "/" in the disclosure usually represents that anterior and posterior associated objects are in an "or" relationship.

It should be understood that "indicate" mentioned in the embodiments of the disclosure may be a direct indication or an indirect indication, or may represent existence of an association relationship. For example, A indicates B, which may represent that A directly indicates B, for example, B may be acquired through A; or may represent that A indirectly indicates B, for example, A indicates C, B may be acquired through C; or may represent that there is an association relationship between A and B.

Terms used in implementations of the disclosure are only intended to explain specific embodiments of the disclosure, and are not intended to limit the disclosure. Terms "first", "second", "third", "fourth" or the like in the description, claims and drawings of the disclosure are intended to distinguish different objects, rather than describing a specific order. Furthermore, terms "include", "have" and any variation thereof are intended to cover non-exclusive inclusions.

It should be understood that "at least one" or "at least one of..." mentioned in the embodiments of the disclosure may represent "one or more", "positive integer" mentioned in the embodiments of the disclosure may represent "1, 2, 3... or other values", "non-negative integer" mentioned in the embodiments of the disclosure may represent "0, 1, 2, 3... or other values", and "integer" mentioned in the embodiments of the disclosure may represent "..., -3, -2, -1, 0, 1, 2, 3,... or other values", which may be replaced by any possible value based on requirements of the embodiments.

It should be understood that figures and/or tables shown in the embodiments of the disclosure are only examples. Specifically, in some situations, part of information contained in the figures and/or tables shown in the embodiments of the disclosure may constitute an optional embodiment individually. For example, each row or each column in a table may constitute an optional embodiment individually, which is not limited in the disclosure.

In descriptions of the embodiments of the disclosure, term "correspond" may represent that there is a direct or indirect correspondence between two objects, or may represent that there is an association relationship between two objects, or may represent an indicating and indicated relationship, a configuring and configured relationship, etc.

In the embodiments of the disclosure, "predefined" or "pre-configured" may be implemented by pre-saving corresponding codes, tables in a device (for example, including the STA and the network device) or in other manners that may indicate relevant information, and specific implementation thereof is not limited in the disclosure. For example, "predefined" may refer to "defined" in a protocol.

In the embodiments of the disclosure, the "protocol" may refer to a standard protocol in the field of communications, for example, may include a WiFi protocol, and relevant protocols applied to future WiFi communication systems, which is not limited in the disclosure.

In order to facilitate understanding the embodiments of the disclosure better, an Enhanced Distributed Channel Access (EDCA) mechanism related to the disclosure will be described.

A channel access mechanism with enhanced Quality of Service (QoS): EDCA is defined in the IEEE 802.11e standard. Compared with a traditional Distributed Coordination Function (DCF), EDCA defines four different Access Categories (ACs), which are AC_VO, AC_VI, AC_BE and AC_BK respectively. As shown in Table 1, different ACs have different parameter settings, and thus have different priorities when they access to a medium.

## Table 1 EDCA parameter setting table

| AC | CWmin | CWmax | AIFSN | TXOP limit | | | | |
|---|---|---|---|---|---|---|---|---|
| | | | | For PHYs defined in Clause 15 (DSSS PHY specification for the 2.4 GHz band designated for ISM applications) and Clause 16 (High rate direct sequence spread spectrum (HR/DSSS) PHY specification) | For PHYs defined in Clause 17 (Orthogonal Frequency division multiplexing (OFDM) PHY specification), Clause 18 (Extended Rate PHY (ERP) specification), Clause 19 (High throughput (HT) PHY specification)(#2 297), and Clause 21 (Very high throughput (VHT) PHY specification) | For PHY defined in Clause 22 (Television very high throughput (TVHT) PHY specification) | Clause 23 (30 Sub 1 GHz (S1G) PHY specification) | Other PHYs |
| AC_BK | aCWmin | aCWmax | 7 | 3.264 ms | 2.528 ms | 0 | 15.008 ms | 0 |
| AC_BE | aCWmin | aCWmax | 3 | 3.264 ms | 2.528 ms | 0 | 15.008 ms | 0 |
| AC_VI | (aCWmin+1)/2 − 1 | aCWmin | 2 | 6.016 ms | 4.096 ms | 22.56 ms (BCU: 6 or 7 MHz), 16.92 ms (BCU: 8 MHz) | 15.008 ms | 0 |
| AC_VO | (aCWmin+1)/4 − 1 | (aCWmin+1)/2 − 1 | 2 | 3.264 ms | 2.080 ms | 11.28 ms (BCU: 6 or 7 MHz), 8.46 ms (BCU: 8 MHz) | 15.008 ms | 0 |

Here,

CWmin: indicates a minimum value of an upper limit of a contention window. The smaller the CWmin, the higher the priority.

CWmax: indicates a maximum value of the upper limit of the contention window. The smaller the CWmax, the higher the priority;

Transmission Opportunity (TXOP) limit: indicates a maximum duration when a channel is occupied;

Arbitration Interframe Space Number (AIFSN): indicates the number of slots to be waited by a STA after detecting that the channel is idle for a Short Interframe Space (SIFS) time, the STA may start a random backoff process only after that. The smaller the AIFSN, the higher the priority.

FIG. 2 shows a schematic diagram of a QoS STA accessing to a channel by using four ACs. It may be seen that priorities of AC_VO, AC_VI, AC_BE and AC_BK gradually decrease due to different AIFSN parameters.

Furthermore, FIG. 2 also shows a schematic diagram of timing of a Non-QoS STA accessing to a channel, which is a traditional DCF mechanism. The DCF mechanism contains two situations as follows. One situation is that the STA may send after detecting that the channel is idle for a Priority Interframe Space (PIFS), and another situation is that the STA may send after detecting that the channel is idle for a Distributed Inter-frame Spacing (DIFS) and performing backoff. It is specified in the standard that the former situation may usually be used only when some frames with special functions such as beacon frames are sent, since such frame needs to have a higher sending priority; otherwise, the STA accesses to the channel by using the latter situation.

It should be noted that in FIG. 2, the QoS STA may be a STA that supports a QoS EDCA mechanism, and the Non-QoS STA may be a STA that does not support the QoS EDCA mechanism.

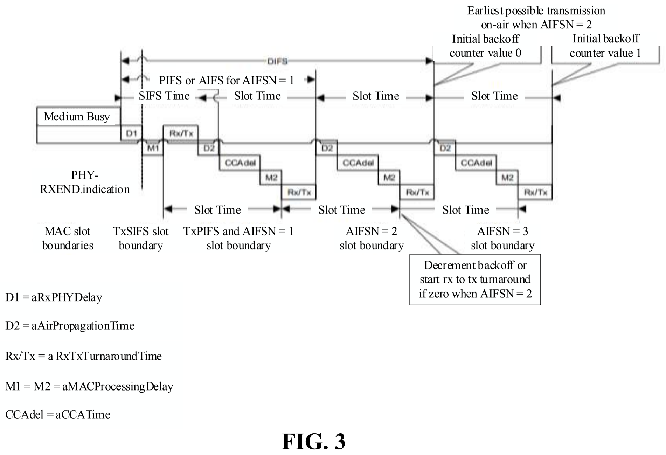

A timing relationship among the PIFS, the DIFS, an Arbitration Interframe Space (AIFS) and the SIFS is shown in FIG. 3.

$$PIFS = SIFS + 1 \times aSlotTime.$$

$$DIFS = SIFS + 2 \times aSlotTime.$$

$$AIFS = SIFS + AIFSN \times aSlotTime.$$

In order to facilitate understanding the embodiments of the disclosure better, a single user uplink (SU UL) process and a multi-user uplink (MU UL) process related to the disclosure will be described.

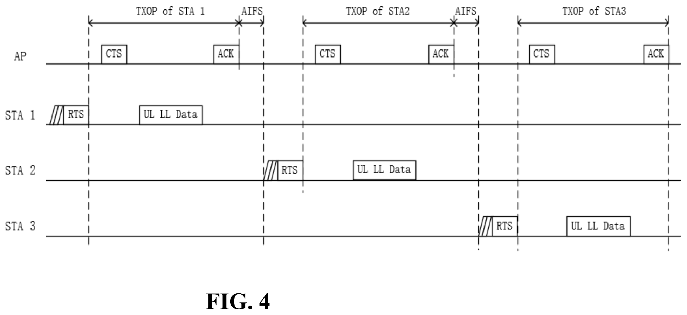

The SU UL process is shown in FIG. 4, in which 1 AP and 3 STAs (Non-AP STAs) are included. Each of the STAs needs to contend for a channel through an EDCA mechanism first, and then send uplink (UL) low delay (LL) data and receive an Acknowledgement (Ack) frame. Multiple STAs (Non-AP STAs) obtain a TXOP and send UL data one by one in a serial manner. This UL data transmission mode for the SU UL may cause a large delay of UL transmission and delay jitter, since the STAs may not necessarily contend for the TXOP in time.

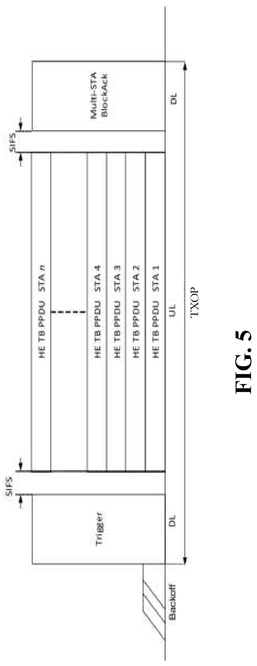

The MU UL process is shown in FIG. 5, in which 1 AP and n STAs (Non-AP STAs) are included. First, the AP contends for a TXOP through an EDCA mechanism. Secondly, the AP sends a trigger frame to each of the STAs, and allocates, to each of the STAs, resources required for its UL parallel transmission. Then, the n STAs (Non-AP STAs) simultaneously send High Efficiency Trigger Based Physical Layer Protocol Data Units (HE TB PPDUs) according to the allocated resources, to transmit UL data. Finally, the AP replies a multi-STA block acknowledgment (Multi-STA BlockAck) frame to the n STAs, to confirm whether the transmission is successful. This UL transmission mode for the MU UL may achieve a parallel UL transmission (that is, time domain resources occupied by the UL transmission are the same, while frequency domain and/or spatial domain resources are different), and has a higher transmission efficiency than the SU UL.

In order to facilitate understanding the embodiments of the disclosure better, a Null Data Physical Protocol Data Unit (NDP) feedback report mechanism related to the disclosure will be described.

An MU UL detection mechanism is defined in the IEEE 802.11ax standard, and this mechanism enables an AP to detect STAs (Non-AP STAs) to which the AP needs to allocate resources, before sending a trigger frame.

The MU UL detection mechanism in IEEE 802.11ax further defines two relevant frame structures: a Null Data Physical Protocol Data Unit Feedback Report Polling (NFRP) Trigger frame, and a High Efficiency Trigger Based Feedback Null Data Physical Protocol Data Unit (HE TB feedback NDP). The AP sends the NFRP Trigger frame to all the Non-AP STAs, to trigger the Non-AP STAs to send the HE TB feedback NDP, and the AP may know which Non-AP STAs need to participate in a subsequent MU UL transmission, by parsing the HE TB feedback NDP.

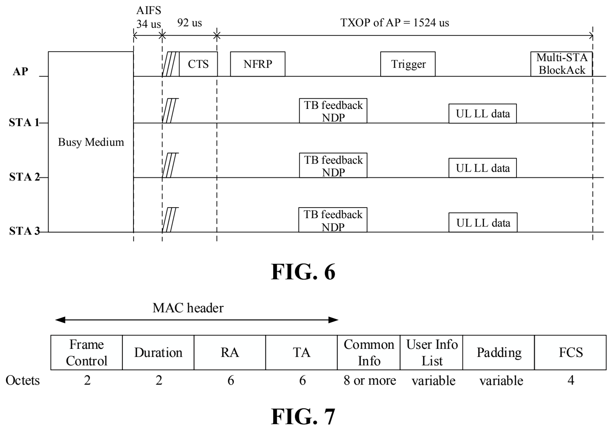

As shown in FIG. 6, the AP sends the NFRP Trigger frame to some Non-AP STAs, to trigger the Non-AP STAs to send the HE TB feedback NDP, and the AP may know which Non-AP STAs need to participate in a subsequent MU UL transmission, by parsing the HE TB feedback NDP, and then may reasonably allocate resources to the Non-AP STAs in a subsequent trigger frame, thereby completing the MU UL transmission.

In order to facilitate understanding the embodiments of the disclosure better, an NFRP Trigger frame related to the disclosure will be described.

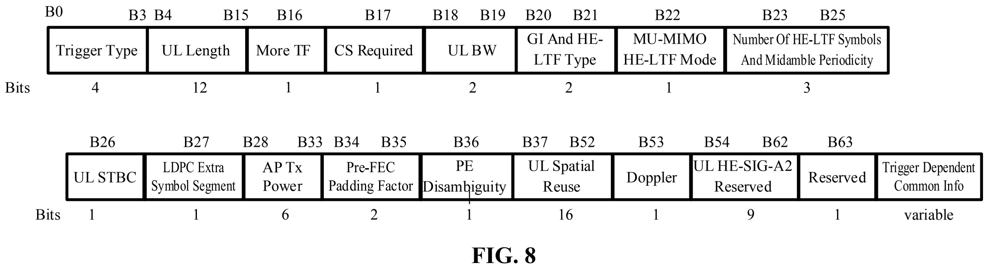

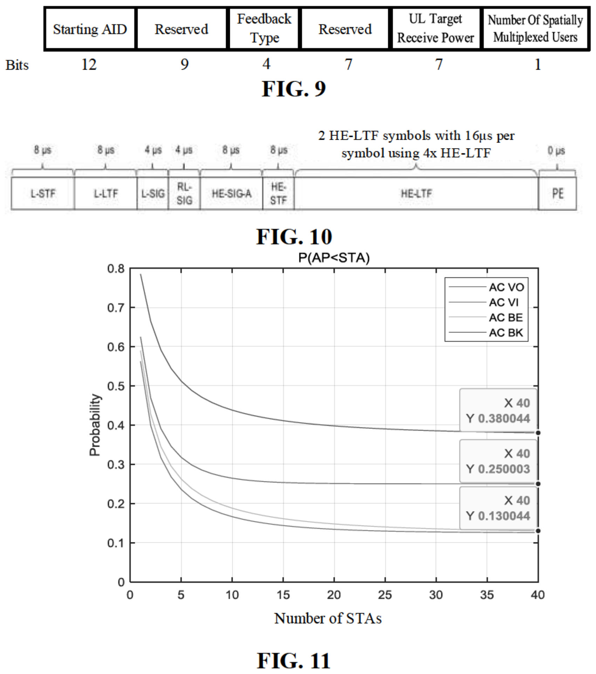

A frame format of the NFRP Trigger frame is shown in FIG. 7, here a format of a common information (Common Info) field is shown in FIG. 8, and a format of a user information list (User Info List) field is shown in FIG. 9.

Specifically, as shown in FIG. 7, the NFRP Trigger frame may include the following fields: Frame Control (occupying 2 bytes), Duration (occupying 2 bytes), Receiving Address (RA) (occupying 6 bytes), Transmission Address (TA) (occupying 6 bytes), Common Info (occupying 8 or more bytes), User Info List (occupying a variable number of bytes), Padding (occupying a variable number of bytes), Frame Check Sequence (FCS) (occupying 4 bytes).

Specifically, as shown in FIG. 8, the Common Info field may include the following fields: Trigger Type (occupying 4 bits), UL Length (occupying 12 bits), More Trigger Frame (TF) (occupying 1 bit), Carrier Sense (CS) Required (occupying 1 bit), UL BandWidth (BW) (occupying 2 bits), Guard Interval (GI) And High Efficiency Long Training Field (HE-LTF) Type (occupying 2 bits), Multiple Users multiple-in multiple-out (MU-MIMO) HE-LTF Mode (occupying 1 bit), Number Of HE-LTF Symbols And Midamble Periodicity (occupying 3 bits), UL Space Time Block Code (STBC) (occupying 1 bit), Low-Density Parity Check (LDPC) Extra Symbol Segment (occupying 1 bit), AP Transmission (Tx) Power (occupying 6 bits), Pre-Forward Error Correction (Pre-FEC) Padding Factor (occupying 2 bits), Packet Extension (PE) Disambiguity (occupying 1 bit), UL Spatial Reuse (occupying 16 bits), Doppler (occupying 1 bit), UL High Efficiency-SINGAL field-A2 (HE-SIG-A2) Reserved (occupying 9 bits), Reserved (occupying 1 bit), Trigger Dependent Common Info (occupying a variable number of bits).

The UL BW field represents a BW of an NDP feedback report response; the UL STBC, LDPC Extra Symbol Segment, Pre-FEC Padding Factor, PE Disambiguity, UL Spatial Reuse and Doppler fields are reserved; the Number Of HE-LTF Symbols And Midamble Periodicity field indicates the number of HE-LTF symbols present in the NDP feedback report response and is set to 1; the GI And HE-LTF Type field is set to 2; the Trigger Dependent Common Info field does not exist.

Specifically, as shown in FIG. 9, the User Info List field may include the following fields: Starting Association Identifier (AID) (occupying 12 bits), Reserved (occupying 9 bits), Feedback Type (occupying 4 bits), Reserved (occupying 7 bits), UL Target Receive Power (occupying 7 bits), and Number Of Spatially Multiplexed Users (occupying 1 bit).

The Starting AID field defines a first AID in an AID range planned to respond to the NFRP Trigger frame; the Feedback Type field indicates a type of feedback information carried by an HE TB feedback NDP; the UL Target Receive Power field represents an expected Received Signal Power (RSP) measured at an antenna connector of the AP and averaged on the antenna; the Number Of Spatially Multiplexed Users field represents the number of STAs multiplexed on the same group of subcarriers in the same Resource Unit (RU), and is encoded as the number of STAs - 1.

In order to facilitate understanding the embodiments of the disclosure better, the HE TB feedback NDP related to the disclosure will be described.

The HE TB feedback NDP is used for carrying NDP feedback report information, and its frame format is shown in FIG. 10.

Specifically, the HE TB feedback NDP frame includes the following fields: a Legacy Short Training Field (L-STF), a Legacy Long Training Field (L-LTF), a legacy signal (L-SIG), a repeat legacy signal (RL-SIG), a High Efficiency Signal A (HE-SIG-A), a High Efficiency Short Training Field (HE-STF), a High Efficiency Long Training Field (HE-LTF), and PE.

As shown in FIG. 10, there are 2 HE-LTF symbols with $16\mu s$ per symbol using 4x HE-LTF.

Specifically, format of the NDP uses format of the HE TB PPDU, while it does not contain a data field, duration of the PE field is $0\mu s$, there are 2 symbols with a type of 4x HE-LTF, and the used GI is $3.2\mu s$. Duration of 1x HE-LTF symbol is $3.2\mu s$, duration of 2x HE-LTF symbol is $6.4\mu s$, and duration of 4x HE-LTF symbol is $12.8\mu s$. The GI is not counted in the duration.

Specifically, different RU TONE set indices (RU_TONE_SET_INDEX) in the HE-LTF field are used for identifying AIDs and feedback information (FEEDBACK_STATUS) of different Non-AP STAs, here TONE may also be referred to as a subcarrier. Specifically, a mapping relationship of subcarriers of HE-LTF in the HE TB feedback NDP may be shown in Table 2.

Table 2

| RU_TONE_SET_INDEX | 80MHz | | 40MHz | | 20MHz | |
|---|---|---|---|---|---|---|
| | $K_{tone\_NDPu}$ if FEEDBACK_STATUS is 1 | $K_{tone\_NDPu}$ if FEEDBACK_STATUS is 0 | $K_{tone\_NDPu}$ if FEEDBACK_STATUS is 1 | $K_{tone\_NDPu}$ if FEEDBACK_STATUS is 0 | $K_{tone\_NDPu}$ if FEEDBACK_STATUS is 1 | $K_{tone\_NDPu}$ if FEEDBACK_STATUS is 0 |
| 1 | | | | | −113, −77, −41, 6, 42, 78 | −112, −76, −40, 7, 43, 79 |
| 2 | | | | | −111, −75, −39, 8, 44, 80 | −110, −74, −38, 9, 45, 81 |
| 3 | | | | | −109, −73, −37, 10, 46, 82 | −108, −72, −36, 11, 47, 83 |
| 4 | | | | | −107, −71, −35, 12, 48, 84 | −106, −70, −34, 13, 49, 85 |
| 5 | | | | | −105, −69, −33, 14, 50, 86 | −104, −68, −32, 15, 51, 87 |
| 6 | | | | | −103, −67, −31, 16, 52, 88 | −102, −66, −30, 17, 53, 89 |
| 7 | | | | | −101, −65, −29, 18, 54, 90 | −100, −64, −28, 19, 55, 91 |
| 8 | Use 20MHz FEEDBACK_STATUS = 1 Subcarrier Indices -384 | Use 20MHz FEEDBACK_STATUS = 0 Subcarrier Indices -384 | Use 20MHz FEEDBACK_STATUS = 1 Subcarrier Indices -128 | Use 20MHz FEEDBACK_STATUS = 0 Subcarrier Indices -128 | −99, −63, −27, 20, 56, 92 | −98, −62, −26, 21, 57, 93 |
| 9 | | | | | −97, −61, −25, 22, 58, 94 | −96, −60, −24, 23, 59, 95 |
| 10 | | | | | −95, −59, −23, 24, 60, 96 | −94, −58, −22, 25, 61, 97 |
| 11 | | | | | −93, −57, −21, 26, 62, 98 | −92, −56, −20, 27, 63, 99 |
| 12 | | | | | −91, −55, −19, 28, 64, 100 | −90, −54, −18, 29, 65, 101 |
| 13 | | | | | −89, −53, −17, 30, 66, 102 | −88, −52, −16, 31, 67, 103 |
| 14 | | | | | −87, −51, −15, 32, 68, 104 | −86, −50, −14, 33, 69, 105 |
| 15 | | | | | −85, −49, −13, 34, 70, 106 | −84, −48, −12, 35, 71, 107 |
| 16 | | | | | −83, −47, −11, 36, 72, 108 | −82, −46, −10, 37, 73, 109 |
| 17 | | | | | −81, −45, −9, 38, 74, 110 | −80, −44, −8, 39, 75, 111 |

| | | | | | −79, −43, −7, 40, 76, 112 | −78, −42, −6, 41, 77, 113 |
|---|---|---|---|---|---|---|
| 18 | | | | | −79, −43, −7, 40, 76, 112 | −78, −42, −6, 41, 77, 113 |
| 19-36 | Use 20MHz FEEDBACK_STATUS = 1 Subcarrier Indices -128 | Use 20MHz FEEDBACK_STATUS = 0 Subcarrier Indices -128 | Use 20MHz FEEDBACK_STATUS = 1 Subcarrier Indices +128 | Use 20MHz FEEDBACK_STATUS = 0 Subcarrier Indices +128 | | |
| 37-54 | Use 20MHz FEEDBACK_STATUS = 1 Subcarrier Indices +128 | Use 20MHz FEEDBACK_STATUS = 0 Subcarrier Indices +128 | | | | |
| 55-72 | Use 20MHz FEEDBACK_STATUS = 1 Subcarrier Indices +384 | Use 20MHz FEEDBACK_STATUS = 0 Subcarrier Indices +384 | | | | |
| The RU_TONE_SET_INDEX for 80+80MHz and 160MHz shall use the 80MHz RU_TONE_SET_INDEX definition for the lower and upper 80MHz. The RU_TONE_SET_INDEX values 1−72 are mapped to the lower 80MHz, and the RU_TONE_SET_INDEX values 73−144 are mapped to the upper 80MHz. | | | | | | |

In simple terms, when the Number Of Spatially Multiplexed Users field in the NFRP Trigger frame has a value of 0, each RU_TONE_SET_INDEX corresponds to a Non-AP STA (AID). When the BW is 20MHz, for the Non-AP STA using RU_TONE_SET_INDEX = 1, the feedback information FEEDBACK_STATUS = 1 corresponds to that the 113rd, 77th, 41st, 6th, 42nd and 78th subcarriers in the HE-LTF have energies respectively, and other subcarriers have no energy; the feedback information FEEDBACK_STATUS = 0 corresponds to that the 112nd, 76th, 40th, 7th, 43rd and 79th subcarriers in the HE-LTF have energies respectively, and other subcarriers have no energy. When the BW is 40MHz or 80MHz, a mapping relationship of subcarriers in 20MHz is expanded by 1 times and 3 times respectively, such that more Non-AP STAs (AIDs) may be mapped. When the Number Of Spatially Multiplexed Users field in the NFRP Trigger frame has a value of 1, each RU_TONE_SET_INDEX corresponds to two Non-AP STAs (AIDs), and the two Non-AP STAs are distinguished by different pre-encoding matrices assigned in advance.

In order to facilitate understanding the embodiments of the disclosure better, Single Protection and Multiple Protection related to the disclosure will be described.

A Duration/identification (ID) field in a header of a Media Access Control (MAC) frame is used for setting a Network Allocation Vector (NAV) for the STA receiving the MAC frame, and the STA receiving the MAC frame considers that the channel is busy in time of the NAV.

There are two types of duration settings for the TXOP initiated under the EDCA mechanism: Single Protection and Multiple Protection. In the Single Protection, a time length indicated by the NAV includes only a data, management or response frame sent next plus any additional overhead frame; in the Multiple Protection, the NAV may indicate that the time length may include multiple frames sent and received next.

In order to facilitate understanding the technical solutions of the embodiments of the disclosure, a problem solved by the disclosure will be described below.

In an industrial scenario, in order to improve cooperation between different production devices and achieve a higher degree of automation, devices in a factory usually need to be linked together through a network, to constitute an IOT network. Compared with other wireless communication modes, WiFi has advantages of unlicensed spectrum, wide popularity, high throughput, etc. However, an existing channel access mechanism EDCA in WiFi is not suitable for an industrial IOT scenario with many STA devices, since there are two methods for sending UL data in WIFI: SU UL and MU UL. In the SU UL, the sending STA needs to obtain the TXOP, and in the MU UL, the AP needs to obtain the TXOP, otherwise, the STA cannot send UL data. However, a probability of a STA obtaining the TXOP and a probability of the AP obtaining the TXOP may gradually decrease as the number of all STAs increases, and may gradually converge to a smaller fixed value. A probability of the STA or the AP obtaining the TXOP in a channel contention may be shown in FIG. 11. Therefore, when the number of STAs is large, both a probability of the STA performing the SU UL and a probability of the AP performing the MU UL may be very small, resulting in that UL data cannot be sent for a long time, causing a large delay and delay jitter.

The reason why this problem occurs is that the existing EDCA mechanism does not consider the MU UL at the beginning of its design. A premise of the MU UL is that the AP obtains the TXOP. However, under the EDCA mechanism, as the number of non-AP STAs increases, more and more STAs need to send UL data, and the probability of the AP obtaining the TXOP becomes smaller and smaller, which makes a probability of occurrence of the MU UL become smaller and smaller, and makes delay of sending UL data become larger and larger correspondingly.

Based on the above problem, the disclosure proposes an EDCA enhancement solution with an MU UL detection function, in which each of STAs sends a special field carrying an identification to the AP respectively, such that the AP may detect the number and AIDs of STAs that need to send UL data during channel contention; when a large number of UL devices are detected, the AP may select to forcibly obtain a TXOP and then perform a more efficient MU UL process, thereby quickly meeting requirements of multiple STAs sending UL data, and reducing delay.

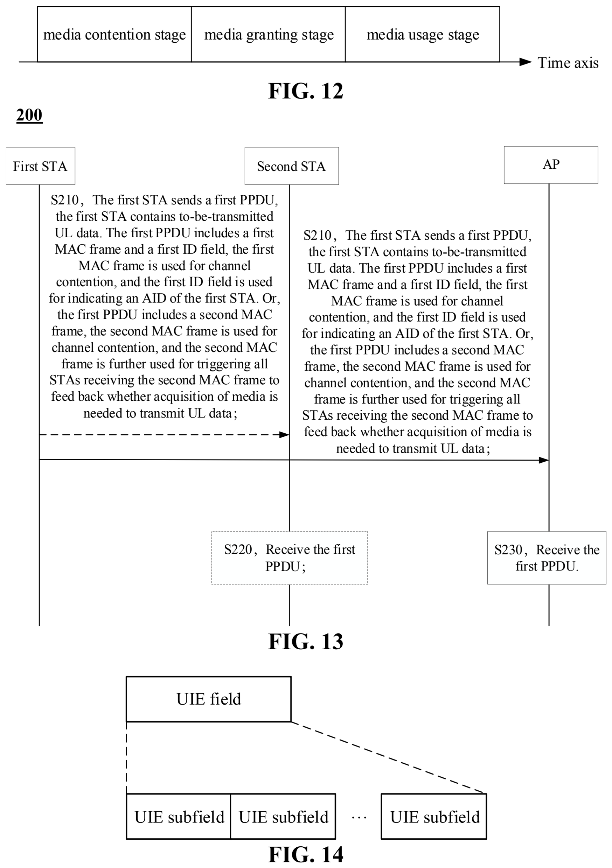

In the embodiments of the disclosure, the EDCA mechanism is enhanced to reduce transmission delay of UL data in the industrial scenario. An enhanced EDCA solution includes three stages as shown in FIG. 12: a media contention stage, a media granting stage, and a media usage stage. In the media contention stage, each of STAs that need to send an LL service may send a specific frame according to a rule respectively, to contend for an ownership of the TXOP. In the media granting stage, the AP may reply with different frames based on a result of the MU UL detection, thereby granting the TXOP to a certain STA. In the media usage stage, the STA obtaining the TXOP needs to perform a specific transmission process according to the rule.

In order to facilitate understanding the technical solutions of the embodiments of the disclosure, the technical solutions of the disclosure will be described in detail below through specific embodiments. As optional solutions, the following relevant technologies may be arbitrarily combined with the technical solutions of the embodiments of the disclosure, and all of them belong to the scope of protection of the embodiments of the disclosure. The embodiments of the disclosure include at least a part of the following contents.

FIG. 13 is a schematic flowchart of a method for wireless communication 200 according to an embodiment of the disclosure. As shown in FIG. 13, the method for wireless communication 200 may include at least a part of the following contents.

In operation S210, the first STA sends a first Physical Layer Protocol Data Unit (PPDU), the first STA has to-be-transmitted UL data. The first PPDU includes a first MAC frame and a first ID field, the first MAC frame is used for channel contention, and the first ID field is used for indicating an AID of the first STA. Alternatively, the first PPDU includes a second MAC frame, the second MAC frame is used for channel contention, and the second MAC frame is further used for triggering all STAs receiving the second MAC frame to feed back whether the STAs need to acquire media to transmit UL data respectively.

In operation S220, the second STA receives the first PPDU sent by the first STA.

In operation S230, the AP receives the first PPDU sent by the first STA.

It should be understood that FIG. 13 shows steps or operations of the method for wireless communication 200, however, these steps or operations are examples only, and other operations or variants of various operations in FIG. 13 may also be performed in the embodiments of the disclosure.

In the embodiments of the disclosure, "field" may also be referred to as a "field" or a "subfield". A field may occupy one or more bytes/octets, or a field may occupy one or more bits.

In the embodiments of the disclosure, the above operation S220 is an optional operation.

In the embodiments of the disclosure, the second STA may be another STA belonging to a same WLAN network as the first STA.

In the embodiments of the disclosure, the AP may acquire the number and AIDs of STAs that need to acquire media to transmit UL data respectively at the channel contention stage. That is, the AP has a capability of UL multi-user (MU) detection at the channel contention stage, such that the AP may reasonably select to grant the TXOP to a STA or the AP based on the UL service demand and the DL service demand, thereby reducing delay of UL and DL data transmissions and alleviating delay jitter.

TONE described in the embodiments of the disclosure may also be referred to as a subcarrier, or a subcarrier described in the embodiments of the disclosure may also be referred to as TONE.

In some embodiments, the UL data described in the embodiments of the disclosure includes at least UL delay sensitive data. Of course, the UL data described in the embodiments of the disclosure may further include other data, such as non-delay sensitive data.

It should be noted that the delay sensitive data may also be referred to as LL data, which is not limited in the embodiments of the disclosure.

Specifically, for example, in a case that the first STA with to-be-transmitted UL delay sensitive data, the first STA sends the first PPDU and contends for the channel through the first MAC frame in the first PPDU; after identifying the first MAC frame, other STAs (such as the second STA) with to-be-transmitted UL delay sensitive data may selectively send ID fields that identify the STAs' own identity separately in a time period where the first ID field is located, to request to share the TXOP; the AP completes MU UL detection based on the received first ID field or multiple ID fields overlapping with the first ID field, identifies AIDs of one or more STAs that need to send UL delay sensitive data respectively, and then replies with different Clear To Send (CTS) frames based on the AIDs, thereby granting the TXOP to the STA or the AP.

Specifically, for example, in a case that the first STA with to-be-transmitted UL delay sensitive data, the first STA sends the first PPDU and contends for the channel through the second MAC frame in the first PPDU; after identifying the second MAC frame, other STAs (such as the second STA) may feed back whether they need to acquire media to transmit UL delay sensitive data respectively; the AP completes MU UL detection based on the received feedback information, identifies AIDs of one or more STAs that need to send UL delay sensitive data respectively, and then replies with different CTS frames based on the AIDs, thereby granting the TXOP to the STA or the AP.

In some embodiments, the first PPDU is one of an Ultra High Reliability Multi-user Physical Layer Protocol Data Unit (UHR MU PPDU), an Ultra High Reliability Trigger Based Physical Layer Protocol Data Unit (UHR TB PPDU), or an Ultra High Reliability Extended Range Physical Layer Protocol Data Unit (UHR ER PPDU).

In some embodiments, in a case that the first PPDU includes the first MAC frame and the first ID field, a result of channel contention corresponding to the first MAC frame is associated with the number of STAs with to-be-transmitted UL data detected by the AP.

The number of STAs with to-be-transmitted UL data is acquired by the AP detecting m ID fields (that is, the AP acquires the number of STAs with to-be-transmitted UL data by detecting m ID fields), the m ID fields are used for indicating AIDs of m STAs respectively, the m ID fields include at least the first ID field, m is a positive integer, and m is equal to 1, or m is greater than or equal to 2.

In some embodiments, in the first PPDU, the first ID field is located after the first MAC frame.

Specifically, for example, m is equal to 1 represents that: after identifying that the first MAC frame may provide a TXOP to be shared, other STAs (such as the second STA) do not contain to-be-transmitted UL data (such as UL delay sensitive data) and thus do not send ID fields for identifying the STAs' own AIDs respectively; or, other STAs (such as the second STA) select not to send ID fields for identifying the STAs' own AIDs respectively even though they have to-be-transmitted UL data (such as UL non-delay sensitive data).

Specifically, for example, m is greater than or equal to 2 represents that: after identifying that the first MAC frame may provide a TXOP to be shared, other STAs (such as the second STA) have to-be-transmitted UL data (such as UL delay sensitive data), and other STAs (such as the second STA) select to send ID fields for identifying the STAs' own AIDs respectively, to request sharing the TXOP.

In some embodiments, the result of the channel contention corresponding to the first MAC frame is associated with the number of STAs with to-be-transmitted UL data detected by the AP, which includes:

in a case that m is equal to 1, a TXOP associated with the channel contention corresponding to the first MAC frame belongs to the first STA; and/or

in a case that m is greater than or equal to $K_1$, the TXOP associated with the channel contention corresponding to the first MAC frame belongs to the AP; or, in a case that m is greater than or equal to $K_1$, the TXOP associated with the channel contention corresponding to the first MAC frame belongs to the first STA; or, in a case that m is greater than or equal to $K_1$, the TXOP associated with the channel contention corresponding to the first MAC frame belongs to multiple STAs among the m STAs corresponding to the m ID fields respectively, here the multiple STAs include at least the first STA, $K_1$ is a positive integer, and $K_1$ is greater than or equal to 2.

In some embodiments, the result of the channel contention corresponding to the first MAC frame is associated with the number of STAs with to-be-transmitted UL data detected by the AP, which includes:

in a case that m is equal to 1, a TXOP associated with the channel contention corresponding to the first MAC frame belongs to the first STA; and/or

in a case that m is greater than $K_1$, the TXOP associated with the channel contention corresponding to the first MAC frame belongs to the AP; or, in a case that m is greater than $K_1$, the TXOP associated with the channel contention corresponding to the first MAC frame belongs to the first STA; or, in a case that m is greater than $K_1$, the TXOP associated with the channel contention corresponding to the first MAC frame belongs to multiple STAs among the m STAs corresponding to the m ID fields respectively, here the multiple STAs include at least the first STA, $K_1$ is a positive integer, and $K_1$ is greater than or equal to 2.

In some embodiments, $K_1$ may be agreed by a protocol, or $K_1$ may be configured (semi-statically or dynamically) by the AP, or $K_1$ may be configured (semi-statically or dynamically) by a physical AP MLD to which the AP belongs, or $K_1$ may be configured (semi-statically or dynamically) by a logical AP MLD to which the AP belongs.

Specifically, for example, in a case that m is equal to 1, the TXOP associated with the channel contention corresponding to the first MAC frame belongs to the first STA. That is, if the AP detects an AID of a STA (that is, the AID of the first STA), the AP does not send any CTS frame and determines an ownership of the TXOP according to the EDCA mechanism. For example, the first STA contends for the TXOP through the EDCA mechanism.

Specifically, for example, in a case that m is greater than or equal to $K_1$ or m is greater than $K_1$, the TXOP associated with the channel contention corresponding to the first MAC frame belongs to the AP. For example, the AP may also send a CTS-to-self frame, to grant the TXOP to the AP itself.

Specifically, for example, in a case that m is greater than or equal to $K_1$ or m is greater than $K_1$, the TXOP associated with the channel contention corresponding to the first MAC frame belongs to the first STA. For example, the AP may send a CTS frame to the first STA, to grant the TXOP to the first STA. Alternatively, in a case that m is greater than or equal to $K_1$ or m is greater than $K_1$, the TXOP associated with the channel contention corresponding to the first MAC frame belongs to a certain STA. For example, the AP may send a CTS frame to a certain STA, to grant the TXOP to this STA. That is, the AP detects m AIDs (m is greater than or equal to $K_1$ or m is greater than $K_1$), and the AP may send the CTS frame to a Non-AP STA corresponding to one of the AIDs, to grant the TXOP to the Non-AP STA corresponding to this AID.

In some embodiments, CWmin used for channel contention corresponding to the first MAC frame is less than CWmin associated with an EDCA access type AC_VO, and/or CWmax used for the channel contention corresponding to the first MAC frame is less than CWmax associated with the EDCA access type AC_VO.

In some embodiments, the Non-AP STA uses a TXOP in Single Protection, or the Non-AP STA uses a TXOP in Multiple Protection with a limited length; and the AP uses a TXOP in Single Protection, or the AP uses a TXOP in Multiple Protection with a limited length.

In an embodiment, the Non-AP STA uses a TXOP in Single Protection, or the Non-AP STA uses a TXOP in Multiple Protection with a limited length; and the AP may use any type of TXOP (that is, the TXOP may be a TXOP in Single Protection, or a TXOP in Multiple Protection).

In some embodiments, in a case that the TXOP associated with the channel contention corresponding to the first MAC frame belongs to the AP, the m STAs corresponding to the m ID fields respectively send UL data within the TXOP after receiving a trigger frame sent by the AP.

Specifically, for example, after the AP obtains the TXOP, the AP sends a trigger frame to the m STAs corresponding to the m ID fields respectively (that is, Non-AP STAs corresponding to the detected m AIDs), and then receives a Trigger Based (TB) PPDU to obtain UL data, and replies with a block acknowledgment (BlockAck) frame or a Multi-STA BlockAck frame.

In some embodiments, in a case that the TXOP associated with the channel contention corresponding to the first MAC frame belongs to the AP, the m STAs corresponding to the m ID fields respectively send UL data and receive downlink (DL) data within the TXOP after receiving a trigger frame sent by the AP.

Specifically, for example, after the AP obtains the TXOP, the AP sends a trigger frame to the m STAs corresponding to the m ID fields respectively (that is, Non-AP STAs corresponding to the detected m AIDs), and then receives a TB PPDU to obtain UL data, and replies with a BlockAck frame or a Multi-STA BlockAck frame; when the AP uses a TXOP in Multiple Protection or a TXOP in Multiple Protection with a limited length, if the TXOP has a sufficient duration, the AP may also send DL single user (SU) data or DL MU data within the TXOP, and receive a corresponding Ack frame or BlockAck frame.

In some embodiments, the first MAC frame is a Request To Send (RTS) frame, or the first MAC frame is a Sharing Request To Send (S-RTS) frame, or the first MAC frame is a CTS frame, or the first MAC frame is a Sharing Clear To Send (S-CTS) frame, or the first MAC frame is a null frame.

In some embodiments, the first ID field is a User Identifying Extension (UIE) field. Specifically, for example, the UIE field has a function of identifying MU identity.

It should be noted that a main purpose of the UIE field is to enable a receiver to identify signals from different users (the Non-AP STA or the AP) at a physical (PHY) layer.

In some embodiments, a value of duration of the UIE field may be an integer greater than 0, such as $12\mu s$, $16\mu s$, $20\mu s$, $24\mu s$, $28\mu s$, $32\mu s$. Alternatively, the duration of the UIE field may be a variable duration indicated by a certain signaling subsegment in the first PPDU.

In some embodiments, the UIE field should be transmitted with an average power the same as that of a data field, and should not cause significant power leakage out of a spectrum used by the data field.

In some embodiments, transmission of the first PPDU is associated with a first BW and a first Modulation and Coding Scheme (MCS). Specifically, for example, the transmission of the first PPDU is associated with the first BW, and time domain resources of the first MCS occupied by all STAs receiving or detecting the first MAC frame to acquire the first ID field respectively. That is, each of Non-AP STAs with to-be-transmitted UL data (such as UL delay sensitive data) contends for the channel by sending a specific MAC frame (that is, the first MAC frame), and sends an Ultra High Reliability (UHR) PPDU (that is, the first PPDU) carrying the specific MAC frame (that is, the first MAC frame) by using a specific BW (that is, the first BW) and a specific MCS (that is, the first MCS), to ensure the same sending time.

In some embodiments, the first ID field is used for indicating the AID of the first STA through a subcarrier used for transmitting the first ID field (the subcarrier may also be referred to as TONE).

Specifically, for example, as shown in Table 2, the starting AID of the STA corresponds to the value 1 of RU_TONE_SET_INDEX. For example, if the starting AID is 6, the STA of which the starting AID has a value of 6 corresponds to the value 1 of RU_TONE_SET_INDEX, the Non-AP STA of which the starting AID has a value of 7 corresponds to the value 2 of RU_TONE_SET_INDEX, and so on. When the Number Of Spatially Multiplexed Users field has a value of 1, each RU_TONE_SET_INDEX corresponds to two Non-AP STAs (AIDs), and the two Non-AP STAs are distinguished by different pre-encoding matrices assigned in advance. The starting AID corresponds to the value 1 of RU_TONE_SET_INDEX. For example, if the starting AID is 6, two Non-AP STAs of which starting AIDs have values of 6 and 7 respectively correspond to the value 1 of RU_TONE_SET_INDEX, two Non-AP STAs of which starting AIDs have values of 8 and 9 respectively correspond to the value 2 of RU_TONE_SET_INDEX, and so on.

In some embodiments, the first ID field includes one or more ID subfields. The one or more ID subfields are used for indicating ID information (such as the AID) of the first STA.

Specifically, for example, the first ID field is a UIE field, which may include one or more UIE subfields, as shown in FIG. 14. The UIE subfield carries identification information (such as an AID, an Unassociation Identifier (UID), a MAC address) of a device by using different subcarriers. Information carried by different UIE subfields may be the same, that is, reliability is improved through repeated transmission. Furthermore, the information carried by different UIE subfields may also be different, that is, a maximum number of user IDs that may be contained in a UIE field is increased. Advantages of this UIE field lie in that this UIE field includes only the UIE subfields, without overhead of other fields.

In some embodiments, the first ID field includes one or more ID subfields and an Ultra High Reliability Short Training Field (UHR-STF). The one or more ID subfields are used for indicating ID information (such as the AID) of the first STA.

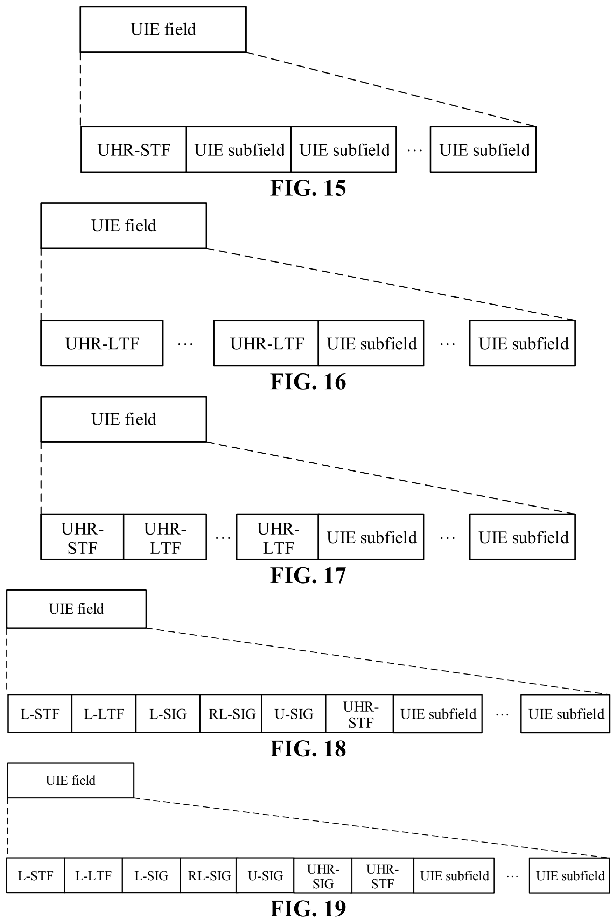

Specifically, for example, the first ID field is a UIE field, which may include one or more UIE subfields and a UHR-STF, as shown in FIG. 15. The UHR-STF is a UHR short training sequence, used for assisting the receiver to perform preliminary time-frequency synchronization and automatic gain control on one hand, and used for assisting the receiver to detect reliability of a PE subfield on the other hand. The UIE subfield carries identification information (such as an AID, a UID, a MAC address) of a device by using different subcarriers. Information carried by different UIE subfields may be the same, that is, reliability is improved through repeated transmission. Furthermore, the information carried by different UIE subfields may also be different, that is, a maximum number of user IDs that may be contained in a UIE field is increased. Advantages of this UIE field lie in that this UIE field includes the UHR-STF field, and the receiver may implement automatic gain control, which is beneficial to improve a success rate of MU detection.

In some embodiments, the first ID field includes one or more ID subfields and one or more Ultra High Reliability Long Training Fields (UHR-LTFs). The one or more ID subfields are used for indicating ID information (such as the AID) of the first STA.

Specifically, for example, the first ID field is a UIE field, which may include one or more UIE subfields and one or more UHR-LTFs, as shown in FIG. 16. The UHR-LTF is a UHR long training sequence, used for channel estimation on one hand, and used for assisting the receiver to perform fine time-frequency synchronization on the other hand. The UIE subfield carries identification information (such as an AID, a UID, a MAC address) of a device by using different subcarriers. Information carried by different UIE subfields may be the same, that is, reliability is improved through repeated transmission. Furthermore, the information carried by different UIE subfields may also be different, that is, a maximum number of user IDs that may be contained in a UIE field is increased. Advantages of this UIE field lie in that this UIE field includes the UHR-LTF field, and the receiver may implement automatic gain control and channel estimation, which is beneficial to improve the success rate of MU detection.

In some embodiments, the first ID field includes one or more ID subfields, a UHR-STF, and one or more UHR-LTFs. The one or more ID subfields are used for indicating ID information (such as the AID) of the first STA.

Specifically, for example, the first ID field is a UIE field, which may include one or more UIE subfields, a UHR-STF, and one or more UHR-LTFs, as shown in FIG. 17. The UHR-STF is a UHR short training sequence, used for assisting the receiver to perform preliminary time-frequency synchronization and automatic gain control on one hand, and used for assisting the receiver to detect reliability of the PE subfield on the other hand. The UHR-LTF is a UHR long training sequence, used for channel estimation on one hand, and used for assisting the receiver to perform fine time-frequency synchronization on the other hand. The UIE subfield carries identification information (such as an AID, a UID, a MAC address) of a device by using different subcarriers. Information carried by different UIE subfields may be the same, that is, reliability is improved through repeated transmission. Furthermore, the information carried by different UIE subfields may also be different, that is, a maximum number of user IDs that may be contained in a UIE field is increased. Advantages of this UIE field lie in that this UIE field includes the UHR-STF field and the UHR-LTF field, and the receiver may implement automatic gain control and channel estimation, which is beneficial to improve the success rate of MU detection.

In some embodiments, the first ID field further includes a legacy preamble field.

For example, the first ID field includes one or more ID subfields and a legacy preamble field.

For another example, the first ID field includes one or more ID subfields, a UHR-STF, and a legacy preamble field.

For another example, the first ID field includes one or more ID subfields, one or more UHR-LTFs, and a legacy preamble field.

For another example, the first ID field includes one or more ID subfields, a UHR-STF, one or more UHR-LTFs, and a legacy preamble field.

In some embodiments, the legacy preamble field includes, but is not limited to the following fields: an L-STF, an L-LTF, an L-SIG, an RL-SIG, and a unify signal (U-SIG).

Specifically, the L-STF is a legacy short training sequence, used for PPDU discovery and for preliminary time-frequency synchronization. The L-LTF is a legacy long training sequence, used for preliminary channel estimation and further time-frequency alignment. The L-SIG is a legacy signaling, used for carrying information required to parse the PPDU. The RL-SIG is repeat of the L-SIG. The U-SIG is a unify signal, used for carrying information required to parse the PPDU.

Specifically, for example, the first ID field is a UIE field, which may include one or more UIE subfields, a UHR-STF, an L-STF, an L-LTF, an L-SIG, an RL-SIG, and a U-SIG, as shown in FIG. 18. The L-STF is a legacy short training sequence, used for PPDU discovery and for preliminary time-frequency synchronization. The L-LTF is a legacy long training sequence, used for preliminary channel estimation and further time-frequency alignment. The L-SIG is a legacy signaling, used for carrying information required to parse the PPDU. The RL-SIG is repeat of the L-SIG. The U-SIG is a unify signal, used for carrying information required to parse the PPDU. The UHR-STF is a UHR short training sequence, used for assisting the receiver to perform preliminary time-frequency synchronization and automatic gain control on one hand, and used for assisting the receiver to detect reliability of the PE subfield on the other hand. The UIE subfield carries identification information (such as an AID, a UID, a MAC address) of a device by using different subcarriers. Information carried by different UIE subfields may be the same, that is, reliability is improved through repeated transmission. Furthermore, the information carried by different UIE subfields may also be different, that is, a maximum number of user IDs that may be contained in a UIE field is increased. Advantages of this UIE field lie in that this UIE field includes a complete NDP, which is not only beneficial to improve the success rate of MU detection, but also easy to be implemented since it is in a general PPDU format.

In some embodiments, the legacy preamble field includes, but is not limited to the following fields: an L-STF, an L-LTF, an L-SIG, an RL-SIG, a U-SIG, and an Ultra High Reliability Signal (UHR-SIG).

Specifically, for example, the first ID field is a UIE field, which may include one or more UIE subfields, a UHR-STF, an L-STF, an L-LTF, an L-SIG, an RL-SIG, a U-SIG, and a UHR-SIG, as shown in FIG. 19. The L-STF is a legacy short training sequence, used for PPDU discovery and for preliminary time-frequency synchronization. The L-LTF is a legacy long training sequence, used for preliminary channel estimation and further time-frequency alignment. The L-SIG is a legacy signaling, used for carrying information required to parse the PPDU. The RL-SIG is repeat of the L-SIG. The U-SIG is a unify signal, used for carrying information required to parse the PPDU. The UHR-SIG is a UHR signaling, used for carrying information related to DL MU transmission. The UHR-STF is a UHR short training sequence, used for assisting the receiver to perform preliminary time-frequency synchronization and automatic gain control on one hand, and used for assisting the receiver to detect reliability of the PE subfield on the other hand. The UIE subfield carries identification information (such as an AID, a UID, a MAC address) of a device by using different subcarriers. Information carried by different UIE subfields may be the same, that is, reliability is improved through repeated transmission. Furthermore, the information carried by different UIE subfields may also be different, that is, a maximum number of user IDs that may be contained in a UIE field is increased. Advantages of this UIE field lie in that this UIE field includes a complete NDP, which is not only beneficial to improve the success rate of MU detection, but also easy to be implemented since it is in a general PPDU format.

In some embodiments, the first ID field includes one or more ID subfields. Subcarriers used by the one or more ID subfields respectively are used for indicating the AID of the first STA (the subcarrier may also be referred to as TONE).

In some embodiments, the AID of the first STA is indicated by two subcarrier sets (the subcarrier may also be referred to as TONE), and subcarriers used by the ID subfields respectively belong to one subcarrier sets of the two subcarrier sets. Specifically, for example, the number of subcarriers included in a subcarrier set may be any positive integer greater than 1 and less than a total number of subcarriers.

In some embodiments, the subcarriers used by the ID subfields (the subcarrier may also be referred to as TONE) belong to different subcarrier sets of the two subcarrier sets respectively and represent different status information of the first STA respectively.

In some embodiments, a BW of each of the ID subfields is 20MHz, 40MHz, 80MHz, 80+80MHz, 160MHz, or 320MHz.

In some embodiments, the BW of 320MHz is represented by four 80MHz subcarrier set indices. Subcarrier set indices 1-72 are mapped to a first 80MHz, subcarrier set indices 73-144 are mapped to a second 80MHz, subcarrier set indices 145-216 are mapped to a third 80MHz, and subcarrier set indices 217-288 are mapped to a fourth 80MHz.

In some embodiments, the AID of the first STA is indicated by a subcarrier set (the subcarrier may also be referred to as TONE), and subcarriers used by the ID subfields respectively belong to the subcarrier set. Specifically, for example, the number of subcarriers included in a subcarrier set may be any positive integer greater than 1 and less than the total number of subcarriers.

In some embodiments, when the number of subcarriers included in a subcarrier set (the subcarrier may also be referred to as TONE) is 6, a mapping relationship of subcarriers in the UIE subfield is as shown in Table 3.

Table 3

| RU_TONE_SET_INDEX | 80MHz | 40MHz | 20MHz |
|---|---|---|---|
| | | | |

| | | | |
|---|---|---|---|
| 1 | | | −113, −77, −41, 6, 42, 78 |
| 2 | | | −112, −76, −40, 7, 43, 79 |
| 3 | | | −111, −75, −39, 8, 44, 80 |
| 4 | | | −110, −74, −38, 9, 45, 81 |
| 5 | | | −109, −73, −37, 10, 46, 82 |
| 6 | | | −108, −72, −36, 11, 47, 83 |
| 7 | | | −107, −71, −35, 12, 48, 84 |
| 8 | | | −106, −70, −34, 13, 49, 85 |
| 9 | | | −105, −69, −33, 14, 50, 86 |
| 10 | | | −104, −68, −32, 15, 51, 87 |
| 11 | | | −103, −67, −31, 16, 52, 88 |
| 12 | | | −102, −66, −30, 17, 53, 89 |
| 13 | | | −101, −65, −29, 18, 54, 90 |
| 14 | | | −100, −64, −28, 19, 55, 91 |
| 15 | | | −99, −63, −27, 20, 56, 92 |
| 16 | | | −98, −62, −26, 21, 57, 93 |
| 17 | | | −97, −61, −25, 22, 58, 94 |
| 18 | | | −96, −60, −24, 23, 59, 95 |
| 19 | | | −95, −59, −23, 24, 60, 96 |
| 20 | | | −94, −58, −22, 25, 61, 97 |
| 21 | | | −93, −57, −21, 26, 62, 98 |
| 22 | | | −92, −56, −20, 27, 63, 99 |
| 23 | | | −91, −55, −19, 28, 64, 100 |
| 24 | Use 20MHz Subcarrier Indices -384 | Use 20MHz Subcarrier Indices -128 | −90, −54, −18, 29, 65, 101 |
| 25 | | | −89, −53, −17, 30, 66, 102 |
| 26 | | | −88, −52, −16, 31, 67, 103 |
| 27 | | | −87, −51, −15, 32, 68, 104 |
| 28 | | | −86, −50, −14, 33, 69, 105 |
| 29 | | | −85, −49, −13, 34, 70, 106 |
| 30 | | | −84, −48, −12, 35, 71, 107 |
| 31 | | | −83, −47, −11, 36, 72, 108 |
| 32 | | | −82, −46, −10, 37, 73, 109 |
| 33 | | | −81, −45, −9, 38, 74, 110 |
| 34 | | | −80, −44, −8, 39, 75, 111 |
| 35 | | | −79, −43, −7, 40, 76, 112 |
| 36 | | | −78, −42, −6, 41, 77, 113 |
| 37-72 | Use 20MHz Subcarrier Indices -128 | Use 20MHz Subcarrier Indices +128 | |
| 73-108 | Use 20MHz Subcarrier Indices +128 | | |
| 108-143 | Use 20MHz Subcarrier Indices +384 | | |

> The RU_TONE_SET_INDEX for 80+80MHz and 160MHz shall use the 80MHz RU_TONE_SET_INDEX definition for the lower and upper 80MHz. The RU_TONE_SET_INDEX values 1–143 are mapped to the lower 80MHz, and the RU_TONE_SET_INDEX values 143–285 are mapped to the upper 80MHz.
>
> The RU_TONE_SET_INDEX for 320MHz shall use the 80MHz RU_TONE_SET_INDEX definition for the four 80MHz. The RU_TONE_SET_INDEX values 1–143 are mapped to the first 80MHz, the RU_TONE_SET_INDEX values 143–285 are mapped to the second 80MHz, the RU_TONE_SET_INDEX values 286 - 428 are mapped to the third 80MHz, and the RU_TONE_SET_INDEX values 429 - 571 are mapped to the fourth 80MHz.

In some embodiments, in a case that m is greater than or equal to 2, time domain resources occupied by the m ID fields are the same, or the m ID fields are completely overlapping in a time domain.

In the embodiments, other parts of the first MAC frame than the ID field (such as the UIE field) are not overlapping in the air without conflict, and therefore the first MAC frame may be easily identified by a receiving side.

In some embodiments, each of other STAs among the m STAs corresponding to the m ID fields respectively than the first STA sends an ID field for identifying the STA's own AID on a time domain resource occupied by the first ID field, after identifying the first MAC frame (that is, identifying that the first MAC frame may provide a TXOP to be shared). Specifically, other STAs (such as the second STA) send ID fields for identifying the STAs' own AIDs respectively, to request sharing the TXOP.

In some embodiments, the first PPDU further includes a Reverse Interval (RI) field.

The RI field is located after the first MAC frame and before the first ID field, and the RI field is used for reserving a time for a receiving side of the first PPDU to convert from a receiving state to a sending state.

Specifically, for example, the RI field is used for reserving a time for the receiver to convert from a receiving state to a sending state. Duration of the RI field is variable, in which random data may be sent or no signal may be sent.

In some embodiments, in a case that the second STA has to-be-transmitted UL data, the second STA sends a second ID field after receiving the first MAC frame. The second ID field is used for indicating an AID of the second STA, and a time domain resource occupied by the second ID field is the same as a time domain resource occupied by the first ID field, or the second ID field and the first ID field are completely overlapping in a time domain. That is, after identifying that the first MAC frame may provide a TXOP to be shared, the second STA may request sharing the TXOP by sending the second ID field.

Specifically, for example, after receiving the first MAC frame in the first PPDU, the second STA may identify that the first MAC frame may provide a TXOP to be shared. In this situation, if the second STA has to-be-transmitted UL data, the second STA sends the second ID field. The second ID field is used for indicating the AID of the second STA, and the time domain resource occupied by the second ID field is the same as the time domain resource occupied by the first ID field, or the second ID field and the first ID field are completely overlapping in the time domain. Therefore, the AP may acquire the number of STAs with to-be-transmitted UL data by detecting ID fields overlapping together, to complete UL MU detection, identify AIDs of one or more STAs that need to send UL data respectively, and then reply with different CTS frames based on this, thereby granting the TXOP to the STA or the AP.

In some embodiments, each of the other STAs among the m STAs corresponding to the m ID fields respectively than the first STA sets a value of the STA's Enhanced Distributed Channel Access (EDCA) backoff counter to zero, before sending the ID field for identifying the STA's own AIDs respectively.

For example, the m ID fields include the second ID field, and the second STA sets a value of its EDCA backoff counter to zero, before sending the second ID field.

In some embodiments, each of other STAs among the m STAs corresponding to the m ID fields respectively than the first STA keep a value of the STA's EDCA backoff counter unchanged, before sending the ID field for identifying the STA's own AID.

For example, the m ID fields include the second ID field, and the second STA keeps the value of its EDCA backoff counter unchanged, before sending the second ID field.

In some embodiments, in the media contention stage shown in FIG. 12, each of Non-AP STAs that need to send UL delay sensitive data contends for the channel by following the EDCA mechanism. However, each of the Non-AP STAs that need to send UL delay sensitive data contends for the channel by sending a specific MAC frame (that is, the first MAC frame), and sends a UHR PPDU (that is, the first PPDU) carrying the specific MAC frame (that is, the first MAC frame) by using a specific BW (that is, the first BW) and a specific MCS (that is, the first MCS), to ensure the same sending time.

In some embodiments, in the media contention stage shown in FIG. 12, when a certain Non-AP STA that needs to send UL delay sensitive data identifies that a specific MAC frame (that is, the first MAC frame) is being sent by another Non-AP STA, the Non-AP STA may selectively convert from a receiving state to a sending state in a time range where an RI field of the UHR PPDU (that is, the first PPDU) of the specific MAC frame (that is, the first MAC frame) is located, and then send an ID field (such as the UIE field) that identifies its own identity separately in a time period where the first ID field (such as the UIE field) is located, to request to share the TXOP. The above Non-AP STA may set a value of its own EDCA backoff counter to zero before sending the ID field (such as the UIE field) that identifies its own identity separately, or may not modify the value of the EDCA backoff counter.

In some embodiments, in the media granting stage shown in FIG. 12, the AP completes MU UL detection based on the received first ID field (such as the UIE field), or the AP completes MU UL detection based on the received multiple ID fields (such as UIE fields) overlapping together, identifies AIDs of one or more Non-AP STAs that need to send UL delay sensitive data respectively, and then replies with different CTS frames based on this, thereby granting the TXOP to the Non-AP STA or the AP. Specifically, for example, if the AP detects 1 AID, the AP does not send any CTS frame and determines an ownership of the TXOP according to the EDCA mechanism. Specifically, for another example, if the AP detects m AIDs (m is greater than or equal to $k_1$ or m is greater than $k_1$), the AP may send the CTS frame to a Non-AP STA corresponding to one of the AIDs, to grant the TXOP to the Non-AP STA corresponding to this AID; or, the AP may send a CTS-to-self frame, to grant the TXOP to the AP itself.

In some embodiments, in the media usage stage shown in FIG. 12, the Non-AP STA uses a TXOP in Single Protection, or a TXOP in Multiple Protection with a limited length; and the AP uses a TXOP in Single Protection, or a TXOP in Multiple Protection with a limited length.

In another embodiment, in the media usage stage shown in FIG. 12, the Non-AP STA uses a TXOP in Single Protection, or a TXOP in Multiple Protection with a limited length; and the AP may use any type of TXOP.

In some embodiments, in the media usage stage shown in FIG. 12, after the AP obtains the TXOP, the AP should send a trigger frame to the Non-AP STA corresponding to the above detected AID, and then receives a TB PPDU to obtain UL data, and replies with a BlockAck frame or a Multi-STA BlockAck frame; when the AP uses a TXOP in Multiple Protection or a TXOP in Multiple Protection with a limited length, if the TXOP has a sufficient duration, the AP may also send DL SU data or DL MU data within the TXOP, and receive a corresponding Ack frame or BlockAck frame.

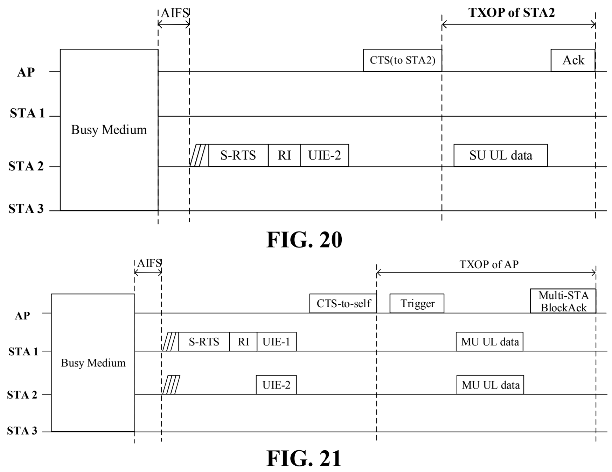

In some embodiments, assuming that 1 AP and 3 Non-AP STAs (STA1, STA2, STA3) are included in a WLAN network, if the AP uses a TXOP in Single Protection, each of the Non-AP STAs also uses the TXOP in Single Protection. The first MAC frame is an S-RTS frame, a specific field (that is, the first ID field) used for identifying an AID in a PPDU (that is, the first PPDU) where the S-RTS frame is located is a UIE field, and an RI field for switching between receiving and sending states is present before the UIE field. Only STA2 needs to send UL data and uses the access type AC_VO in the EDCA, then frame interaction between the AP and the Non-AP STAs is shown in FIG. 20.

Specifically, as shown in FIG. 20, STA2 sends an S-RTS frame at the time of AIFS when the channel is idle, a UIE-2 field identifying the AID of STA2 is included in a PPDU where the S-RTS frame is located, and STA1 and STA3 do not send any frame. After receiving the S-RTS frame, the AP detects through the UIE field that only STA2 needs to send UL data, and therefore the AP replies a CTS frame to STA2, to grant the TXOP to STA2. After receiving the CTS frame sent by the AP, STA2 finds that RA of the CTS frame is its own address, and therefore STA2 determines that channel contention is successful and the TXOP belongs to STA2 itself. Then, in the TXOP of STA2, STA2 sends SU UL data to the AP, and the AP replies an Ack frame to STA2 to confirm that transmission is successful. At this point, the TXOP of STA2 ends, and the channel re-enters the idle state.

In some embodiments, assuming that 1 AP and 3 Non-AP STAs (STA1, STA2, STA3) are included in a WLAN network, if the AP uses a TXOP in Single Protection, each of the Non-AP STAs also uses the TXOP in Single Protection. The first MAC frame is an S-RTS frame, a specific field (that is, the first ID field) used for identifying an AID in a PPDU (that is, the first PPDU) where the S-RTS frame is located is a UIE field, and an RI field for switching between receiving and sending states is present before the UIE field. STA1 and STA2 need to send UL data respectively, and both of them use the access type AC_VO in the EDCA, then frame interaction between the AP and the Non-AP STAs is shown in FIG. 21.

Specifically, as shown in FIG. 21, STA1 sends an S-RTS frame at the time of AIFS when the channel is idle, a UIE-1 field identifying the AID of STA1 is included in a PPDU where the S-RTS frame is located. Since a backoff value (BackoffCount) of STA2 is greater than a backoff value (BackoffCount) of STA1, STA2 fails to send an S-RTS frame. STA3 does not send any frame. After receiving a part of the PPDU where the S-RTS frame sent by STA1 is located (that is, a part before the UIE-1 field), STA2 identifies that it is an S-RTS frame and may provide a TXOP to be shared. Therefore, STA2 converts from a receiving state to a sending state in the time of the RI field, and sends a UIE-2 field identifying its own AID in a time range of UIE-1 immediately, to request sharing the TXOP. After receiving the S-RTS frame and UIE fields overlapping together, the AP detects through the UIE fields that STA1 and STA2 need to send UL data respectively. The AP selects to provide UL transmission services in an MU UL mode here, and therefore the AP replies with a CTS-to-self frame, to grant the TXOP to the AP itself. After receiving the CTS frame sent by the AP, STA1 and STA2 find that RA of the CTS frame is not their own addresses, instead, the RA of the CTS frame is address of the AP, and therefore STA1 and STA2 determine that channel contention has failed and the TXOP belongs to the AP. Then, in the TXOP of the AP, the AP sends a trigger frame to STA1 and STA2 to trigger STA1 and STA2 to send TB PPDUs carrying MU UL data simultaneously, and reply with a Multi-STA BlockAck frame to confirm that transmission is successful. At this point, the TXOP of the AP ends, and the channel re-enters the idle state.

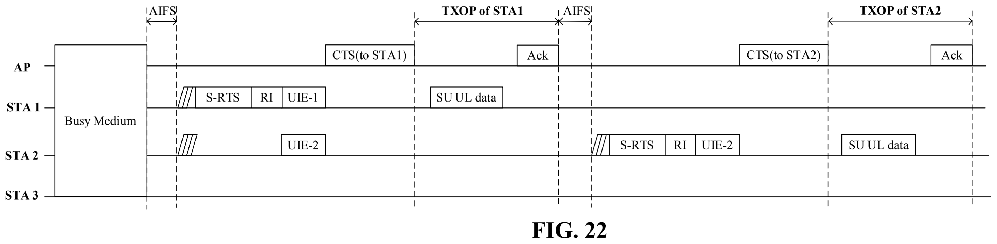

In some embodiments, assuming that 1 AP and 3 Non-AP STAs (STA1, STA2, STA3) are included in a WLAN network, if the AP uses a TXOP in Single Protection, each of the Non-AP STAs also uses the TXOP in Single Protection. The first MAC frame is an S-RTS frame, a specific field (that is, the first ID field) used for identifying an AID in a PPDU (that is, the first PPDU) where the S-RTS frame is located is a UIE field, and an RI field for switching between receiving and sending states is present before the UIE field. STA1 and STA2 need to send UL data respectively, and both of them use the access type AC_VO in the EDCA, then frame interaction between the AP and the Non-AP STAs is shown in FIG. 22.

Specifically, as shown in FIG. 22, STA1 sends an S-RTS frame at the time of AIFS when the channel is idle, a UIE-1 field identifying the AID of STA1 is included in a PPDU where the S-RTS frame is located. Since a backoff value (BackoffCount) of STA2 is greater than a backoff value (BackoffCount) of STA1, STA2 fails to send an S-RTS frame. STA3 does not send any frame. After receiving a part of the PPDU where the S-RTS frame sent by STA1 is located (that is, a part before the UIE-1 field), STA2 identifies that it is an S-RTS frame and may provide a TXOP to be shared. Therefore, STA2 sends a UIE-2 field identifying its own AID in a time range of UIE-1 immediately, to request sharing the TXOP. After receiving the S-RTS frame and UIE fields overlapping together, the AP detects through the UIE fields that STA1 and STA2 need to send UL data respectively. The AP selects to provide UL transmission services in an SU UL mode here, and therefore the AP replies a CTS frame to STA1, to grant the TXOP to STA1. After receiving the CTS frame sent by the AP, STA1 finds that RA of the CTS frame is its own address, and therefore STA1 determines that channel contention is successful and the TXOP belongs to STA1 itself. After receiving the CTS frame sent by the AP, STA2 finds that the RA of the CTS frame is not its own address, and therefore STA2 determines that request of sharing the TXOP has failed. Then, in the TXOP of STA1, STA1 sends SU UL data to the AP, and the AP replies an Ack frame to STA1 to confirm that transmission is successful. At this point, the TXOP of STA1 ends, and the channel enters the idle state. After that, STA2 sends an S-RTS frame again at the time of AIFS when the channel is idle, a UIE field identifying the AID of STA2 is included in a PPDU where the S-RTS frame is located, and STA1 and STA3 do not send any frame. After receiving the S-RTS frame, the AP detects that only STA2 needs to send UL data, and therefore the AP replies a CTS frame to STA2. After receiving the CTS frame sent by the AP, STA2 finds that RA of the CTS frame is its own address, and therefore STA2 determines that channel contention is successful and the TXOP belongs to STA2 itself. Then, in the TXOP of STA2, STA2 sends SU UL data to the AP, and the AP replies an Ack frame to STA2 to confirm that transmission is successful. At this point, the TXOP of STA2 ends, and the channel re-enters the idle state.

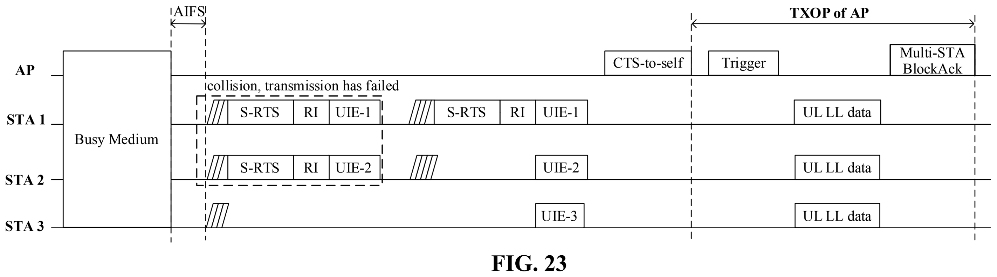

In some embodiments, assuming that 1 AP and 3 Non-AP STAs (STA1, STA2, STA3) are included in a WLAN network, if the AP uses a TXOP in Single Protection, each of the Non-AP STAs also uses the TXOP in Single Protection. The first MAC frame is an S-RTS frame, a specific field (that is, the first ID field) used for identifying an AID in a PPDU (that is, the first PPDU) where the S-RTS frame is located is a UIE field, and an RI field for switching between receiving and sending states is present before the UIE field. STA1, STA2 and STA3 need to send UL data respectively, and all of them use the access type AC_VO in the EDCA, then frame interaction between the AP and the Non-AP STAs is shown in FIG. 23.

Specifically, as shown in FIG. 23, in a first random backoff, BackoffCount of STA1 is the same as BackoffCount of STA2 due to coincidence, and therefore AIFS of STA1 is the same as AIFS of STA2, then STA1 and STA2 send S-RTS frames simultaneously at the time of AIFS when the channel is idle, a UIE-1 field identifying the AID of STA1 and a UIE-2 field identifying the AID of STA2 are included respectively in a PPDU where the S-RTS frames are located. Since BackoffCount of STA3 is greater than BackoffCount of STA1 and STA2, STA3 does not send an S-RTS frame. This situation is that STA1 collides with STA2 during channel contention. Signals of the S-RTS frame sent by STA1 and the S-RTS frame sent by STA2 may be mixed together, which may result in that the AP and STA3 cannot correctly parse that it is an S-RTS frame. Therefore, the AP cannot reply with a CTS frame as a response, and STA3 cannot send a UIE-3 field. According to an EDCA rule, when collision of channel contention occurs, the STA (that is, STA1 and STA2) may double its own Contention Window (CW), regenerate BackoffCount, and then perform backoff again.

Specifically, as shown in FIG. 23, in a second random backoff, BackoffCount of STA1 is less than BackoffCount of STA2, and therefore STA1 sends an S-RTS frame including UIE-1, and STA2 fails to send an S-RTS frame. After receiving the S-RTS frame sent by STA1, STA2 and STA3 identify that it is an S-RTS frame and may provide a TXOP to be shared. Therefore, STA2 and STA3 immediately convert from a receiving state to a sending state in the time of the RI field respectively, and send a UIE-2 field and a UIE-3 field identifying their own AIDs respectively in a time range of UIE-1, to request sharing the TXOP. After receiving the S-RTS frame and UIE fields overlapping together, the AP detects through the UIE fields that STA1, STA2 and STA3 need to send UL data respectively. The AP selects to provide UL transmission services in an MU UL mode, and therefore the AP replies with a CTS-to-self frame, to grant the TXOP to the AP itself. After receiving the CTS frame sent by the AP, STA1, STA2 and STA3 find that RA of the CTS frame is not their own addresses, instead, the RA of the CTS frame is address of the AP, and therefore STA1, STA2 and STA3 determine that channel contention has failed and the TXOP belongs to the AP. Then, in the TXOP of the AP, the AP sends a trigger frame to STA1, STA2 and STA3 to trigger STA1, STA2 and STA3 to send TB PPDUs carrying MU UL data simultaneously, and reply with a Multi-STA BlockAck frame to confirm that transmission is successful. At this point, the TXOP of the AP ends, and the channel re-enters the idle state.

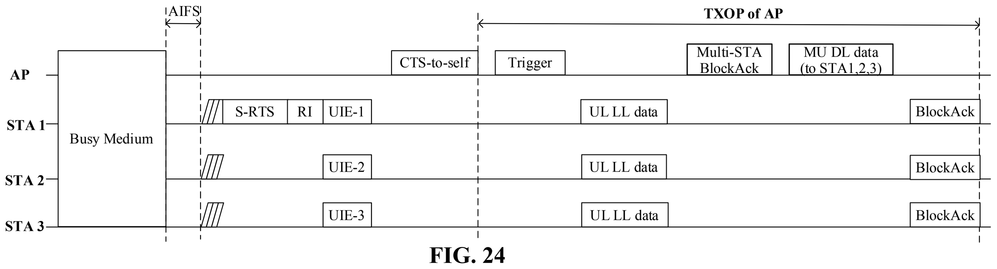

In some embodiments, assuming that 1 AP and 3 Non-AP STAs (STA1, STA2, STA3) are included in a WLAN network, if the AP uses a TXOP in Multiple Protection or a TXOP in Multiple Protection with a limited length, each of the Non-AP STAs uses a TXOP in Single Protection. The first MAC frame is an S-RTS frame, a specific field used for identifying an AID in a PPDU where the S-RTS frame is located is a UIE field, and an RI field for switching between receiving and sending states is present before the UIE field. STA1, STA2 and STA3 need to send UL data respectively, the AP needs to send DL data to STA1, STA2 and STA3, and all of them use the access type AC_VO in the EDCA, then frame interaction between the AP and the Non-AP STAs is shown in FIG. 24.

Specifically, as shown in FIG. 24, STA1 sends an S-RTS frame at the time of AIFS when the channel is idle, a UIE-1 field identifying the AID of STA1 is included in a PPDU where the S-RTS frame is located. Since BackoffCount of STA2 and STA3 are greater than BackoffCount of STA1, STA2 and STA3 fail to send S-RTS frames respectively. After receiving a part of the PPDU where the S-RTS frame sent by STA1 is located (that is, a part before the UIE-1 field), STA2 and STA3 identify that it is an S-RTS frame and may provide a TXOP to be shared. Therefore, STA2 and STA3 immediately send a UIE-2 field and a UIE-3 field identifying their own AIDs respectively in a time range of UIE-1, to request sharing the TXOP. After receiving the S-RTS frame and UIE fields overlapping together, the AP detects through the UIE fields that STA1, STA2 and STA3 need to send UL data respectively. The AP selects to provide UL transmission services in an MU UL mode, and therefore the AP replies with a CTS-to-self frame, to grant the TXOP to the AP itself. After receiving the CTS frame sent by the AP, STA1, STA2 and STA3 find that RA of the CTS frame is not their own addresses, instead, the RA of the CTS frame is address of the AP, and therefore STA1, STA2 and STA3 determine that channel contention has failed and the TXOP belongs to the AP. Then, in the TXOP of the AP, the AP sends a trigger frame to STA1, STA2 and STA3 to trigger STA1, STA2 and STA3 to send TB PPDUs carrying MU UL data simultaneously, and reply with a Multi-STA BlockAck frame to confirm that transmission is successful. After that, the AP sends MU DL data to STA1, STA2 and STA3, and then STA1, STA2 and STA3 send TB PPDUs simultaneously to reply with BlockAck frames to confirm that transmission is successful. At this point, the TXOP of the AP ends, and the channel re-enters the idle state.

In some embodiments, in a case that m is greater than or equal to 2, the m ID fields are carried by m PPDUs respectively. Time domain resources occupied by the m PPDUs are the same, or the m PPDUs are completely overlapping in a time domain.

In the embodiments, the EDCA mechanism is modified slightly and is easy to be implemented.

In some embodiments, the m PPDUs include MAC frames used for channel contention respectively, and frame formats of the MAC frames used for channel contention and included in the m PPDUs are the same.

In some embodiments, the STAs corresponding to the m ID fields respectively use the same EDCA access type, and values of EDCA backoff counters of the STAs corresponding to the m ID fields respectively are the same.

In some embodiments, in the media contention stage shown in FIG. 12, each of Non-AP STAs that need to send UL delay sensitive data performs channel contention by following the EDCA mechanism, or uses a newly defined AC type of which CWmin and CWmax are less than CWmin and CWmax in AC_VO in the EDCA respectively. However, each of the Non-AP STAs that need to send UL delay sensitive data contends for the channel by sending the first MAC frame (such as an S-RTS frame).

In some embodiments, in the media contention stage shown in FIG. 12, the PPDU including a specific field (that is, the ID field) for identifying an AID of the STA is sent by using the first BW and the first MCS, to ensure the same sending time. That is, all the m PPDUs are sent by using the first BW and the first MCS, to ensure the same sending time.

In some embodiments, in the media granting stage shown in FIG. 12, the AP completes MU UL detection based on a specific field (that is, the first ID field) for identifying an AID of the STA in the received first PPDU, or the AP completes MU UL detection based on specific fields for identifying AIDs of the STAs in the received m PPDUs overlapping together, identifies AIDs of one or more Non-AP STAs that need to send UL delay sensitive data respectively, and then replies with different CTS frames based on this, thereby granting the TXOP to the Non-AP STA or the AP. Specifically, for example, if the AP detects 1 AID, the AP does not send any CTS frame and determines an ownership of the TXOP according to the EDCA mechanism. Specifically, for another example, if the AP detects m AIDs (m is greater than or equal to $k_1$ or m is greater than $k_1$), the AP may send the CTS frame to a Non-AP STA corresponding to one of the AIDs, to grant the TXOP to the Non-AP STA corresponding to this AID; or, the AP may also send a CTS-to-self frame, to grant the TXOP to the AP itself.

In some embodiments, in the media usage stage shown in FIG. 12, each of the Non-AP STA and the AP uses a TXOP in Single Protection, or a TXOP in Multiple Protection with a limited length. In another embodiment, the Non-AP STA uses a TXOP in Single Protection, or a TXOP in Multiple Protection with a limited length; and the AP may use any type of TXOP.

In some embodiments, in the media usage stage shown in FIG. 12, after the AP obtains the TXOP, the AP should send a trigger frame to the Non-AP STA corresponding to the above detected AID, and then receives a TB PPDU to obtain UL data, and replies with a BlockAck frame or a Multi-STA BlockAck frame; when the AP uses a TXOP in Multiple Protection or a TXOP in Multiple Protection with a limited length, if the TXOP has a sufficient duration, the AP may also send DL SU data or DL MU data within the TXOP, and receive a corresponding Ack frame or BlockAck frame.

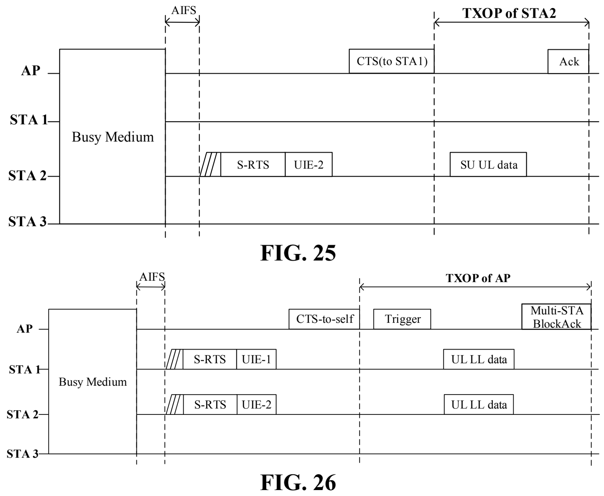

In some embodiments, assuming that 1 AP and 3 Non-AP STAs (STA1, STA2, STA3) are included in a WLAN network, if the AP uses a TXOP in Single Protection, each of the Non-AP STAs also uses the TXOP in Single Protection. The specific MAC frame is an S-RTS frame, a specific field used for identifying an AID in a PPDU where the S-RTS frame is located is a UIE field. STA2 needs to send UL data (such as UL delay sensitive data) and uses the access type AC_VO in the EDCA, then frame interaction between the AP and the Non-AP STAs is shown in FIG. 25.

Specifically, as shown in FIG. 25, STA2 sends an S-RTS frame at the time of AIFS when the channel is idle, a UIE-2 field identifying the AID of STA2 is included in a PPDU where the S-RTS frame is located, and STA1 and STA3 do not send any frame. After receiving the S-RTS frame, the AP detects through the UIE field that only STA2 needs to send UL data, and therefore the AP replies a CTS frame to STA2, to grant the TXOP to STA2. After receiving the CTS frame sent by the AP, STA2 finds that RA of the CTS frame is its own address, and therefore STA2 determines that channel contention is successful and the TXOP belongs to STA2 itself. Then, in the TXOP of STA2, STA2 sends SU UL data to the AP, and the AP replies an Ack frame to STA2 to confirm that transmission is successful. At this point, the TXOP of STA2 ends, and the channel re-enters the idle state.

In some embodiments, assuming that 1 AP and 3 Non-AP STAs (STA1, STA2, STA3) are included in a WLAN network, if the AP uses a TXOP in Single Protection, each of the Non-AP STAs also uses the TXOP in Single Protection. The specific MAC frame is an S-RTS frame, a specific field used for identifying an AID in a PPDU where the S-RTS frame is located is a UIE field. STA1 and STA2 need to send UL data (such as UL delay sensitive data) respectively, and both of them use the access type AC_VO in the EDCA, then frame interaction between the AP and the Non-AP STAs is shown in FIG. 26.

Specifically, as shown in FIG. 26, BackoffCount of STA1 is the same as BackoffCount of STA2 due to coincidence, and therefore AIFS of STA1 is the same as AIFS of STA2, then STA1 and STA2 send S-RTS frames simultaneously at the time of AIFS when the channel is idle, a UIE-1 field identifying the AID of STA1 and a UIE-2 field identifying the AID of STA2 are included respectively in a PPDU where the S-RTS frames are located. STA3 does not send any frame. This situation is that STA1 collides with STA2 during channel contention. After receiving the S-RTS frame and UIE fields overlapping together, the AP detects through the UIE fields that STA1 and STA2 need to send UL data respectively, and therefore the AP selects to provide UL transmission services in an MU UL mode, and replies a CTS-to-self frame, to grant the TXOP to the AP itself. After receiving the CTS frame sent by the AP, STA1 and STA2 find that RA of the CTS frame is not their own addresses, instead, the RA of the CTS frame is address of the AP, and therefore STA1 and STA2 determine that channel contention has failed and the TXOP belongs to the AP. Then, in the TXOP of the AP, the AP sends a trigger frame to STA1 and STA2 to trigger STA1 and STA2 to send TB PPDUs carrying MU UL data simultaneously, and reply with a Multi-STA BlockAck frame to confirm that transmission is successful. At this point, the TXOP of the AP ends, and the channel re-enters the idle state.

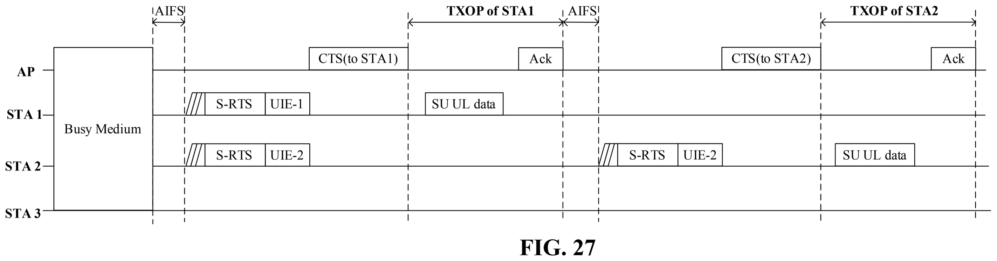

In some embodiments, assuming that 1 AP and 3 Non-AP STAs (STA1, STA2, STA3) are included in a WLAN network, if the AP uses a TXOP in Single Protection, each of the Non-AP STAs also uses the TXOP in Single Protection. The specific MAC frame is an S-RTS frame, a specific field used for identifying an AID in a PPDU where the S-RTS frame is located is a UIE field. STA1 and STA2 need to send UL data (such as UL delay sensitive data) respectively, and both of them use the access type AC_VO in the EDCA, then frame interaction between the AP and the Non-AP STAs is shown in FIG. 27.

Specifically, as shown in FIG. 27, BackoffCount of STA1 is the same as BackoffCount of STA2 due to coincidence, and therefore AIFS of STA1 is the same as AIFS of STA2, then STA1 and STA2 send S-RTS frames simultaneously at the time of AIFS when the channel is idle, a UIE-1 field identifying the AID of STA1 and a UIE-2 field identifying the AID of STA2 are included respectively in a PPDU where the S-RTS frames are located. STA3 does not send any frame. This situation is that STA1 collides with STA2 during channel contention. After receiving the S-RTS frame and UIE fields overlapping together, the AP detects through the UIE fields that STA1 and STA2 need to send UL data respectively; however, the AP selects to provide UL transmission services in an SU UL mode, and replies a CTS frame to STA1, to grant the TXOP to STA1. After receiving the CTS frame sent by the AP, STA1 finds that RA of the CTS frame is its own address, and therefore STA1 determines that channel contention is successful and the TXOP belongs to STA1 itself. After receiving the CTS frame sent by the AP, STA2 finds that the RA of the CTS frame is not its own address, and therefore STA2 determines that request of sharing the TXOP has failed. Then, in the TXOP of STA1, STA1 sends SU UL data to the AP, and the AP replies an Ack frame to STA1 to confirm that transmission is successful. At this point, the TXOP of STA1 ends, and the channel enters the idle state. After that, STA2 sends an S-RTS frame again at the time of AIFS when the channel is idle, a UIE field identifying the AID of STA2 is included in a PPDU where the S-RTS frame is located, and STA1 and STA3 do not send any frame. After receiving the S-RTS frame, the AP detects that only STA2 needs to send UL data, and therefore the AP replies a CTS frame to STA2. After receiving the CTS frame sent by the AP, STA2 finds that RA of the CTS frame is its own address, and therefore STA2 determines that channel contention is successful and the TXOP belongs to STA2 itself. Then, in the TXOP of STA2, STA2 sends SU UL data to the AP, and the AP replies an Ack frame to STA2 to confirm that transmission is successful. At this point, the TXOP of STA2 ends, and the channel re-enters the idle state.

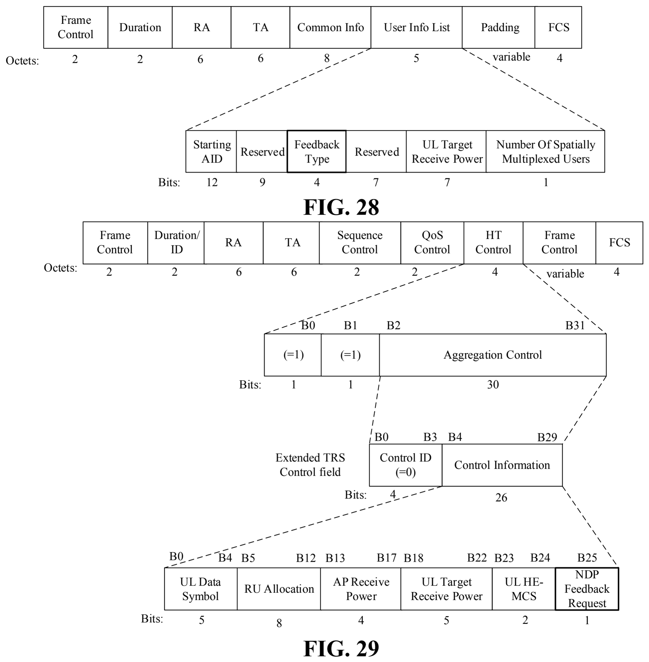

In some embodiments, assuming that 1 AP and 3 Non-AP STAs (STA1, STA2, STA3) are included in a WLAN network, if the AP uses a TXOP in Multiple Protection or a TXOP in Multiple Protection with a limited length, each of the Non-AP STAs uses a TXOP in Single Protection. The specific MAC frame is an S-RTS frame, a specific field used for identifying an AID in a PPDU where the S-RTS frame is located is a UIE field. STA1, STA2 and STA3 need to send UL data (such as UL delay sensitive data) respectively, the AP needs to send DL data to STA1, and all of them use the access type AC_VO in the EDCA, then frame interaction between the AP and the Non-AP STAs is shown in FIG. 28.

Specifically, as shown in FIG. 28, a backoff value (BackoffCount) of STA1 is the same as a backoff value (BackoffCount) of STA2, and therefore AIFS of STA1 is the same as AIFS of STA2, then STA1 and STA2 send S-RTS frames simultaneously at the time of AIFS when the channel is idle, a UIE-1 field identifying the AID of STA1 and a UIE-2 field identifying the AID of STA2 are included respectively in a PPDU where the S-RTS frames are located. Since BackoffCount of STA3 is greater than BackoffCount of STA1 and STA2, STA3 does not send any frame. This situation is that STA1 collides with STA2 during channel contention. After receiving the S-RTS frame and UIE fields overlapping together, the AP detects through the UIE fields that STA1 and STA2 need to send UL data respectively. The AP selects to provide UL transmission services in an MU UL mode here, and replies a CTS-to-self frame, to grant the TXOP to the AP itself. After receiving the CTS frame sent by the AP, STA1 and STA2 find that RA of the CTS frame is not their own addresses, instead, the RA of the CTS frame is address of the AP, and therefore STA1 and STA2 determine that channel contention has failed and the TXOP belongs to the AP. Then, in the TXOP of the AP, the AP sends a trigger frame to STA1 and STA2 to trigger STA1 and STA2 to send TB PPDUs carrying MU UL data simultaneously, and reply with a Multi-STA BlockAck frame to confirm that transmission is successful. After that, the AP sends SU DL data to STA1, and then STA1 replies with an Ack frame to confirm that transmission is successful. At this point, the TXOP of the AP ends, and the channel re-enters the idle state.

In some embodiments, in a case that the first PPDU includes the second MAC frame, a result of channel contention corresponding to the second MAC frame is associated with the number of STAs that need to acquire media to transmit UL data respectively detected by an AP.

The number of STAs that need to acquire media to transmit UL data respectively is acquired by the AP detecting n PPDUs (that is, the AP acquires the number of STAs that need to acquire media to transmit UL data respectively by detecting n PPDUs), the n PPDUs include at least the first PPDU, each of PPDUs among the n PPDUs other than the first PPDU includes a first field and a second field, the first field is used for indicating ID information (such as an AID) of a STA sending a corresponding PPDU, the second field is used for indicating whether the STA sending the corresponding PPDU needs to acquire a medium to transmit UL data, n is a positive integer, and n is greater than or equal to 2.

Specifically, an i-th PPDU among the n PPDUs other than the first PPDU includes a first field and a second field, the first field is used for indicating ID information of a STA sending the i-th PPDU, the second field is used for indicating whether the STA sending the i-th PPDU needs to acquire a medium to transmit UL data.

Specifically, for example, the second field may occupy a bit. When the second field has a value of 0, it represents that the STA needs to acquire the medium to transmit UL data, and when the second field has a value of 1, it represents that the STA does not need to acquire the medium to transmit UL data. Alternatively, when the second field has a value of 1, it represents that the STA needs to acquire the medium to transmit UL data, and when the second field has a value of 0, it represents that the STA does not need to acquire the medium to transmit UL data.

In some embodiments, the first field is an HE-LTF, or an Extremely High Throughput Long Training Field (EHT-LTF), or a UHR-LTF.

In some embodiments, the first field is used for indicating the ID information of the STA through a subcarrier used for transmitting the first field. Details may refer to the above mapping relationships shown in Table 2 and Table 3 and relevant descriptions, which will not be elaborated here.

In some embodiments, the second field is a feedback status (FEEDBACK_STATUS) field corresponding to a Trigger Based Feedback Null Data Physical Protocol Data Unit (TB feedback NDP) frame.

Specifically, for example, if the Non-AP STA needs to acquire a medium to transmit UL data (such as UL delay sensitive data), FEEDBACK_STATUS corresponding to the TB feedback NDP replied by the Non-AP STA is equal to 1; otherwise, FEEDBACK_STATUS corresponding to the TB feedback NDP replied by the Non-AP STA is equal to 0.

In some embodiments, the second field is used for indicating whether the STA needs to acquire the medium to transmit UL data, through a subcarrier used for transmitting the second field. Details may refer to the above mapping relationships shown in Table 2 and Table 3 and relevant descriptions, which will not be elaborated here.

In some embodiments, in a case that the number of the PPDUs among the n PPDUs other than the first PPDU is greater than or equal to 2, time domain resources occupied by the PPDUs among the n PPDUs other than the first PPDU are the same, or the PPDUs among the n PPDUs other than the first PPDU are completely overlapping in a time domain.

In some embodiments, the PPDUs among the n PPDUs other than the first PPDU are sent by corresponding STAs respectively after detecting the first PPDU. Specifically, the PPDUs among the n PPDUs other than the first PPDU include feedback information triggered by the second MAC frame in the first PPDU, and therefore the PPDUs among the n PPDUs other than the first PPDU are sent by corresponding STAs respectively after detecting the first PPDU.

In some embodiments, the result of the channel contention corresponding to the second MAC frame is associated with the number of STAs that need to acquire media to transmit UL data respectively detected by the AP, which includes:

in a case that the number of STAs that need to acquire media to transmit UL data respectively detected by the AP is equal to 1, a TXOP associated with the channel contention corresponding to the second MAC frame belongs to the first STA; and/or

in a case that the number of STAs that need to acquire media to transmit UL data respectively detected by the AP is equal to or greater than $K_2$, the TXOP associated with the channel contention corresponding to the second MAC frame belongs to the AP; or, in a case that the number of STAs that need to acquire media to transmit UL data respectively detected by the AP is equal to or greater than $K_2$, the TXOP associated with the channel contention corresponding to the second MAC frame belongs to the first STA, here $K_2$ is a positive integer, and $K_2$ is greater than or equal to 2.

In some embodiments, the result of the channel contention corresponding to the second MAC frame is associated with the number of STAs that need to acquire media to transmit UL data respectively detected by the AP, which includes:

in a case that the number of STAs that need to acquire media to transmit UL data respectively detected by the AP is equal to 1, a TXOP associated with the channel contention corresponding to the second MAC frame belongs to the first STA; and/or

in a case that the number of STAs that need to acquire media to transmit UL data respectively detected by the AP is greater than $K_2$, the TXOP associated with the channel contention corresponding to the second MAC frame belongs to the AP; or, in a case that the number of STAs that need to acquire media to transmit UL data respectively detected by the AP is greater than $K_2$, the TXOP associated with the channel contention corresponding to the second MAC frame belongs to the first STA, here $K_2$ is a positive integer, and $K_2$ is greater than or equal to 2.

Specifically, for example, if 1 Non-AP STA that needs to acquire a medium to transmit UL data is detected by the AP, the AP does not send any CTS frame and determines an ownership of the TXOP according to the EDCA mechanism, that is, the Non-AP STA may contend for the TXOP through the EDCA mechanism.

Specifically, for example, if S (S is greater than or equal to $K_2$ or S is greater than $K_2$) Non-AP STAs that need to acquire media to transmit UL data respectively are detected by the AP, the AP may send a CTS frame to a certain Non-AP STA, to grant the TXOP to this Non-AP STA.

Specifically, for example, if S (S is greater than or equal to $K_2$ or S is greater than $K_2$) Non-AP STAs that need to acquire media to transmit UL data respectively are detected by the AP, the AP may also send a CTS-to-self frame, to grant the TXOP to the AP itself.

In some embodiments, the Non-AP STA uses a TXOP in Single Protection, or the Non-AP STA uses a TXOP in Multiple Protection with a limited length; and the AP uses a TXOP in Single Protection, or the AP uses a TXOP in Multiple Protection with a limited length.

In an embodiment, the Non-AP STA uses a TXOP in Single Protection, or the Non-AP STA uses a TXOP in Multiple Protection with a limited length; and the AP may use any type of TXOP (that is, the TXOP may be a TXOP in Single Protection, or a TXOP in Multiple Protection).

In some embodiments, in a case that the TXOP associated with the channel contention corresponding to the second MAC frame belongs to the AP, n STAs sending the n PPDUs respectively send UL data within the TXOP after receiving a trigger frame sent by the AP.

Specifically, for example, after the AP obtains the TXOP, the AP sends a trigger frame to the above detected Non-AP STA that needs to send UL delay sensitive data, and then receives a TB PPDU to obtain UL data, and replies with a BlockAck frame or a Multi-STA BlockAck frame.

In some embodiments, in a case that the TXOP associated with the channel contention corresponding to the second MAC frame belongs to the AP, n STAs sending the n PPDUs respectively send UL data and receive DL data within the TXOP after receiving a trigger frame sent by the AP.

Specifically, for example, after the AP obtains the TXOP, the AP sends a trigger frame to the above detected Non-AP STA that needs to send UL delay sensitive data, and then receives a TB PPDU to obtain UL data, and replies with a BlockAck frame or a Multi-STA BlockAck frame; when the AP uses a TXOP in Multiple Protection or a TXOP in Multiple Protection with a limited length, if the TXOP has a sufficient duration, the AP may also send DL SU data or DL MU data within the TXOP, and receive a corresponding Ack frame or BlockAck frame.

In some embodiments, the second MAC frame is an extended NFRP Trigger frame, or the second MAC frame is a MAC frame including an extended Triggered Response Scheduling (TRS) Control field, or the second MAC frame is a MAC frame including a Null Data Physical Protocol Data Unit Feedback Report (NFR) Control field.

In the embodiments, it is unnecessary to modify PPDU of the PHY layer, and functions may be completed by using only the second MAC frame.

In some embodiments, in a case that the second MAC frame is the extended NFRP Trigger frame, a user information field in the second MAC frame includes a Feedback Type field. The Feedback Type field is at least used for indicating all STAs receiving the second MAC frame to feed back whether the STAs need to acquire media to transmit UL data respectively.

Specifically, for example, the extended NFRP Trigger frame may be shown in FIG. 28. The user information field in the extended NFRP Trigger frame includes a feedback type (Feedback Type) field. Encoding of the feedback type may be shown in Table 4, here when the Feedback Type has a value of 0, it indicates that type of the feedback information is whether the Non-AP STA requests using for UL TB transmission resources; when the Feedback Type has a value of 1, it indicates that type of the feedback information is whether the Non-AP STA needs to acquire a medium to transmit data packets of a delay sensitive service. Specifically, after the AP receives the NFRP Trigger frame of which the Feedback Type has a value of 1, the AP receives one or more TB feedback NDPs that may be present after the SIFS time, thereby completing MU detection of a UL delay sensitive service.

Table 4 Feedback Type Encoding

| Value | Description |
|-------|-------------|
| 0 | Resource request |
| 1 | Access request |
| 2-15 | Reserved |

In some embodiments, in a case that the second MAC frame is the MAC frame including the extended TRS Control field, an aggregation control field in the second MAC frame is the extended TRS Control field. The extended TRS Control field includes an NDP feedback request field, and the NDP feedback request field is used for triggering all STAs receiving the second MAC frame to feed back PPDUs containing the STAs' own identification information respectively. In some embodiments, each of the PPDUs containing the STA's own identification information is one of: a UHR MU PPDU, a UHR TB PPDU, a UHR ER PPDU, or an Ultra High Reliability Trigger Based Feedback Null Data Physical Protocol Data Unit (UHR TB feedback NDP).

Specifically, for example, the MAC frame including the extended TRS Control field may be shown in FIG. 29, when a Control ID field in an aggregation control field thereof = 0, it represents that the aggregation control field is the extended TRS Control field. The extended TRS Control field includes an NDP feedback request field, and the NDP feedback request field is used for triggering all STAs receiving the second MAC frame to feed back PPDUs containing the STAs' own identification information respectively. In other words, the NDP feedback request field is used for triggering a receiving device to send a PPDU containing identification information after receiving a UHR MU PPDU or UHR ER PPDU including the extended TRS Control field, and the PPDU containing identification information may be a UHR MU PPDU, a UHR ER PPDU, a UHR TB PPDU, or a UHR TB feedback NDP.

In some embodiments, in a case that the second MAC frame is the MAC frame including the NFR Control field, an aggregation control field in the second MAC frame is the NFR Control field. The NFR Control field includes a Feedback Type field, and the Feedback Type field is at least used for indicating all STAs receiving the second MAC frame to feed back whether the STAs need to acquire media to transmit UL data respectively.

In some embodiments, the NFR Control field further includes at least one of a Starting AID field, a Feedback Type field, a Number Of IDs field, a Target Receive Power field, or a Number Of Spatially Multiplexed Users field.

The Starting AID field is used for indicating a first AID in an AID range planned to respond to the second MAC frame, the Feedback Type field is used for indicating a type of feedback information carried in a triggered PPDU containing an identity, the Number Of IDs field is used for indicating the number of fields contained in a triggered PPDU containing an identification field and identifying identity of a sending device, the Target Receive Power field is used for indicating an expected RSP measured at an antenna connector of the first STA and averaged on the antenna, and the Number Of Spatially Multiplexed Users field is used for indicating the number of STAs multiplexed on the same group of subcarriers in the same RU.

For example, the Number Of IDs field may also be referred to as a Number Of UIEs field.

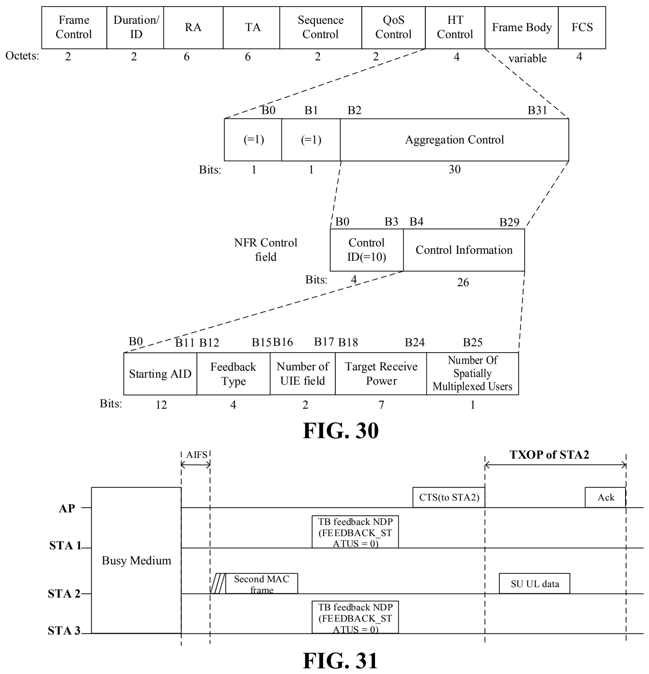

Specifically, for example, the MAC frame including the NFR Control field may be shown in FIG. 30, when a Control ID field in an aggregation control field thereof = 10, it represents that the aggregation control field is the NFR Control field. A control information field in the NFR Control field includes a Starting AID field, a Feedback Type field, a Number Of UIEs field (a Number of UIE Subfield), a Target Receive Power field, and a Number Of Spatially Multiplexed Users field. The Starting AID defines a first AID in an AID range planned to respond to the second MAC frame. The Feedback Type indicates a type of feedback information carried in a triggered PPDU containing an identity. The Number of UIE Subfield indicates the number of fields contained in a triggered PPDU containing an identification field and identifying identity of a sending device. The Target Receive Power represents an expected RSP measured at an antenna connector of a device sending the NFR Control and averaged on the antenna. The Number Of Spatially Multiplexed Users represents the number of STAs multiplexed on the same group of subcarriers in the same RU, and is encoded as the number of STAs - 1.

It should be noted that a value of the Control ID field in the aggregation control field may be any integer between 10 and 14. For example, the value of the Control ID in FIG. 30 is 10, indicating that the aggregation control field is the NFR Control field.

In some embodiments, in the media contention stage shown in FIG. 12, each of Non-AP STAs that need to send UL delay sensitive data performs channel contention by following the EDCA mechanism. However, each of the Non-AP STAs that need to send UL delay sensitive data contends for the channel by sending the second MAC frame (such as the extended NFRP Trigger frame, or any MAC frame including the extended TRS Control field, or any MAC frame including a newly defined NFR Control field).

In some embodiments, in the media contention stage shown in FIG. 12, after receiving a valid second MAC frame, the Non-AP STA replies with a TB feedback NDP. If the Non-AP STA needs to send UL delay sensitive data, FEEDBACK_STATUS corresponding to the TB feedback NDP replied by the Non-AP STA is equal to 1; otherwise, FEEDBACK_STATUS corresponding to the TB feedback NDP replied by the Non-AP STA is equal to 0.

In some embodiments, in the media granting stage shown in FIG. 12, the AP completes MU UL detection based on the HE-LTF or EHT-LTF or UHR-LTF field in the received TB feedback NDP or the received multiple TB feedback NDPs overlapping together, identifies AIDs of one or more Non-AP STAs that need to send UL delay sensitive data respectively, and then replies with different CTS frames based on the AIDs, thereby granting the TXOP to different Non-AP STAs or the AP. Specifically, for example, if the AP detects 1 Non-AP STA that needs to send UL LL data, the AP does not send any CTS frame and determines an ownership of the TXOP according to the EDCA mechanism. Specifically, for example, if S (S is greater than or equal to $K_2$ or S is greater than $K_2$) Non-AP STAs that need to acquire media to transmit UL data respectively are detected by the AP, the AP may send a CTS frame to a certain Non-AP STA, to grant the TXOP to the Non-AP STA corresponding to this AID; or, if S (S is greater than or equal to $K_2$ or S is greater than $K_2$) Non-AP STAs that need to acquire media to transmit UL data respectively are detected by the AP, the AP may also send a CTS-to-self frame, to grant the TXOP to the AP itself.

In some embodiments, in the media usage stage shown in FIG. 12, the Non-AP STA uses a TXOP in Single Protection, or a TXOP in Multiple Protection with a limited length; and the AP uses a TXOP in Single Protection, or a TXOP in Multiple Protection with a limited length.

In another embodiment, in the media usage stage shown in FIG. 12, the Non-AP STA uses a TXOP in Single Protection, or a TXOP in Multiple Protection with a limited length; and the AP may use any type of TXOP.

In some embodiments, in the media usage stage shown in FIG. 12, after the AP obtains the TXOP, the AP should send a trigger frame to the Non-AP STA corresponding to the above detected AID, and then receives a TB PPDU to obtain UL data, and replies with a BlockAck frame or a Multi-STA BlockAck frame; when the AP uses a TXOP in Multiple Protection or a TXOP in Multiple Protection with a limited length, if the TXOP has a sufficient duration, the AP may also send DL SU data or DL MU data within the TXOP, and receive a corresponding Ack frame or BlockAck frame.

In some embodiments, assuming that 1 AP and 3 Non-AP STAs (STA1, STA2, STA3) are included in a WLAN network, if the AP uses a TXOP in Single Protection, each of the Non-AP STAs also uses the TXOP in Single Protection. STA2 needs to send UL data (such as UL delay sensitive data) and uses the access type AC_VO in the EDCA, then frame interaction between the AP and the Non-AP STAs is shown in FIG. 31.

Specifically, as shown in FIG. 31, STA2 sends the second MAC frame first at the time of AIFS when the channel is idle, and STA1 and STA3 do not send any frame. Since STA1 and STA3 do not need to send UL LL data, corresponding FEEDBACK_STATUS in TB feedback NDPs replied by STA1 and STA3 are equal to 0 after STA1 and STA3 receive the second MAC frame. After receiving the second MAC frame from STA2 and the TB feedback NDPs from STA1 and STA3, the AP detects that only STA2 needs to send UL delay sensitive data, and therefore the AP replies a CTS frame to STA2, to grant the TXOP to STA2. After receiving the CTS frame sent by the AP, STA2 finds that RA of the CTS frame is its own address, and therefore STA2 determines that channel contention is successful and the TXOP belongs to STA2 itself. Then, in the TXOP of STA2, STA2 sends SU UL data to the AP, and the AP replies an Ack frame to STA2 to confirm that transmission is successful. At this point, the TXOP of STA2 ends, and the channel re-enters the idle state.

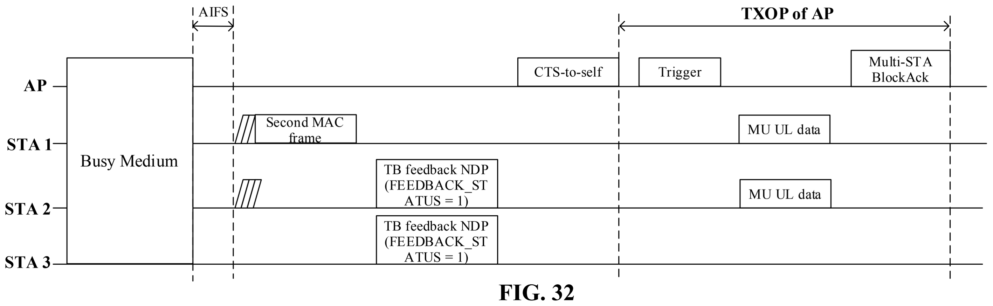

In some embodiments, assuming that 1 AP and 3 Non-AP STAs (STA1, STA2, STA3) are included in a WLAN network, if the AP uses a TXOP in Single Protection, each of the Non-AP STAs also uses the TXOP in Single Protection. STA1 and STA2 need to send UL data (such as UL delay sensitive data) respectively, and both of them use the access type AC_VO in the EDCA, then frame interaction between the AP and the Non-AP STAs is shown in FIG. 32.

Specifically, as shown in FIG. 32, STA1 sends the second MAC frame first at the time of AIFS when the channel is idle, and STA2 and STA3 do not send any frame. Since STA2 needs to send UL delay sensitive data, corresponding FEEDBACK_STATUS in the TB feedback NDP replied by STA2 are equal to 1. Since STA3 does not need to send UL delay sensitive data, corresponding FEEDBACK_STATUS in the TB feedback NDP replied by STA3 is equal to 0. After receiving the second MAC frame from STA1 and the TB feedback NDPs from STA2 and STA3, the AP detects that STA1 and STA2 need to send UL delay sensitive data, and therefore the AP replies a CTS-to-self frame, to grant the TXOP to the AP itself.

After receiving the CTS frame sent by the AP, STA1 finds that RA of the CTS frame is not its own address, instead, the RA of the CTS frame is address of the AP, and therefore STA1 determines that channel contention has failed and the TXOP belongs to the AP. Then, in the TXOP of the AP, the AP sends a trigger frame to STA1 and STA2 to trigger STA1 and STA2 to send TB PPDUs carrying MU UL data simultaneously, and reply with a Multi-STA BlockAck frame to confirm that transmission is successful. At this point, the TXOP of the AP ends, and the channel re-enters the idle state.

Therefore, in the embodiments of the disclosure, the AP may acquire the number and AIDs of STAs that need to acquire media to transmit UL data respectively at the channel contention stage. That is, the AP has a capability of UL MU detection at the channel contention stage (that is, the AP adds a function of MU UL detection to the EDCA mechanism), such that the AP may reasonably select to grant the TXOP to a STA or the AP based on the UL service demand and the DL service demand, thereby reducing delay of UL and DL data transmissions and alleviating delay jitter.

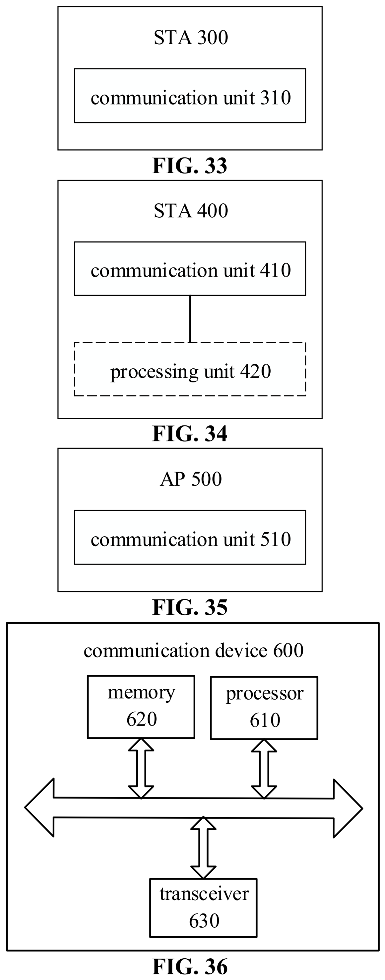

The method embodiments of the disclosure have been described in detail as above with reference to FIG. 13 to FIG. 32, and apparatus embodiments of the disclosure will be described in detail below with reference to FIG. 33 to FIG. 38. It should be understood that the apparatus embodiments and the method embodiments may correspond to each other, and similar descriptions may refer to the method embodiments.

FIG. 33 shows a schematic block diagram of a STA 300 according to an embodiment of the disclosure. The STA 300 is a first STA with to-be-transmitted UL data. As shown in FIG. 33, the STA 300 includes a communication unit 310.

The communication unit 310 is configured to send a first PPDU.

The first PPDU includes a first MAC frame and a first ID field, the first MAC frame is used for channel contention, and the first ID field is used for indicating an AID of the first STA.

Alternatively, the first PPDU includes a second MAC frame, the second MAC frame is used for channel contention, and the second MAC frame is further used for triggering all STAs receiving the second MAC frame to feed back whether the STAs need to acquire media to transmit UL data respectively.

In some embodiments, in a case that the first PPDU includes the first MAC frame and the first ID field, a result of channel contention corresponding to the first MAC frame is associated with a number of STAs with to-be-transmitted UL data detected by an AP.

The number of STAs with to-be-transmitted UL data is acquired by the AP detecting m ID fields, the m ID fields are used for indicating AIDs of m STAs respectively, the m ID fields include at least the first ID field, m is a positive integer, and m is equal to 1, or m is greater than or equal to 2.

In some embodiments, in a case that m is greater than or equal to 2, time domain resources occupied by the m ID fields are the same, or the m ID fields are completely overlapping in a time domain.

In some embodiments, each of other STAs among the m STAs corresponding to the m ID fields respectively than the first STA sends an ID field for identifying the STA's own AID on a time domain resource occupied by the first ID field, after identifying the first MAC frame.

In some embodiments, the first PPDU further includes an RI field.

The RI field is located after the first MAC frame and before the first ID field, and the RI field is used for reserving a time for a receiving side of the first PPDU to convert from a receiving state to a sending state.

In some embodiments, each of the other STAs among the m STAs corresponding to the m ID fields respectively than the first STA sets a value of the STA's Enhanced Distributed Channel Access (EDCA) backoff counter to zero, before sending the ID field for identifying the STA's own AID.

Alternatively, each of the other STAs among the m STAs corresponding to the m ID fields respectively than the first STA keeps a value of the STA's EDCA backoff counter unchanged, before sending the ID field for identifying the STA's own AID.

In some embodiments, in a case that m is greater than or equal to 2, the m ID fields are carried by m PPDUs respectively. Time domain resources occupied by the m PPDUs are the same, or the m PPDUs are completely overlapping in a time domain.

In some embodiments, the m PPDUs include MAC frames used for channel contention respectively, and frame formats of the MAC frames used for channel contention and included in the m PPDUs are the same.

In some embodiments, the STAs corresponding to the m ID fields respectively use a same EDCA access type, and values of EDCA backoff counters of the STAs corresponding to the m ID fields respectively are the same.

In some embodiments, the result of the channel contention corresponding to the first MAC frame is associated with the number of STAs with to-be-transmitted UL data detected by the AP, which includes:

in a case that m is equal to 1, a TXOP associated with the channel contention corresponding to the first MAC frame belongs to the first STA; and/or

in a case that m is greater than or equal to $K_1$, the TXOP associated with the channel contention corresponding to the first MAC frame belongs to the AP; or, in a case that m is greater than or equal to $K_1$, the TXOP associated with the channel contention corresponding to the first MAC frame belongs to the first STA; or, in a case that m is greater than or equal to $K_1$, the TXOP associated with the channel contention corresponding to the first MAC frame belongs to multiple STAs among the m STAs corresponding to the m ID fields respectively, here the multiple STAs include at least the first STA, $K_1$ is a positive integer, and $K_1$ is greater than or equal to 2.

In some embodiments, in a case that the TXOP associated with the channel contention corresponding to the first MAC frame belongs to the AP, the m STAs corresponding to the m ID fields respectively send UL data within the TXOP after receiving a trigger frame sent by the AP.

In some embodiments, in a case that the TXOP associated with the channel contention corresponding to the first MAC frame belongs to the AP, the m STAs corresponding to the m ID fields respectively send UL data and receive DL data within the TXOP after receiving a trigger frame sent by the AP.

In some embodiments, transmission of the first PPDU is associated with a first BW and a first MCS.

In some embodiments, the transmission of the first PPDU is associated with the first BW, and time domain resources of the first MCS occupied by all STAs receiving or detecting the first MAC frame to acquire the first ID field respectively.

In some embodiments, the first ID field is used for indicating the AID of the first STA through a subcarrier used for transmitting the first ID field.

In some embodiments, in the first PPDU, the first ID field is located after the first MAC frame.

In some embodiments, the first ID field includes one or more ID subfields. The one or more ID subfields are used for indicating ID information of the first STA.

In some embodiments, the first ID field further includes a UHR-STF.

In some embodiments, the first ID field further includes one or more UHR-LTFs.

In some embodiments, the first ID field further includes a legacy preamble field.

In some embodiments, the legacy preamble field includes an L-STF, an L-LTF, an L-SIG, an RL-SIG, and a U-SIG.

In some embodiments, the legacy preamble field includes an L-STF, an L-LTF, an L-SIG, an RL-SIG, a U-SIG, and a UHR-SIG.

In some embodiments, subcarriers used by the one or more ID subfields respectively are used for indicating the AID of the first STA.

In some embodiments, the AID of the first STA is indicated by two subcarrier sets, and subcarriers used by the ID subfields respectively belong to one subcarrier set of the two subcarrier sets.

In some embodiments, the subcarriers used by the ID subfields belong to different subcarrier sets of the two subcarrier sets respectively and represent different status information of the first STA respectively.

In some embodiments, a BW of each of the ID subfields is 20MHz, 40MHz, 80MHz, 80+80MHz, 160MHz, or 320MHz.

In some embodiments, the BW of 320MHz is represented by four 80MHz subcarrier set indices. Subcarrier set indices 1-72 are mapped to a first 80MHz, subcarrier set indices 73-144 are mapped to a second 80MHz, subcarrier set indices 145-216 are mapped to a third 80MHz, and subcarrier set indices 217-288 are mapped to a fourth 80MHz.

In some embodiments, the AID of the first STA is indicated by a subcarrier set, and subcarriers used by the ID subfields respectively belong to the subcarrier set.

In some embodiments, CWmin used by channel contention corresponding to the first MAC frame is less than CWmin associated with an EDCA access type AC_VO, and/or CWmax used by the channel contention corresponding to the first MAC frame is less than CWmax associated with the EDCA access type AC_VO.

In some embodiments, the first MAC frame is an RTS frame, or the first MAC frame is an S-RTS frame, or the first MAC frame is a CTS frame, or the first MAC frame is an S-CTS frame, or the first MAC frame is a null frame.

In some embodiments, the first ID field is a UIE field.

In some embodiments, in a case that the first PPDU includes the second MAC frame, a result of channel contention corresponding to the second MAC frame is associated with the number of STAs that need to acquire media to transmit UL data respectively detected by an AP.

The number of STAs that need to acquire media to transmit UL data respectively is acquired by the AP detecting n PPDUs, the n PPDUs include at least the first PPDU, each of PPDUs among the n PPDUs other than the first PPDU includes a first field and a second field, the first field is used for indicating ID information of a STA sending a corresponding PPDU, the second field is used for indicating whether the STA sending the corresponding PPDU needs to acquire a medium to transmit UL data, n is a positive integer, and n is greater than or equal to 2.

In some embodiments, the first field is an HE-LTF or an EHT-LTF or a UHR-LTF, and/or the second field is a feedback status field corresponding to a TB feedback NDP frame.

In some embodiments, the first field is used for indicating the ID information of the STA through a subcarrier used for transmitting the first field, and/or the second field is used for indicating whether the STA needs to acquire the medium to transmit UL data, through a subcarrier used for transmitting the second field.

In some embodiments, in a case that the number of the PPDUs among the n PPDUs other than the first PPDU is is greater than or equal to 2, time domain resources occupied by the PPDUs among the n PPDUs other than the first PPDU are the same, or the PPDUs among the n PPDUs other than the first PPDU are completely overlapping in a time domain.

In some embodiments, the PPDUs among the n PPDUs other than the first PPDU are sent by corresponding STAs respectively after detecting the first PPDU.

In some embodiments, the result of the channel contention corresponding to the second MAC frame is associated with the number of STAs that need to acquire media to transmit UL data respectively detected by the AP, which includes:

in a case that the number of STAs that need to acquire media to transmit UL data respectively detected by the AP is equal to 1, a TXOP associated with the channel contention corresponding to the second MAC frame belongs to the first STA; and/or
in a case that the number of STAs that need to acquire media to transmit UL data respectively detected by the AP is equal to or greater than $K_2$, the TXOP associated with the channel contention corresponding to the second MAC frame belongs to the AP; or, in a case that the number of STAs that need to acquire media to transmit UL data respectively detected by the AP is equal to or greater than $K_2$, the TXOP associated with the channel contention corresponding to the second MAC frame belongs to the first STA, here $K_2$ is a positive integer, and $K_2$ is greater than or equal to 2.

In some embodiments, in a case that the TXOP associated with the channel contention corresponding to the second MAC frame belongs to the AP, n STAs sending the n PPDUs respectively send UL data within the TXOP after receiving a trigger frame sent by the AP.

In some embodiments, in a case that the TXOP associated with the channel contention corresponding to the second MAC frame belongs to the AP, n STAs sending the n PPDUs respectively send UL data and receive DL data within the TXOP after receiving a trigger frame sent by the AP.

In some embodiments, the second MAC frame is an extended NFRP Trigger frame, or the second MAC frame is a MAC frame including an extended TRS Control field, or the second MAC frame is a MAC frame including an NFR Control field.

In some embodiments, in a case that the second MAC frame is the extended NFRP Trigger frame, a user information field in the second MAC frame includes a Feedback Type field. The Feedback Type field is at least used for indicating all STAs receiving the second MAC frame to feed back whether the STAs need to acquire media to transmit UL data respectively.

In some embodiments, in a case that the second MAC frame is the MAC frame including the extended TRS Control field, an aggregation control field in the second MAC frame is the extended TRS Control field. The extended TRS Control field includes an NDP feedback request field, and the NDP feedback request field is used for triggering all STAs receiving the second MAC frame to feed back PPDUs containing the STAs' own identification information respectively.

In some embodiments, each of the PPDUs containing the STA's own identification information is one of:
a UHR MU PPDU, a UHR TB PPDU, a UHR ER PPDU, or a UHR TB feedback NDP.

In some embodiments, in a case that the second MAC frame is the MAC frame including the NFR Control field, an aggregation control field in the second MAC frame is the NFR Control field. The NFR Control field includes a Feedback Type field, and the Feedback Type field is at least used for indicating all STAs receiving the second MAC frame to feed back whether the STAs need to acquire media to transmit UL data respectively.

In some embodiments, the NFR Control field further includes at least one of a Starting AID field, a Number Of IDs field, a Target Receive Power field, or a Number Of Spatially Multiplexed Users field.

The Starting AID field is used for indicating a first AID in an AID range planned to respond to the second MAC frame, the Number Of IDs field is used for indicating the number of fields contained in a triggered PPDU containing an identification field and identifying identity of a sending device, the Target Receive Power field is used for indicating an expected RSP measured at an antenna connector of the first STA and averaged on the antenna, and the Number Of Spatially Multiplexed Users field is used for indicating the number of STAs multiplexed on the same group of subcarriers in the same RU.

In some embodiments, the first PPDU is one of a UHR MU PPDU, a UHR TB PPDU, or a UHR ER PPDU.

In some embodiments, the UL data includes at least UL delay sensitive data.

In some embodiments, the above communication unit may be a communication interface or a transceiver, or an input/output (I/O) interface of a communication chip or a system on chip (SOC). The above processing unit may be one or more processors.

It should be understood that the STA 300 according to the embodiment of the disclosure may correspond to the first STA in the method embodiments of the disclosure, and the above and other operations and/or functions of various units in the STA 300 are intended to implement corresponding processes of the first STA in the method 200 shown in FIG. 13 respectively, which will not be elaborated here for the sake of brevity.

FIG. 34 shows a schematic block diagram of a STA 400 according to an embodiment of the disclosure. The STA

**EP 4 727 238 A1**

400 is a second STA. As shown in FIG. 34, the STA 400 includes a communication unit 410.

The communication unit 410 is configured to receive a first PPDU sent by a first STA with to-be-transmitted UL data.

The first PPDU includes a first MAC frame and a first ID field, the first MAC frame is used for channel contention, and the first ID field is used for indicating an AID of the first STA.

Alternatively, the first PPDU includes a second MAC frame, the second MAC frame is used for channel contention, and the second MAC frame is further used for triggering all STAs receiving the second MAC frame to feed back whether the STAs need to acquire media to transmit UL data respectively.

In some embodiments, in a case that the first PPDU includes the first MAC frame and the first ID field, and the second STA has to-be-transmitted UL data, the communication unit 410 is further configured to send a second ID field after receiving the first MAC frame.

The second ID field is used for indicating an AID of the second STA, and a time domain resource occupied by the second ID field is the same as a time domain resource occupied by the first ID field, or the second ID field and the first ID field are completely overlapping in a time domain.

In some embodiments, before sending the second ID field, the STA 400 further includes a processing unit 420.

The processing unit 420 is configured to set a value of its EDCA backoff counter to zero, or the processing unit 420 is configured to keep the value of its EDCA backoff counter unchanged.

In some embodiments, a result of channel contention corresponding to the first MAC frame is associated with the number of STAs with to-be-transmitted UL data detected by an AP.

The number of STAs with to-be-transmitted UL data is acquired by the AP detecting m ID fields, the m ID fields are used for indicating AIDs of m STAs respectively, the m ID fields include at least the first ID field and the second ID field, m is a positive integer, and m is greater than or equal to 2.

In some embodiments, time domain resources occupied by the m ID fields are the same, or the m ID fields are completely overlapping in the time domain.

In some embodiments, each of other STAs among the m STAs corresponding to the m ID fields respectively than the first STA sends an ID field for identifying the STA's own AID on the time domain resource occupied by the first ID field, after identifying the first MAC frame.

In some embodiments, the first PPDU further includes an RI field.

The RI field is located after the first MAC frame and before the first ID field, and the RI field is used for reserving a time for a receiving side of the first PPDU to convert from a receiving state to a sending state.

In some embodiments, each of the other STAs among the m STAs corresponding to the m ID fields respectively than the first STA sets a value of the STA's Enhanced Distributed Channel Access (EDCA) backoff counter to zero, before sending the ID field for identifying the STA's own AID.

Alternatively, each of the other STAs among the m STAs corresponding to the m ID fields respectively than the first STA keeps a value of the STA's EDCA backoff counter unchanged, before sending the ID field for identifying the STA's own AID.

In some embodiments, the result of the channel contention corresponding to the first MAC frame is associated with the number of STAs with to-be-transmitted UL data detected by the AP, which includes:

in a case that m is greater than or equal to $K_1$, a TXOP associated with the channel contention corresponding to the first MAC frame belongs to the AP; or, in a case that m is greater than or equal to $K_1$, the TXOP associated with the channel contention corresponding to the first MAC frame belongs to the first STA; or, in a case that m is greater than or equal to $K_1$, the TXOP associated with the channel contention corresponding to the first MAC frame belongs to multiple STAs among the m STAs corresponding to the m ID fields respectively.

The multiple STAs include at least the first STA, $K_1$ is a positive integer, and $K_1$ is greater than or equal to 2.

In some embodiments, in a case that the TXOP associated with the channel contention corresponding to the first MAC frame belongs to the AP, the m STAs corresponding to the m ID fields respectively send UL data within the TXOP after receiving a trigger frame sent by the AP.

In some embodiments, in a case that the TXOP associated with the channel contention corresponding to the first MAC frame belongs to the AP, the m STAs corresponding to the m ID fields respectively send UL data and receive DL data within the TXOP after receiving a trigger frame sent by the AP.

In some embodiments, transmission of the first PPDU is associated with a first BW and a first MCS.

In some embodiments, the transmission of the first PPDU is associated with the first BW, and time domain resources of the first MCS occupied by all STAs receiving or detecting the first MAC frame to acquire the first ID field respectively.

In some embodiments, the first ID field is used for indicating the AID of the first STA through a subcarrier used for transmitting the first ID field, and/or the second ID field is used for indicating the AID of the second STA through a subcarrier used for transmitting the second ID field.

In some embodiments, in the first PPDU, the first ID field is located after the first MAC frame.

In some embodiments, the first ID field includes one or more ID subfields. The one or more ID subfields are used for indicating ID information of the first STA.

In some embodiments, the first ID field further includes a UHR-STF.

In some embodiments, the first ID field further includes one or more UHR-LTFs.

In some embodiments, the first ID field further includes a legacy preamble field.

In some embodiments, the legacy preamble field includes an L-STF, an L-LTF, an L-SIG, an RL-SIG, and a U-SIG.

In some embodiments, the legacy preamble field includes an L-STF, an L-LTF, an L-SIG, an RL-SIG, a U-SIG, and a UHR-SIG.

In some embodiments, subcarriers used by the one or more ID subfields respectively are used for indicating the AID of the first STA.

In some embodiments, the AID of the first STA is indicated by two subcarrier sets, and subcarriers used by the ID subfields respectively belong to one subcarrier set of the two subcarrier sets.

In some embodiments, the subcarriers used by the ID subfields belong to different subcarrier sets of the two subcarrier sets respectively and represent different status information of the first STA respectively.

In some embodiments, a BW of each of the ID subfields is 20MHz, 40MHz, 80MHz, 80+80MHz, 160MHz, or 320MHz.

In some embodiments, the BW of 320MHz is represented by four 80MHz subcarrier set indices. Subcarrier set indices 1-72 are mapped to a first 80MHz, subcarrier set indices 73-144 are mapped to a second 80MHz, subcarrier set indices 145-216 are mapped to a third 80MHz, and subcarrier set indices 217-288 are mapped to a fourth 80MHz.

In some embodiments, the AID of the first STA is indicated by a subcarrier set, and subcarriers used by the ID subfields respectively belong to the subcarrier set.

In some embodiments, a format of the second ID field is the same as a format of the first ID field.

In some embodiments, CWmin used by channel contention corresponding to the first MAC frame is less than CWmin associated with an EDCA access type AC_VO, and/or CWmax used by the channel contention corresponding to the first MAC frame is less than CWmax associated with the EDCA access type AC_VO.

In some embodiments, the first MAC frame is an RTS frame, or the first MAC frame is an S-RTS frame, or the first MAC frame is a CTS frame, or the first MAC frame is an S-CTS frame, or the first MAC frame is a null frame.

In some embodiments, each of the first ID field and the second ID field is a UIE field.

In some embodiments, in a case that the first PPDU includes the second MAC frame, and the second STA has to-be-transmitted UL data, the communication unit 410 is further configured to send a second PPDU. The second PPDU includes a first field and a second field, the first field in the second PPDU is used for indicating ID information of the second STA, and the second field in the second PPDU is used for indicating whether the second STA needs to acquire a medium to transmit UL data.

In some embodiments, a result of channel contention corresponding to the second MAC frame is associated with the number of STAs that need to acquire media to transmit UL data respectively detected by an AP. The number of STAs that need to acquire media to transmit UL data respectively is acquired by the AP detecting n PPDUs, the n PPDUs include at least the first PPDU and the second PPDU, each of PPDUs among the n PPDUs other than the first PPDU includes a first field and a second field, the first field is used for indicating ID information of a STA sending a corresponding PPDU, the second field is used for indicating whether the STA sending the corresponding PPDU needs to acquire a medium to transmit UL data, n is a positive integer, and n is greater than or equal to 2.

In some embodiments, in a case that the number of the PPDUs among the n PPDUs other than the first PPDU is greater than or equal to 2, time domain resources occupied by the PPDUs among the n PPDUs other than the first PPDU are the same, or the PPDUs among the n PPDUs other than the first PPDU are completely overlapping in a time domain.

In some embodiments, the PPDUs among the n PPDUs other than the first PPDU are sent by corresponding STAs respectively after detecting the first PPDU.

In some embodiments, the first field is an HE-LTF or an EHT-LTF or a UHR-LTF, and/or the second field is a feedback status field corresponding to a TB feedback NDP frame.

In some embodiments, the first field is used for indicating the ID information of the STA through a subcarrier used for transmitting the first field, and/or the second field is used for indicating whether the STA needs to acquire the medium to transmit UL data, through a subcarrier used for transmitting the second field.

In some embodiments, a result of channel contention corresponding to the second MAC frame is associated with the number of STAs that need to acquire media to transmit UL data respectively detected by an AP, which includes:

in a case that the number of STAs that need to acquire media to transmit UL data respectively detected by the AP is equal to or greater than $K_2$, a TXOP associated with the channel contention corresponding to the second MAC frame belongs to the AP; or, in a case that the number of STAs that need to acquire media to transmit UL data respectively detected by the AP is equal to or greater than $K_2$, the TXOP associated with the channel contention corresponding to the second MAC frame belongs to the first STA.

$K_2$ is a positive integer, and $K_2$ is greater than or equal to 2.

In some embodiments, in a case that the TXOP associated with the channel contention corresponding to the second MAC frame belongs to the AP, n STAs sending n PPDUs respectively send UL data within the TXOP after receiving a trigger frame sent by the AP.

In some embodiments, in a case that the TXOP associated with the channel contention corresponding to the second MAC frame belongs to the AP, n STAs sending n PPDUs respectively send UL data and receive DL data within the TXOP after receiving a trigger frame sent by the AP.

In some embodiments, the second MAC frame is an extended NFRP Trigger frame, or the second MAC frame is a MAC frame including an extended TRS Control field, or the second MAC frame is a MAC frame including an NFR Control field.

In some embodiments, in a case that the second MAC frame is the extended NFRP Trigger frame, a user information field in the second MAC frame includes a Feedback Type field. The Feedback Type field is at least used for indicating all STAs receiving the second MAC frame to feed back whether the STAs need to acquire media to transmit UL data respectively.

In some embodiments, in a case that the second MAC frame is the MAC frame including the extended TRS Control field, an aggregation control field in the second MAC frame is the extended TRS Control field. The extended TRS Control field includes an NDP feedback request field, and the NDP feedback request field is used for triggering all STAs receiving the second MAC frame to feed back PPDUs containing the STAs' own identification information respectively.

In some embodiments, each of the PPDUs containing the STA's own identification information is one of: a UHR MU PPDU, a UHR TB PPDU, a UHR ER PPDU, or a UHR TB feedback NDP.

In some embodiments, in a case that the second MAC frame is the MAC frame including the NFR Control field, an aggregation control field in the second MAC frame is the NFR Control field. The NFR Control field includes a Feedback Type field, and the Feedback Type field is at least used for indicating all STAs receiving the second MAC frame to feed back whether the STAs need to acquire media to transmit UL data respectively.

In some embodiments, the NFR Control field further includes at least one of a Starting AID field, a Number Of IDs field, a Target Receive Power field, or a Number Of Spatially Multiplexed Users field.

The Starting AID field is used for indicating a first AID in an AID range planned to respond to the second MAC frame, the Number Of IDs field is used for indicating the number of fields contained in a triggered PPDU containing an identification field and identifying identity of a sending device, the Target Receive Power field is used for indicating an expected RSP measured at an antenna connector of the first STA and averaged on the antenna, and the Number Of Spatially Multiplexed Users field is used for indicating the number of STAs multiplexed on the same group of subcarriers in the same RU.

In some embodiments, the first PPDU is one of a UHR MU PPDU, a UHR TB PPDU, or a UHR ER PPDU.

In some embodiments, the UL data includes at least UL delay sensitive data.

In some embodiments, the above communication unit may be a communication interface or a transceiver, or an I/O interface of a communication chip or a SOC. The above processing unit may be one or more processors.

It should be understood that the STA 400 according to the embodiment of the disclosure may correspond to the second STA in the method embodiments of the disclosure, and the above and other operations and/or functions of various units in the STA 400 are intended to implement corresponding processes of the second STA in the method 200 shown in FIG. 13 respectively, which will not be elaborated here for the sake of brevity.

FIG. 35 shows a schematic block diagram of an AP 500 according to an embodiment of the disclosure. As shown in FIG. 35, the AP 500 includes a communication unit 510.

The communication unit 510 is configured to receive a first PPDU sent by a first STA with to-be-transmitted UL data.

The first PPDU includes a first MAC frame and a first ID field, the first MAC frame is used for channel contention, and the first ID field is used for indicating an AID of the first STA.

Alternatively, the first PPDU includes a second MAC frame, the second MAC frame is used for channel contention, and the second MAC frame is further used for triggering all STAs receiving the second MAC frame to feed back whether the STAs need to acquire media to transmit UL data respectively.

In some embodiments, in a case that the first PPDU includes the first MAC frame and the first ID field, a result of channel contention corresponding to the first MAC frame is associated with the number of STAs with to-be-transmitted UL data detected by the AP.

The number of STAs with to-be-transmitted UL data is acquired by the AP detecting m ID fields, the m ID fields are used for indicating AIDs of m STAs respectively, the m ID fields include at least the first ID field, m is a positive integer, and m is equal to 1, or m is greater than or equal to 2.

In some embodiments, in a case that m is greater than or equal to 2, time domain resources occupied by the m ID fields are the same, or the m ID fields are completely overlapping in a time domain.

In some embodiments, each of other STAs among the m STAs corresponding to the m ID fields respectively than the first STA sends an ID field for identifying the STA's own AID on a time domain resource occupied by the first ID field, after identifying the first MAC frame.

In some embodiments, the first PPDU further includes an RI field.

The RI field is located after the first MAC frame and before the first ID field, and the RI field is used for reserving a time for a receiving side of the first PPDU to convert from a receiving state to a sending state.

In some embodiments, each of the other STAs among the m STAs corresponding to the m ID fields respectively than the first STA sets a value of the STA's Enhanced Distributed Channel Access (EDCA) backoff counter to zero, before sending the ID field for identifying the STA's own AID.

Alternatively, each of the other STAs among the m STAs corresponding to the m ID fields respectively than the first STA keeps a value of the STA's EDCA backoff counter unchanged, before sending the ID field for identifying the STA's own AID.

In some embodiments, in a case that m is greater than or equal to 2, the m ID fields are carried by m PPDUs respectively. Time domain resources occupied by the m PPDUs are the same, or the m PPDUs are completely overlapping in a time domain.

In some embodiments, the m PPDUs include MAC frames used for channel contention respectively, and frame formats of the MAC frames used for channel contention and included in the m PPDUs are the same.

In some embodiments, the STAs corresponding to the m ID fields respectively use the same EDCA access type, and values of EDCA backoff counters of the STAs corresponding to the m ID fields respectively are the same.

In some embodiments, the result of the channel contention corresponding to the first MAC frame is associated with the number of STAs with to-be-transmitted UL data detected by the AP, which includes:

in a case that m is equal to 1, a TXOP associated with the channel contention corresponding to the first MAC frame belongs to the first STA; and/or

in a case that m is greater than or equal to $K_1$, the TXOP associated with the channel contention corresponding to the first MAC frame belongs to the AP; or, in a case that m is greater than or equal to $K_1$, the TXOP associated with the channel contention corresponding to the first MAC frame belongs to the first STA; or, in a case that m is greater than or equal to $K_1$, the TXOP associated with the channel contention corresponding to the first MAC frame belongs to multiple STAs among the m STAs corresponding to the m ID fields respectively, here the multiple STAs include at least the first STA, $K_1$ is a positive integer, and $K_1$ is greater than or equal to 2.

In some embodiments, in a case that the TXOP associated with the channel contention corresponding to the first MAC frame belongs to the AP, the m STAs corresponding to the m ID fields respectively send UL data within the TXOP after receiving a trigger frame sent by the AP.

In some embodiments, in a case that the TXOP associated with the channel contention corresponding to the first MAC frame belongs to the AP, the m STAs corresponding to the m ID fields respectively send UL data and receive DL data within the TXOP after receiving the trigger frame sent by the AP.

In some embodiments, transmission of the first PPDU is associated with a first BW and a first MCS.

In some embodiments, the transmission of the first PPDU is associated with the first BW, and time domain resources of the first MCS occupied by all STAs receiving or detecting the first MAC frame to acquire the first ID field respectively.

In some embodiments, the first ID field is used for indicating the AID of the first STA through a subcarrier used for transmitting the first ID field.

In some embodiments, in the first PPDU, the first ID field is located after the first MAC frame.

In some embodiments, the first ID field includes one or more ID subfields. The one or more ID subfields are used for indicating ID information of the first STA.

In some embodiments, the first ID field further includes a UHR-STF.

In some embodiments, the first ID field further includes one or more UHR-LTFs.

In some embodiments, the first ID field further includes a legacy preamble field.

In some embodiments, the legacy preamble field includes an L-STF, an L-LTF, an L-SIG, an RL-SIG, and a U-SIG.

In some embodiments, the legacy preamble field includes an L-STF, an L-LTF, an L-SIG, an RL-SIG, a U-SIG, and a UHR-SIG.

In some embodiments, subcarriers used by the one or more ID subfields respectively are used for indicating the AID of the first STA.

In some embodiments, the AID of the first STA is indicated by two subcarrier sets, and subcarriers used by the ID subfields respectively belong to one subcarrier set of the two subcarrier sets.

In some embodiments, the subcarriers used by the ID subfields belong to different subcarrier sets of the two subcarrier sets respectively and represent different status information of the first STA respectively.

In some embodiments, a BW of each of the ID subfields is 20MHz, 40MHz, 80MHz, 80+80MHz, 160MHz, or 320MHz.

In some embodiments, the BW of 320MHz is represented by four 80MHz subcarrier set indices. Subcarrier set indices 1-72 are mapped to a first 80MHz, subcarrier set indices 73-144 are mapped to a second 80MHz, subcarrier set indices 145-216 are mapped to a third 80MHz, and subcarrier set indices 217-288 are mapped to a fourth 80MHz.

In some embodiments, the AID of the first STA is indicated by a subcarrier set, and subcarriers used by the ID subfields respectively belong to the subcarrier set.

In some embodiments, CWmin used by channel contention corresponding to the first MAC frame is less than CWmin associated with an EDCA access type AC_VO, and/or CWmax used by the channel contention corresponding to the first MAC frame is less than CWmax associated with the EDCA access type AC_VO.

In some embodiments, the first MAC frame is an RTS frame, or the first MAC frame is an S-RTS frame, or the first MAC frame is a CTS frame, or the first MAC frame is an S-CTS frame, or the first MAC frame is a null frame.

In some embodiments, the first ID field is a UIE field.

In some embodiments, in a case that the first PPDU includes the second MAC frame, a result of channel contention corresponding to the second MAC frame is associated with the number of STAs that need to acquire media to transmit UL data respectively detected by the AP.

The number of STAs that need to acquire media to transmit UL data respectively is acquired by the AP detecting n PPDUs, the n PPDUs include at least the first PPDU, each of PPDUs among the n PPDUs other than the first PPDU includes a first field and a second field, the first field is used for indicating ID information of a STA sending a corresponding PPDU, the second field is used for indicating whether the STA sending the corresponding PPDU needs to acquire a medium to transmit UL data, n is a positive integer, and n is greater than or equal to 2.

In some embodiments, the first field is an HE-LTF or an EHT-LTF or a UHR-LTF, and/or the second field is a feedback status field corresponding to a TB feedback NDP frame.

In some embodiments, the first field is used for indicating the ID information of the STA by a subcarrier used for transmitting the first field, and/or the second field is used for indicating whether the STA needs to acquire the medium to transmit UL data, through a subcarrier used for transmitting the second field.

In some embodiments, in a case that the number of the PPDUs among the n PPDUs other than the first PPDU is greater than or equal to 2, time domain resources occupied by the PPDUs among the n PPDUs other than the first PPDU are the same, or the PPDUs among the n PPDUs other than the first PPDU are completely overlapping in a time domain.

In some embodiments, the PPDUs among the n PPDUs other than the first PPDU are sent by corresponding STAs respectively after detecting the first PPDU.

In some embodiments, the result of the channel contention corresponding to the second MAC frame is associated with the number of STAs that need to acquire media to transmit UL data respectively detected by the AP, which includes:

in a case that the number of STAs that need to acquire media to transmit UL data respectively detected by the AP is equal to 1, a TXOP associated with the channel contention corresponding to the second MAC frame belongs to the first STA; and/or

in a case that the number of STAs that need to acquire media to transmit UL data respectively detected by the AP is equal to or greater than $K_2$, the TXOP associated with the channel contention corresponding to the second MAC frame belongs to the AP; or, in a case that the number of STAs that need to acquire media to transmit UL data respectively detected by the AP is equal to or greater than $K_2$, the TXOP associated with the channel contention corresponding to the second MAC frame belongs to the first STA, here $K_2$ is a positive integer, and $K_2$ is greater than or equal to 2.

In some embodiments, in a case that the TXOP associated with the channel contention corresponding to the second MAC frame belongs to the AP, n STAs sending the n PPDUs respectively send UL data within the TXOP after receiving a trigger frame sent by the AP.

In some embodiments, in a case that the TXOP associated with the channel contention corresponding to the second MAC frame belongs to the AP, n STAs sending the n PPDUs respectively send UL data and receive DL data within the TXOP after receiving the trigger frame sent by the AP.

In some embodiments, the second MAC frame is an extended NFRP Trigger frame, or the second MAC frame is a MAC frame including an extended TRS Control field, or the second MAC frame is a MAC frame including an NFR Control field.

In some embodiments, in a case that the second MAC frame is the extended NFRP Trigger frame, a user information field in the second MAC frame includes a Feedback Type field. The Feedback Type field is at least used for indicating all STAs receiving the second MAC frame to feed back whether the STAs need to acquire media to transmit UL data respectively.

In some embodiments, in a case that the second MAC frame is the MAC frame including the extended TRS Control field, an aggregation control field in the second MAC frame is the extended TRS Control field. The extended TRS Control field includes an NDP feedback request field, and the NDP feedback request field is used for triggering all STAs receiving the second MAC frame to feed back PPDUs containing the STAs' own identification information respectively.

In some embodiments, each of the PPDUs containing the STA's own identification information is one of: a UHR MU PPDU, a UHR TB PPDU, a UHR ER PPDU, or a UHR TB feedback NDP.

In some embodiments, in a case that the second MAC frame is the MAC frame including the NFR Control field, an aggregation control field in the second MAC frame is the NFR Control field. The NFR Control field includes a Feedback Type field, and the Feedback Type field is at least used for indicating all STAs receiving the second MAC frame to feed back whether the STAs need to acquire media to transmit UL data respectively.

In some embodiments, the NFR Control field further includes at least one of a Starting AID field, a Number Of IDs field, a Target Receive Power field, or a Number Of Spatially Multiplexed Users field.

The Starting AID field is used for indicating a first AID in an AID range planned to respond to the second MAC frame, the Number Of IDs field is used for indicating the number of fields contained in a triggered PPDU containing an identification field and identifying identity of a sending device, the Target Receive Power field is used for indicating an expected RSP measured at an antenna connector of the first STA and averaged on the antenna, and the Number Of Spatially Multiplexed Users field is used for indicating the number of STAs multiplexed on the same group of subcarriers in the same RU.

In some embodiments, the first PPDU is one of a UHR MU PPDU, a UHR TB PPDU, or a UHR ER PPDU.

In some embodiments, the UL data includes at least UL delay sensitive data.

In some embodiments, the above communication unit may be a communication interface or a transceiver, or an I/O interface of a communication chip or a SOC. The above processing unit may be one or more processors.

It should be understood that the AP 500 according to the embodiment of the disclosure may correspond to the AP in the method embodiments of the disclosure, and the above and other operations and/or functions of various units in the AP 500 are intended to implement corresponding processes of the AP in the method 200 shown in FIG. 13 respectively, which will not be elaborated here for the sake of brevity.

FIG. 36 shows a schematic structural diagram of a communication device 600 according to an embodiment of the disclosure. The communication device 600 shown in FIG. 36 may include a processor 610. The processor 610 may call and execute a computer program from a memory to implement the methods in the embodiments of the disclosure.

In some embodiments, as shown in FIG. 36, the communication device 600 may further include a memory 620. The processor 610 may call and execute a computer program from the memory 620 to implement the methods in the embodiments of the disclosure.

The memory 620 may be a separate device independent of the processor 610, or may be integrated into the processor 610.

In some embodiments, as shown in FIG. 36, the communication device 600 may further include a transceiver 630. The processor 610 may control the transceiver 630 to communicate with other devices. Specifically, the processor 610 may control the transceiver 630 to send information or data to other devices, or to receive information or data sent by other devices.

The transceiver 630 may include a transmitter and a receiver. The transceiver 630 may further include antenna, and there may be one or more antennas.

In some embodiments, the processor 610 may implement functions of the processing unit in the STA, or the processor 610 may implement functions of the processing unit in the AP, which will not be elaborated here for the sake of brevity.

In some embodiments, the transceiver 630 may implement functions of the communication unit in the STA, which will not be elaborated here for the sake of brevity.

In some embodiments, the transceiver 630 may implement functions of the communication unit in the AP, which will not be elaborated here for the sake of brevity.

In some embodiments, the communication device 600 may specifically be the AP in the embodiments of the disclosure, and the communication device 600 may implement corresponding processes implemented by the AP in the methods according to the embodiments of the disclosure, which will not be elaborated here for the sake of brevity.

In some embodiments, the communication device 600 may specifically be the STA in the embodiments of the disclosure, and the communication device 600 may implement corresponding processes implemented by the first STA or the second STA in the methods according to the embodiments of the disclosure, which will not be elaborated here for the sake of brevity.

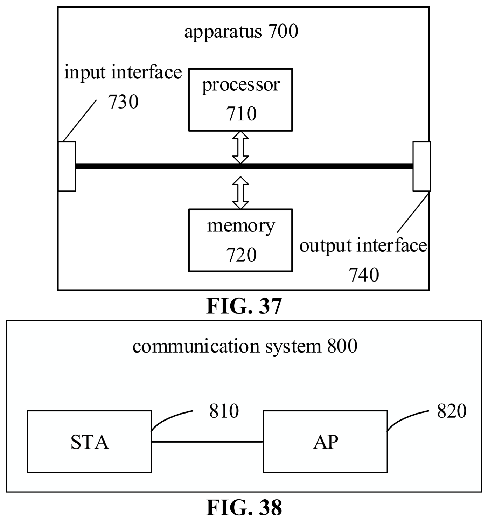

FIG. 37 is a schematic structural diagram of an apparatus according to an embodiment of the disclosure. The apparatus 700 shown in FIG. 37 may include a processor 710. The processor 710 may call and execute a computer program from a memory to implement the methods in the embodiments of the disclosure.

In some embodiments, as shown in FIG. 37, the apparatus 700 may further include a memory 720. The processor 710 may call and execute a computer program from the memory 720 to implement the methods in the embodiments of the disclosure.

The memory 720 may be a separate device independent of the processor 710, or may be integrated into the processor 710.

In some embodiments, the processor 710 may implement functions of the processing unit in the STA, or the processor 710 may implement functions of the processing unit in the AP, which will not be elaborated here for the sake of brevity.

In some embodiments, as shown in FIG. 37, the apparatus 700 may further include an input interface 730. The processor 710 may control the input interface 730 to communicate with other devices or chips, and specifically, the processor 710 may control the input interface 730 to acquire information or data sent by other devices or chips. Optionally, the processor 710 may be located in or out of the chip.

In some embodiments, the input interface 730 may implement functions of the communication unit in the STA, or the input interface 730 may implement functions of the communication unit in the AP.

In some embodiments, the apparatus 700 may further include an output interface 740. The processor 710 may control the output interface 740 to communicate with other devices or chips, and specifically, the processor 710 may control the output interface 740 to output information or data to other devices or chips. Optionally, the processor 710 may be located in or out of the chip.

In some embodiments, the output interface 740 may implement functions of the communication unit in the STA, or the output interface 740 may implement functions of the communication unit in the AP.

In some embodiments, the apparatus may be applied to the AP in the embodiments of the disclosure, and the apparatus may implement corresponding processes implemented by the AP in the methods according to the embodiments of the disclosure, which will not be elaborated here for the sake of brevity.

In some embodiments, the apparatus may be applied to the STA in the embodiments of the disclosure, and the apparatus may implement corresponding processes implemented by the first STA or the second STA in the methods according to the embodiments of the disclosure, which will not be elaborated here for the sake of brevity.

In some embodiments, the apparatus mentioned in the embodiment of the disclosure may also be a chip. For example, the chip may be a system-level chip, a system chip, a chip system, or a SOC, etc.

FIG. 38 is a schematic block diagram of a communication system 800 according to an embodiment of the disclosure. As shown in FIG. 38, the communication system 800 includes a STA 810 and an AP 820.

The STA 810 may be configured to implement corresponding functions implemented by the first STA or the second STA in the above methods, and the AP 820 may be configured to implement corresponding functions implemented by the AP in the above methods, which will not be elaborated here for the sake of brevity.

It should be understood that the processor in the embodiments of the disclosure may be an integrated circuit chip with a signal processing capability. During implementation, each operation in the above method embodiments may be completed by an integrated logical circuit in a form of hardware in the processor or instructions in a form of software. The above processor may be a general purpose processor, a Digital Signal Processor (DSP), an ASIC, a Field Programmable Gate Array (FPGA) or other programmable logical devices, a discrete gate or transistor logical device, and a discrete hardware component. Each method, operation and logical block diagram disclosed in the embodiments of the disclosure may be implemented or performed. The general purpose processor may be a microprocessor, or the processor may be any conventional processor, etc. Operations in the methods disclosed in combination with the embodiments of the disclosure may be directly embodied as being performed and completed by a hardware decoding processor, or performed and completed by a combination of hardware in the decoding processor and a software module. The software module may be located in a mature storage medium in this field such as a Random Access Memory (RAM), a flash memory, a Read-Only Memory (ROM), a Programmable ROM (PROM) or Electrically Erasable PROM (EEPROM), a register, etc. The storage medium is located in a memory, and the processor reads information in the memory, and completes the operations in the above methods in combination with the hardware thereof.

It may be understood that the memory in the embodiments of the disclosure may be a volatile memory or a non-volatile memory, or may include both the volatile and non-volatile memories. The non-volatile memory may be a ROM, a PROM, an Erasable PROM (EPROM), an EEPROM or a flash memory. The volatile memory may be a RAM, which is used as an external high-speed cache. Through an exemplary rather than limiting description, many forms of RAMs are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It should be noted that the memory in the system and method described in the disclosure is intended to include, but is not limited to these memories and any other suitable types of memories.

It should be understood that the above memory is an exemplary rather than limiting description. For example, the memory in the embodiments of the disclosure may also be an SRAM, a DRAM, an SDRAM, a DDR SDRAM, an ESDRAM, an SLDRAM, a DR RAM, etc. That is, the memory in the embodiments of the disclosure is intended to include, but is not limited to these memories and any other suitable types of memories.

An embodiment of the disclosure further provides a computer-readable storage medium, the computer-readable storage medium is configured to store a computer program.

In some embodiments, the computer-readable storage medium may be applied to the AP in the embodiments of the disclosure, and the computer program enables a computer to perform corresponding processes implemented by the AP in the methods according to the embodiments of the disclosure, which will not be elaborated here for the sake of brevity.

In some embodiments, the computer-readable storage medium may be applied to the STA in the embodiments of the disclosure, and the computer program enables a computer to perform corresponding processes implemented by the first STA or the second STA in the methods according to the embodiments of the disclosure, which will not be elaborated here for the sake of brevity.

An embodiment of the disclosure further provides a computer program product, the computer program product includes computer program instructions.

In some embodiments, the computer program product may be applied to the AP in the embodiments of the disclosure, and the computer program instructions enable a computer to perform corresponding processes implemented by the AP in the methods according to the embodiments of the disclosure, which will not be elaborated here for the sake of brevity.

In some embodiments, the computer program product may be applied to the STA in the embodiments of the disclosure, and the computer program instructions enable a computer to perform corresponding processes implemented by the first STA or the second STA in the methods according to the embodiments of the disclosure, which will not be elaborated here for the sake of brevity.

An embodiment of the disclosure further provides a computer program.

In some embodiments, the computer program may be applied to the AP in the embodiments of the disclosure, and when the computer program is executed in a computer, the computer program enables the computer to perform corresponding processes implemented by the AP in the methods according to the embodiments of the disclosure, which will not be elaborated here for the sake of brevity.

In some embodiments, the computer program may be applied to the STA in the embodiments of the disclosure, and when the computer program is executed in a computer, the computer program enables the computer to perform corresponding processes implemented by the first STA or the second STA in the methods according to the embodiments of the disclosure, which will not be elaborated here for the sake of brevity.

It may be appreciated by those of ordinary skill in the art that the units and algorithm steps of examples described in combination with the embodiments disclosed in the disclosure may be implemented by electronic hardware or a combination of computer software and the electronic hardware. Whether these functions are performed in a hardware or software manner, depends on specific applications and design constraints of the technical solutions. Professionals may implement the described functions by using different methods for each specific application; however, such implementation should not be considered as going beyond the scope of the disclosure.

It may be clearly understood by those skilled in the art that specific operation processes of the above system, apparatus and unit may refer to corresponding processes in the foregoing method embodiments and will not be elaborated here, for the convenience and brevity of descriptions.

In several embodiments according to the disclosure, it should be understood that the disclosed system, apparatus and method may be implemented in other manners. For example, the above apparatus embodiments are schematic only. For example, division of the units is only a logic function division, and there may be other division manners during an actual implementation. For example, multiple units or components may be combined or integrated into another system, or some features may be ignored or may not be performed. Furthermore, coupling or direct coupling or communicative connection between displayed or discussed components may be indirect coupling or communicative connection of the apparatus or the units implemented through some interfaces, and may be in electrical, mechanical or other forms.

The units described as separate components may be or may not be physically separated, and components displayed as units may be or may not be physical units, that is, they may be located at a place, or may be distributed to multiple network units. Part or all of the units may be selected to achieve the purpose of the solutions in the embodiments according to actual requirements.

Furthermore, each functional unit in the embodiments of the disclosure may be integrated into a processing unit, or each unit may physically exist separately, or two or more units may be integrated into a unit.

If the function is implemented in a form of software functional unit and is sold or used as an independent product, the function may be stored in a computer-readable storage medium. Based on such understanding, the technical solutions of the disclosure substantially, or parts making contributions to the related art, or part of the technical solutions may be embodied in a form of software product, and the computer software product is stored in a storage medium, and includes several instructions configured to enable a computer device (which may be a personal computer, a server, or a network device, etc.) to perform all or part of operations of the methods described in the embodiments of the disclosure. The foregoing storage medium includes various media capable of storing program codes, such as a U disk, a mobile hard disk, a ROM, a RAM, a magnetic disk, or an optical disk, etc.

The above descriptions are only specific implementations of the disclosure, however, the scope of protection of the disclosure is not limited thereto. Variation or replacement easily conceived by any technician familiar with this technical field within the technical scope disclosed in the disclosure, should fall within the scope of protection of the disclosure. Therefore, the scope of protection of the disclosure shall be subject to the scope of protection of the claims.

**Claims**

1. A method for wireless communication, applied to a first station (STA) with to-be-transmitted uplink (UL) data, the method comprising:

   sending, by the first STA, a first Physical Layer Protocol Data Unit (PPDU),
   wherein the first PPDU comprises a first Media Access Control (MAC) frame and a first identification (ID) field, the first MAC frame is used for channel contention, and the first ID field is used for indicating an Association Identifier (AID) of the first STA; or
   the first PPDU comprises a second MAC frame, the second MAC frame is used for channel contention, and the second MAC frame is further used for triggering all STAs receiving the second MAC frame to feed back whether the STAs need to acquire media to transmit UL data respectively.

2. The method of claim 1, wherein in a case that the first PPDU comprises the first MAC frame and the first ID field, a result of channel contention corresponding to the first MAC frame is associated with a number of STAs with to-be-transmitted UL data detected by an Access Point (AP), and
   wherein the number of STAs with to-be-transmitted UL data is acquired by the AP detecting m ID fields, the m ID fields are used for indicating AIDs of m STAs respectively, the m ID fields comprise at least the first ID field, m is a positive integer, and m is equal to 1, or m is greater than or equal to 2.

3. The method of claim 2, wherein in a case that m is greater than or equal to 2, time domain resources occupied by the m ID fields are the same, or the m ID fields are completely overlapping in a time domain.

4. The method of claim 3, wherein each of other STAs among the m STAs corresponding to the m ID fields respectively than the first STA sends an ID field for identifying the STA's own AID on a time domain resource occupied by the first ID field, after identifying the first MAC frame.

5. The method of claim 4, wherein the first PPDU further comprises a Reverse Interval (RI) field, and
   wherein the RI field is located after the first MAC frame and before the first ID field, and the RI field is used for reserving a time for a receiving side of the first PPDU to convert from a receiving state to a sending state.

6. The method of claim 4 or 5, wherein each of the other STAs among the m STAs corresponding to the m ID fields respectively than the first STA sets a value of the STA's Enhanced Distributed Channel Access (EDCA) backoff counter to zero, before sending the ID field for identifying the STA's own AID; or
   each of the other STAs among the m STAs corresponding to the m ID fields respectively than the first STA keeps a value of the STA's EDCA backoff counter unchanged, before sending the ID field for identifying the STA's own AID.

7. The method of claim 2, wherein in a case that m is greater than or equal to 2, the m ID fields are carried by m PPDUs respectively, and
   wherein time domain resources occupied by the m PPDUs are the same, or the m PPDUs are completely overlapping in a time domain.

8. The method of claim 7, wherein each of the m PPDUs comprises an MAC frame used for channel contention, and frame formats of the MAC frames used for channel contention comprised in the m PPDUs are the same.

9. The method of claim 7 or 8, wherein the STAs corresponding to the m ID fields respectively use a same EDCA access type, and values of EDCA backoff counters of the STAs corresponding to the m ID fields respectively are the same.

10. The method of any one of claims 2 to 9, wherein the result of the channel contention corresponding to the first MAC frame is associated with the number of STAs with to-be-transmitted UL data detected by the AP, comprising:

    in a case that m is equal to 1, a Transmission Opportunity (TXOP) associated with the channel contention corresponding to the first MAC frame belongs to the first STA; and/or

in a case that m is greater than or equal to $K_1$, the TXOP associated with the channel contention corresponding to the first MAC frame belongs to the AP; or, in a case that m is greater than or equal to $K_1$, the TXOP associated with the channel contention corresponding to the first MAC frame belongs to the first STA; or, in a case that m is greater than or equal to $K_1$, the TXOP associated with the channel contention corresponding to the first MAC frame belongs to a plurality of STAs among the m STAs corresponding to the m ID fields respectively, wherein the plurality of STAs comprise at least the first STA, $K_1$ is a positive integer, and $K_1$ is greater than or equal to 2.

11. The method of claim 10, wherein in a case that the TXOP associated with the channel contention corresponding to the first MAC frame belongs to the AP, the m STAs corresponding to the m ID fields respectively send UL data within the TXOP after receiving a trigger frame sent by the AP.

12. The method of claim 10, wherein in a case that the TXOP associated with the channel contention corresponding to the first MAC frame belongs to the AP, the m STAs corresponding to the m ID fields respectively send UL data and receive downlink (DL) data within the TXOP after receiving a trigger frame sent by the AP.

13. The method of any one of claims 2 to 12, wherein transmission of the first PPDU is associated with a first BandWidth (BW) and a first Modulation and Coding Scheme (MCS).

14. The method of claim 13, wherein the transmission of the first PPDU is associated with the first BW, and time domain resources of the first MCS occupied by all STAs receiving or detecting the first MAC frame to acquire the first ID field respectively.

15. The method of any one of claims 2 to 14, wherein the first ID field is used for indicating the AID of the first STA through a subcarrier used for transmitting the first ID field.

16. The method of any one of claims 2 to 15, wherein in the first PPDU, the first ID field is located after the first MAC frame.

17. The method of any one of claims 2 to 16, wherein the first ID field comprises one or more ID subfields, and wherein the one or more ID subfields are used for indicating ID information of the first STA.

18. The method of claim 17, wherein the first ID field further comprises an Ultra High Reliability Short Training Field (UHR-STF).

19. The method of claim 17 or 18, wherein the first ID field further comprises one or more Ultra High Reliability Long Training Fields (UHR-LTFs).

20. The method of any one of claims 17 to 19, wherein the first ID field further comprises a legacy preamble field.

21. The method of claim 20, wherein the legacy preamble field comprises a Legacy Short Training Field (L-STF), a Legacy Long Training Field (L-LTF), a legacy signal (L-SIG), a repeat legacy Signal (RL-SIG), and a unify signal (U-SIG).

22. The method of claim 20, wherein the legacy preamble field comprises a Legacy Short Training Field (L-STF), a Legacy Long Training Field (L-LTF), a legacy signal (L-SIG), a repeat legacy signal (RL-SIG), a unify signal (U-SIG), and an Ultra High Reliability Signal (UHR-SIG).

23. The method of any one of claims 17 to 22, wherein subcarriers used by the one or more ID subfields respectively are used for indicating the AID of the first STA.

24. The method of any one of claims 17 to 23, wherein the AID of the first STA is indicated by two subcarrier sets, and subcarriers used by the ID subfields belong to one subcarrier set of the two subcarrier sets.

25. The method of claim 24, wherein the subcarriers used by the ID subfields belong to different subcarrier sets of the two subcarrier sets and represent different status information of the first STA respectively.

26. The method of claim 24 or 25, wherein a BandWidth (BW) of each of the ID subfields is 20MHz, 40MHz, 80MHz, 80+80MHz, 160MHz, or 320MHz.

27. The method of claim 26, wherein the BW of 320MHz is represented by four 80MHz subcarrier set indices, and wherein subcarrier set indices 1-72 are mapped to a first 80MHz, subcarrier set indices 73-144 are mapped to a second 80MHz, subcarrier set indices 145-216 are mapped to a third 80MHz, and subcarrier set indices 217-288 are mapped to a fourth 80MHz.

28. The method of any one of claims 17 to 23, wherein the AID of the first STA is indicated by a subcarrier set, and subcarriers used by the ID subfields belong to the subcarrier set.

29. The method of any one of claims 2 to 28, wherein CWmin used for channel contention corresponding to the first MAC frame is less than CWmin associated with an Enhanced Distributed Channel Access (EDCA) access type AC_VO, and/or CWmax used for the channel contention corresponding to the first MAC frame is less than CWmax associated with the EDCA access type AC_VO.

30. The method of any one of claims 2 to 29, wherein the first MAC frame is a Request To Send (RTS) frame, or the first MAC frame is a Sharing Request To Send (S-RTS) frame, or the first MAC frame is a Clear To Send (CTS) frame, or the first MAC frame is a Sharing Clear To Send (S-CTS) frame, or the first MAC frame is a null frame.

31. The method of any one of claims 2 to 30, wherein the first ID field is a User Identifying Extension (UIE) field.

32. The method of claim 1, wherein in a case that the first PPDU comprises the second MAC frame, a result of channel contention corresponding to the second MAC frame is associated with the number of STAs that need to acquire media to transmit UL data respectively detected by an Access Point (AP), and
wherein the number of STAs that need to acquire media to transmit UL data respectively is acquired by the AP detecting n PPDUs, the n PPDUs comprise at least the first PPDU, each of PPDUs among the n PPDUs other than the first PPDU comprises a first field and a second field, the first field is used for indicating ID information of a STA sending a corresponding PPDU, the second field is used for indicating whether the STA sending the corresponding PPDU needs to acquire a medium to transmit UL data, n is a positive integer, and n is greater than or equal to 2.

33. The method of claim 32, wherein the first field is a High Efficiency Long Training Field (HE-LTF) or an Extremely High Throughput Long Training Field (EHT-LTF) or an Ultra High Reliability Long Training Field (UHR-LTF), and/or the second field is a feedback status field corresponding to a Trigger Based Feedback Null Data Physical Protocol Data Unit (TB feedback NDP) frame.

34. The method of claim 32 or 33, wherein the first field is used for indicating the ID information of the STA through a subcarrier used for transmitting the first field, and/or the second field is used for indicating, through a subcarrier used for transmitting the second field, whether the STA needs to acquire the medium to transmit UL data.

35. The method of any one of claims 32 to 34, wherein in a case that the number of PPDUs among the n PPDUs other than the first PPDU is greater than or equal to 2, time domain resources occupied by the PPDUs among the n PPDUs other than the first PPDU are the same, or the PPDUs among the n PPDUs other than the first PPDU are completely overlapping in a time domain.

36. The method of any one of claims 32 to 35, wherein the PPDUs among the n PPDUs other than the first PPDU are sent by corresponding STAs respectively after detecting the first PPDU.

37. The method of any one of claims 32 to 36, wherein the result of the channel contention corresponding to the second MAC frame is associated with the number of STAs that need to acquire media to transmit UL data respectively detected by the AP, comprising:

in a case that the number of STAs that need to acquire media to transmit UL data respectively detected by the AP is equal to 1, a Transmission Opportunity (TXOP) associated with the channel contention corresponding to the second MAC frame belongs to the first STA; and/or
in a case that the number of STAs that need to acquire media to transmit UL data respectively detected by the AP is equal to or greater than $K_2$, the TXOP associated with the channel contention corresponding to the second MAC frame belongs to the AP; or, in a case that the number of STAs that need to acquire media to transmit UL data respectively detected by the AP is equal to or greater than $K_2$, the TXOP associated with the channel contention corresponding to the second MAC frame belongs to the first STA, wherein $K_2$ is a positive integer, and $K_2$ is greater than or equal to 2.

**38.** The method of claim 37, wherein in a case that the TXOP associated with the channel contention corresponding to the second MAC frame belongs to the AP, n STAs sending the n PPDUs respectively send UL data within the TXOP after receiving a trigger frame sent by the AP.

**39.** The method of claim 37, wherein in a case that the TXOP associated with the channel contention corresponding to the second MAC frame belongs to the AP, n STAs sending the n PPDUs respectively send UL data and receive downlink (DL) data within the TXOP after receiving a trigger frame sent by the AP.

**40.** The method of any one of claims 32 to 39, wherein the second MAC frame is an extended Null Data Physical Protocol Data Unit Feedback Report Polling (NFRP) Trigger frame, or the second MAC frame is a MAC frame comprising an extended Triggered Response Scheduling (TRS) Control field, or the second MAC frame is a MAC frame comprising a Null Data Physical Protocol Data Unit Feedback Report (NFR) Control field.

**41.** The method of claim 40, wherein in a case that the second MAC frame is the extended NFRP Trigger frame, a user information field in the second MAC frame comprises a Feedback Type field, and wherein the Feedback Type field is at least used for indicating all STAs receiving the second MAC frame to feed back whether the STAs need to acquire media to transmit UL data respectively.

**42.** The method of claim 40, wherein in a case that the second MAC frame is the MAC frame comprising the extended TRS Control field, an aggregation control field in the second MAC frame is the extended TRS Control field, and wherein the extended TRS Control field comprises a Null Data Physical Protocol Data Unit (NDP) feedback request field, and the NDP feedback request field is used for triggering all STAs receiving the second MAC frame to feed back PPDUs containing the STAs' own identification information respectively.

**43.** The method of claim 42, wherein each of the PPDUs containing the STA's own identification information is one of: an Ultra High Reliability Multi-user Physical Layer Protocol Data Unit (UHR MU PPDU), an Ultra High Reliability Trigger Based Physical Layer Protocol Data Unit (UHR TB PPDU), an Ultra High Reliability Extended Range Physical Layer Protocol Data Unit (UHR ER PPDU), or an Ultra High Reliability Trigger Based Feedback Null Data Physical Protocol Data Unit (UHR TB feedback NDP).

**44.** The method of claim 40, wherein in a case that the second MAC frame is an MAC frame comprising the NFR Control field, an aggregation control field in the second MAC frame is the NFR Control field, and wherein the NFR Control field comprises a Feedback Type field, and the Feedback Type field is at least used for indicating all STAs receiving the second MAC frame to feed back whether the STAs need to acquire media to transmit UL data respectively.

**45.** The method of claim 44, wherein the NFR Control field further comprises at least one of a Starting AID field, a Number Of IDs field, a Target Receive Power field, or a Number Of Spatially Multiplexed Users field, and
wherein the Starting AID field is used for indicating a first AID in an AID range planned to respond to the second MAC frame, the Number Of IDs field is used for indicating a number of fields contained in a triggered PPDU containing an identification field and identifying identity of a sending device, the Target Receive Power field is used for indicating an expected Received Signal Power (RSP) measured at an antenna connector of the first STA and averaged on the antenna, and the Number Of Spatially Multiplexed Users field is used for indicating a number of STAs multiplexed on a same group of subcarriers in a same Resource Unit (RU).

**46.** The method of any one of claims 1 to 45, wherein the first PPDU is one of an Ultra High Reliability Multi-user Physical Layer Protocol Data Unit (UHR MU PPDU), an Ultra High Reliability Trigger Based Physical Layer Protocol Data Unit (UHR TB PPDU), or an Ultra High Reliability Extended Range Physical Layer Protocol Data Unit (UHR ER PPDU).

**47.** The method of any one of claims 1 to 46, wherein the UL data comprises at least UL delay sensitive data.

**48.** A method for wireless communication, applied to a second station (STA), the method comprising:

receiving, by the second STA, a first Physical Layer Protocol Data Unit (PPDU) sent by a first STA with to-be-transmitted uplink (UL) data,
wherein the first PPDU comprises a first Media Access Control (MAC) frame and a first identification (ID) field, the first MAC frame is used for channel contention, and the first ID field is used for indicating an Association Identifier (AID) of the first STA; or
the first PPDU comprises a second MAC frame, the second MAC frame is used for channel contention, and the second MAC frame is further used for triggering all STAs receiving the second MAC frame to feed back whether the STAs need to acquire media to transmit UL data respectively.

49. The method of claim 48, further comprising in a case that the first PPDU comprises the first MAC frame and the first ID field, and the second STA has to-be-transmitted UL data:

    sending, by the second STA, a second ID field after receiving the first MAC frame,
    wherein the second ID field is used for indicating an AID of the second STA, and a time domain resource occupied by the second ID field is the same as a time domain resource occupied by the first ID field, or the second ID field and the first ID field are completely overlapping in a time domain.

50. The method of claim 49, further comprising before sending the second ID field:
    setting, by the second STA, a value of the second STA's Enhanced Distributed Channel Access (EDCA) backoff counter to zero, or keeping, by the second STA, the value of the second STA's EDCA backoff counter unchanged.

51. The method of claim 49 or 50, wherein a result of channel contention corresponding to the first MAC frame is associated with the number of STAs with to-be-transmitted UL data detected by an Access Point (AP), and
    wherein the number of STAs with to-be-transmitted UL data is acquired by the AP detecting m ID fields, the m ID fields are used for indicating AIDs of m STAs respectively, the m ID fields comprise at least the first ID field and the second ID field, m is a positive integer, and m is greater than or equal to 2.

52. The method of claim 51, wherein time domain resources occupied by the m ID fields are the same, or the m ID fields are completely overlapping in the time domain.

53. The method of claim 52, wherein each of other STAs among the m STAs corresponding to the m ID fields respectively than the first STA sends an ID field for identifying the STA's own AID on the time domain resource occupied by the first ID field, after identifying the first MAC frame.

54. The method of claim 53, wherein the first PPDU further comprises a Reverse Interval (RI) field, and
    wherein the RI field is located after the first MAC frame and before the first ID field, and the RI field is used for reserving a time for a receiving side of the first PPDU to convert from a receiving state to a sending state.

55. The method of claim 53 or 54, wherein each of the other STAs among the m STAs corresponding to the m ID fields respectively than the first STA sets a value of the STA's Enhanced Distributed Channel Access (EDCA) backoff counter to zero, before sending the ID fields for identifying the STA's own AID; or
    each of the other STAs among the m STAs corresponding to the m ID fields respectively than the first STA keeps a value of the STA's EDCA backoff counter unchanged, before sending the ID field for identifying the STA's own AID.

56. The method of any one of claims 51 to 55, wherein the result of the channel contention corresponding to the first MAC frame is associated with the number of STAs with to-be-transmitted UL data detected by the AP, comprising:

    in a case that m is greater than or equal to $K_1$, a Transmission Opportunity (TXOP) associated with the channel contention corresponding to the first MAC frame belongs to the AP; or, in a case that m is greater than or equal to $K_1$, the TXOP associated with the channel contention corresponding to the first MAC frame belongs to the first STA; or, in a case that m is greater than or equal to $K_j$, the TXOP associated with the channel contention corresponding to the first MAC frame belongs to a plurality of STAs among the m STAs corresponding to the m ID fields respectively,
    wherein the plurality of STAs comprise at least the first STA, $K_j$ is a positive integer, and $K_1$ is greater than or equal to 2.

57. The method of claim 56, wherein in a case that the TXOP associated with the channel contention corresponding to the first MAC frame belongs to the AP, the m STAs corresponding to the m ID fields respectively send UL data within the TXOP after receiving a trigger frame sent by the AP.

58. The method of claim 56, wherein in a case that the TXOP associated with the channel contention corresponding to the first MAC frame belongs to the AP, the m STAs corresponding to the m ID fields respectively send UL data and receive downlink (DL) data within the TXOP after receiving a trigger frame sent by the AP.

**59.** The method of any one of claims 49 to 58, wherein transmission of the first PPDU is associated with a first BandWidth (BW) and a first Modulation and Coding Scheme (MCS).

**60.** The method of claim 59, wherein the transmission of the first PPDU is associated with the first BW, and time domain resources of the first MCS occupied by all STAs receiving or detecting the first MAC frame to acquire the first ID field respectively.

**61.** The method of any one of claims 49 to 60, wherein the first ID field is used for indicating the AID of the first STA through a subcarrier used for transmitting the first ID field, and/or the second ID field is used for indicating the AID of the second STA through a subcarrier used for transmitting the second ID field.

**62.** The method of any one of claims 49 to 61, wherein in the first PPDU, the first ID field is located after the first MAC frame.

**63.** The method of any one of claims 49 to 62, wherein the first ID field comprises one or more ID subfields, and wherein the one or more ID subfields are used for indicating ID information of the first STA.

**64.** The method of claim 63, wherein the first ID field further comprises an Ultra High Reliability Short Training Field (UHR-STF).

**65.** The method of claim 63 or 64, wherein the first ID field further comprises one or more Ultra High Reliability Long Training Fields (UHR-LTFs).

**66.** The method of any one of claims 63 to 65, wherein the first ID field further comprises a legacy preamble field.

**67.** The method of claim 66, wherein the legacy preamble field comprises a Legacy Short Training Field (L-STF), a Legacy Long Training Field (L-LTF), a legacy signal (L-SIG), a repeat legacy signal (RL-SIG), and a unify signal (U-SIG).

**68.** The method of claim 66, wherein the legacy preamble field comprises a Legacy Short Training Field (L-STF), a Legacy Long Training Field (L-LTF), a legacy signal (L-SIG), a repeat legacy signal (RL-SIG), a unify signal (U-SIG), and an Ultra High Reliability Signal (UHR-SIG).

**69.** The method of any one of claims 63 to 68, wherein subcarriers used by the one or more ID subfields respectively are used for indicating the AID of the first STA.

**70.** The method of any one of claims 63 to 69, wherein the AID of the first STA is indicated by two subcarrier sets, and subcarriers used by the ID subfields belong to one subcarrier set of the two subcarrier sets.

**71.** The method of claim 70, wherein the subcarriers used by the ID subfields belong to different subcarrier sets of the two subcarrier sets respectively and represent different status information of the first STA respectively.

**72.** The method of claim 70 or 71, wherein a BandWidth (BW) of each of the ID subfields is 20MHz, 40MHz, 80MHz, 80+80MHz, 160MHz, or 320MHz.

**73.** The method of claim 72, wherein the BW of 320MHz is represented by four 80MHz subcarrier set indices, and wherein subcarrier set indices 1-72 are mapped to a first 80MHz, subcarrier set indices 73-144 are mapped to a second 80MHz, subcarrier set indices 145-216 are mapped to a third 80MHz, and subcarrier set indices 217-288 are mapped to a fourth 80MHz.

**74.** The method of any one of claims 63 to 69, wherein the AID of the first STA is indicated by a subcarrier set, and subcarriers used by the ID subfields belong to the subcarrier set.

**75.** The method of any one of claims 63 to 74, wherein a format of the second ID field is the same as a format of the first ID field.

**76.** The method of any one of claims 49 to 75, wherein CWmin used for channel contention corresponding to the first MAC frame is less than CWmin associated with an Enhanced Distributed Channel Access (EDCA) access type AC_VO, and/or CWmax used for the channel contention corresponding to the first MAC frame is less than CWmax associated with the EDCA access type AC_VO.

77. The method of any one of claims 49 to 76, wherein the first MAC frame is a Request To Send (RTS) frame, or the first MAC frame is a Sharing Request To Send (S-RTS) frame, or the first MAC frame is a Clear To Send (CTS) frame, or the first MAC frame is a Sharing Clear To Send (S-CTS) frame, or the first MAC frame is a null frame.

78. The method of any one of claims 49 to 77, wherein each of the first ID field and the second ID field is a User Identifying Extension (UIE) field.

79. The method of claim 48, further comprising in a case that the first PPDU comprises the second MAC frame, and the second STA has to-be-transmitted UL data:

sending, by the second STA, a second PPDU, wherein the second PPDU comprises a first field and a second field, the first field in the second PPDU is used for indicating ID information of the second STA, and the second field in the second PPDU is used for indicating whether the second STA needs to acquire a medium to transmit UL data.

80. The method of claim 79, wherein a result of channel contention corresponding to the second MAC frame is associated with the number of STAs that need to acquire media to transmit UL data respectively detected by an Access Point (AP), and

wherein the number of STAs that need to acquire media to transmit UL data respectively is acquired by the AP detecting n PPDUs, the n PPDUs comprise at least the first PPDU and the second PPDU, each of PPDUs among the n PPDUs other than the first PPDU comprises a first field and a second field, the first field is used for indicating ID information of a STA sending a corresponding PPDU, the second field is used for indicating whether the STA sending the corresponding PPDU needs to acquire a medium to transmit UL data, n is a positive integer, and n is greater than or equal to 2.

81. The method of claim 80, wherein in a case that the number of the PPDUs among the n PPDUs other than the first PPDU is greater than or equal to 2, time domain resources occupied by the PPDUs among the n PPDUs other than the first PPDU are the same, or the PPDUs among the n PPDUs other than the first PPDU are completely overlapping in a time domain.

82. The method of claim 80 or 81, wherein the PPDUs among the n PPDUs other than the first PPDU are sent by corresponding STAs respectively after detecting the first PPDU.

83. The method of any one of claims 79 to 82, wherein the first field is a High Efficiency Long Training Field (HE-LTF) or an Extremely High Throughput Long Training Field (EHT-LTF) or an Ultra High Reliability Long Training Field (UHR-LTF), and/or the second field is a feedback status field corresponding to a Trigger Based Feedback Null Data Physical Protocol Data Unit (TB feedback NDP) frame.

84. The method of any one of claims 79 to 83, wherein the first field is used for indicating the ID information of the STA through a subcarrier used for transmitting the first field, and/or the second field is used for indicating, through a subcarrier used for transmitting the second field, whether the STA needs to acquire the medium to transmit UL data.

85. The method of any one of claims 79 to 84, wherein a result of channel contention corresponding to the second MAC frame is associated with the number of STAs that need to acquire media to transmit UL data respectively detected by an Access Point (AP), comprising:

in a case that the number of STAs that need to acquire media to transmit UL data respectively detected by the AP is equal to or greater than $K_2$, a Transmission Opportunity (TXOP) associated with the channel contention corresponding to the second MAC frame belongs to the AP; or, in a case that the number of STAs that need to acquire media to transmit UL data respectively detected by the AP is equal to or greater than $K_2$, the TXOP associated with the channel contention corresponding to the second MAC frame belongs to the first STA, wherein $K_2$ is a positive integer, and $K_2$ is greater than or equal to 2.

86. The method of claim 85, wherein in a case that the TXOP associated with the channel contention corresponding to the second MAC frame belongs to the AP, n STAs sending n PPDUs respectively send UL data within the TXOP after receiving a trigger frame sent by the AP.

87. The method of claim 85, wherein in a case that the TXOP associated with the channel contention corresponding to the second MAC frame belongs to the AP, n STAs sending n PPDUs respectively send UL data and receive downlink (DL) data within the TXOP after receiving a trigger frame sent by the AP.

88. The method of any one of claims 79 to 87, wherein the second MAC frame is an extended Null Data Physical Protocol Data Unit Feedback Report Polling (NFRP) Trigger frame, or the second MAC frame is a MAC frame comprising an extended Triggered Response Scheduling (TRS) Control field, or the second MAC frame is a MAC frame comprising a Null Data Physical Protocol Data Unit Feedback Report (NFR) Control field.

89. The method of claim 88, wherein in a case that the second MAC frame is the extended NFRP Trigger frame, a user information field in the second MAC frame comprises a Feedback Type field, and wherein the Feedback Type field is at least used for indicating all STAs receiving the second MAC frame to feed back whether the STAs need to acquire media to transmit UL data respectively.

90. The method of claim 88, wherein in a case that the second MAC frame is the MAC frame comprising the extended TRS Control field, an aggregation control field in the second MAC frame is the extended TRS Control field, and wherein the extended TRS Control field comprises a Null Data Physical Protocol Data Unit (NDP) feedback request field, and the NDP feedback request field is used for triggering all STAs receiving the second MAC frame to feed back PPDUs containing the STAs' own identification information respectively.

91. The method of claim 90, wherein each of the PPDUs containing the STAs' own identification information is one of: an Ultra High Reliability Multi-user Physical Layer Protocol Data Unit (UHR MU PPDU), an Ultra High Reliability Trigger Based Physical Layer Protocol Data Unit (UHR TB PPDU), an Ultra High Reliability Extended Range Physical Layer Protocol Data Unit (UHR ER PPDU), or an Ultra High Reliability Trigger Based Feedback Null Data Physical Protocol Data Unit (UHR TB feedback NDP).

92. The method of claim 88, wherein in a case that the second MAC frame is the MAC frame comprising the NFR Control field, an aggregation control field in the second MAC frame is the NFR Control field, and wherein the NFR Control field comprises a Feedback Type field, and the Feedback Type field is at least used for indicating all STAs receiving the second MAC frame to feed back whether the STAs need to acquire media to transmit UL data respectively.

93. The method of claim 92, wherein the NFR Control field further comprises at least one of a Starting AID field, a Number Of IDs field, a Target Receive Power field, or a Number Of Spatially Multiplexed Users field, and
wherein the Starting AID field is used for indicating a first AID in an AID range planned to respond to the second MAC frame, the Number Of IDs field is used for indicating the number of fields contained in a triggered PPDU containing an identification field and identifying identity of a sending device, the Target Receive Power field is used for indicating an expected Received Signal Power (RSP) measured at an antenna connector of the first STA and averaged on the antenna, and the Number Of Spatially Multiplexed Users field is used for indicating a number of STAs multiplexed on a same group of subcarriers in a same Resource Unit (RU).

94. The method of any one of claims 48 to 93, wherein the first PPDU is one of an Ultra High Reliability Multi-user Physical Layer Protocol Data Unit (UHR MU PPDU), an Ultra High Reliability Trigger Based Physical Layer Protocol Data Unit (UHR TB PPDU), or an Ultra High Reliability Extended Range Physical Layer Protocol Data Unit (UHR ER PPDU).

95. The method of any one of claims 48 to 94, wherein the UL data comprises at least UL delay sensitive data.

96. A method for wireless communication, applied to an Access Point (AP), comprising:

receiving, by the AP, a first Physical Layer Protocol Data Unit (PPDU) sent by a first station (STA) with to-be-transmitted uplink (UL) data,
wherein the first PPDU comprises a first Media Access Control (MAC) frame and a first identification (ID) field, the first MAC frame is used for channel contention, and the first ID field is used for indicating an Association Identifier (AID) of the first STA; or
the first PPDU comprises a second MAC frame, the second MAC frame is used for channel contention, and the second MAC frame is further used for triggering all STAs receiving the second MAC frame to feed back whether the STAs need to acquire media to transmit UL data respectively.

97. The method of claim 96, wherein in a case that the first PPDU comprises the first MAC frame and the first ID field, a result of channel contention corresponding to the first MAC frame is associated with a number of STAs with to-be-transmitted UL data detected by the AP, and
wherein the number of STAs with to-be-transmitted UL data is acquired by the AP detecting m ID fields, the m ID fields are used for indicating AIDs of m STAs respectively, the m ID fields comprise at least the first ID field, m is a positive integer, and m is equal to 1, or m is greater than or equal to 2.

98. The method of claim 97, wherein in a case that m is greater than or equal to 2, time domain resources occupied by the m ID fields are the same, or the m ID fields are completely overlapping in a time domain.

99. The method of claim 98, wherein each of other STAs among the m STAs corresponding to the m ID fields respectively than the first STA sends an ID field for identifying the STA's own AID on a time domain resource occupied by the first ID field, after identifying the first MAC frame.

100.
The method of claim 99, wherein the first PPDU further comprises a Reverse Interval (RI) field, and
wherein the RI field is located after the first MAC frame and before the first ID field, and the RI field is used for reserving a time for a receiving side of the first PPDU to convert from a receiving state to a sending state.

101.
The method of claim 99 or 100, wherein each of the other STAs among the m STAs corresponding to the m ID fields respectively than the first STA sets a value of the STA's Enhanced Distributed Channel Access (EDCA) backoff counter to zero respectively, before sending the ID fields for identifying the STA's own AID; or
each of the other STAs among the m STAs corresponding to the m ID fields respectively than the first STA keeps a value of the STA's EDCA backoff counter unchanged, before sending the ID field for identifying the STA's own AID.

102.
The method of claim 97, wherein in a case that m is greater than or equal to 2, the m ID fields are carried by m PPDUs respectively, and
wherein time domain resources occupied by the m PPDUs are the same, or the m PPDUs are completely overlapping in a time domain.

103.
The method of claim 102, wherein each of the m PPDUs comprises an MAC frame used for channel contention, and frame formats of the MAC frames used for channel contention comprised in the m PPDUs are the same.

104.
The method of claim 102 or 103, wherein the STAs corresponding to the m ID fields respectively use a same Enhanced Distributed Channel Access (EDCA) access type, and values of EDCA backoff counters of the STAs corresponding to the m ID fields respectively are the same.

105.
The method of any one of claims 97 to 104, wherein the result of the channel contention corresponding to the first MAC frame is associated with the number of STAs with to-be-transmitted UL data detected by the AP, comprising:

in a case that m is equal to 1, a Transmission Opportunity (TXOP) associated with the channel contention corresponding to the first MAC frame belongs to the first STA; and/or
in a case that m is greater than or equal to $K_1$, the TXOP associated with the channel contention corresponding to the first MAC frame belongs to the AP; or, in a case that m is greater than or equal to $K_1$, the TXOP associated with the channel contention corresponding to the first MAC frame belongs to the first STA; or, in a case that m is greater than or equal to $K_1$, the TXOP associated with the channel contention corresponding to the first MAC frame belongs to a plurality of STAs among the m STAs corresponding to the m ID fields respectively, wherein the plurality of STAs comprise at least the first STA, K; is a positive integer, and $K_1$ is greater than or equal to 2.

106.
The method of claim 105, wherein in a case that the TXOP associated with the channel contention corresponding to the first MAC frame belongs to the AP, the m STAs corresponding to the m ID fields respectively send UL data within the TXOP after receiving a trigger frame sent by the AP.

107.
The method of claim 106, wherein in a case that the TXOP associated with the channel contention corresponding to the first MAC frame belongs to the AP, the m STAs corresponding to the m ID fields respectively send UL data and receive downlink (DL) data within the TXOP after receiving the trigger frame sent by the AP.

**108.**
The method of any one of claims 97 to 107, wherein transmission of the first PPDU is associated with a first BandWidth (BW) and a first Modulation and Coding Scheme (MCS).

**109.**
The method of claim 108, wherein the transmission of the first PPDU is associated with the first BW, and time domain resources of the first MCS occupied by all STAs receiving or detecting the first MAC frame to acquire the first ID field respectively.

**110.**
The method of any one of claims 97 to 109, wherein the first ID field is used for indicating the AID of the first STA through a subcarrier used for transmitting the first ID field.

**111.** The method of any one of claims 97 to 110, wherein in the first PPDU, the first ID field is located after the first MAC frame.

**112.**
The method of any one of claims 97 to 111, wherein the first ID field comprises one or more ID subfields, and wherein the one or more ID subfields are used for indicating ID information of the first STA.

**113.**
The method of claim 112, wherein the first ID field further comprises an Ultra High Reliability Short Training Field (UHR-STF).

**114.**
The method of claim 112 or 113, wherein the first ID field further comprises one or more Ultra High Reliability Long Training Fields (UHR-LTFs).

**115.**
The method of any one of claims 112 to 114, wherein the first ID field further comprises a legacy preamble field.

**116.**
The method of claim 115, wherein the legacy preamble field comprises a Legacy Short Training Field (L-STF), a Legacy Long Training Field (L-LTF), a legacy signal (L-SIG), a repeat legacy signal (RL-SIG), and a unify signal (U-SIG).

**117.**
The method of claim 116, wherein the legacy preamble field comprises the L-STF, the L-LTF, the L-SIG, the RL-SIG, the U-SIG, and an Ultra High Reliability Signal (UHR-SIG).

**118.**
The method of any one of claims 112 to 117, wherein subcarriers used by the one or more ID subfields respectively are used for indicating the AID of the first STA.

**119.**
The method of any one of claims 112 to 118, wherein the AID of the first STA is indicated by two subcarrier sets, and subcarriers used by the ID subfields belong to one subcarrier set of the two subcarrier sets.

**120.**
The method of claim 119, wherein the subcarriers used by the ID subfields belong to different subcarrier sets of the two subcarrier sets respectively and represent different status information of the first STA respectively.

**121.**
The method of claim 119 or 120, wherein a BandWidth (BW) of each of the ID subfields is 20MHz, 40MHz, 80MHz, 80+80MHz, 160MHz, or 320MHz.

**122.**
The method of claim 121, wherein the BW of 320MHz is represented by four 80MHz subcarrier set indices, and wherein subcarrier set indices 1-72 are mapped to a first 80MHz, subcarrier set indices 73-144 are mapped to a second 80MHz, subcarrier set indices 145-216 are mapped to a third 80MHz, and subcarrier set indices 217-288 are mapped to a fourth 80MHz.

**123.**

The method of any one of claims 112 to 118, wherein the AID of the first STA is indicated by a subcarrier set, and subcarriers used by the ID subfields respectively belong to the subcarrier set.

**124.**

The method of any one of claims 97 to 123, wherein CWmin used for channel contention corresponding to the first MAC frame is less than CWmin associated with an Enhanced Distributed Channel Access (EDCA) access type AC_VO, and/or CWmax used for the channel contention corresponding to the first MAC frame is less than CWmax associated with the EDCA access type AC_VO.

**125.**

The method of any one of claims 97 to 124, wherein the first MAC frame is a Request To Send (RTS) frame, or the first MAC frame is a Sharing Request To Send (S-RTS) frame, or the first MAC frame is a Clear To Send (CTS) frame, or the first MAC frame is a Sharing Clear To Send (S-CTS) frame, or the first MAC frame is a null frame.

**126.**

The method of any one of claims 97 to 125, wherein the first ID field is a User Identifying Extension (UIE) field.

**127.**

The method of claim 96, wherein in a case that the first PPDU comprises the second MAC frame, a result of channel contention corresponding to the second MAC frame is associated with the number of STAs that need to acquire media to transmit UL data respectively detected by the AP, and

wherein the number of STAs that need to acquire media to transmit UL data respectively is acquired by the AP detecting n PPDUs, the n PPDUs comprise at least the first PPDU, each of PPDUs among the n PPDUs other than the first PPDU comprises a first field and a second field, the first field is used for indicating ID information of a STA sending a corresponding PPDU, the second field is used for indicating whether the STA sending the corresponding PPDU needs to acquire a medium to transmit UL data, n is a positive integer, and n is greater than or equal to 2.

**128.**

The method of claim 127, wherein the first field is a High Efficiency Long Training Field (HE-LTF) or an Extremely High Throughput Long Training Field (EHT-LTF) or an Ultra High Reliability Long Training Field (UHR-LTF), and/or the second field is a feedback status field corresponding to a Trigger Based Feedback Null Data Physical Protocol Data Unit (TB feedback NDP) frame.

**129.**

The method of claim 127 or 128, wherein the first field is used for indicating the ID information of the STA by a subcarrier used for transmitting the first field, and/or the second field is used for indicating, through a subcarrier used for transmitting the second field, whether the STA needs to acquire the medium to transmit UL data.

**130.**

The method of any one of claims 127 to 129, wherein in a case that the number of the PPDUs among the n PPDUs other than the first PPDU is greater than or equal to 2, time domain resources occupied by the PPDUs among the n PPDUs other than the first PPDU are the same, or the PPDUs among the n PPDUs other than the first PPDU are completely overlapping in a time domain.

**131.**

The method of any one of claims 127 to 130, wherein the PPDUs among the n PPDUs other than the first PPDU are sent by corresponding STAs respectively after detecting the first PPDU.

**132.**

The method of any one of claims 127 to 131, wherein the result of the channel contention corresponding to the second MAC frame is associated with the number of STAs that need to acquire media to transmit UL data respectively detected by the AP, comprising:

in a case that the number of STAs that need to acquire media to transmit UL data respectively detected by the AP is equal to 1, a Transmission Opportunity (TXOP) associated with the channel contention corresponding to the second MAC frame belongs to the first STA; and/or

in a case that the number of STAs that need to acquire media to transmit UL data respectively detected by the AP is equal to or greater than $K_2$, the TXOP associated with the channel contention corresponding to the second MAC frame belongs to the AP; or, in a case that the number of STAs that need to acquire media to transmit UL data respectively detected by the AP is equal to or greater than $K_2$, the TXOP associated with the channel contention corresponding to the second MAC frame belongs to the first STA, wherein $K_2$ is a positive integer, and $K_2$ is greater than or equal to 2.

133.

The method of claim 132, wherein in a case that the TXOP associated with the channel contention corresponding to the second MAC frame belongs to the AP, n STAs sending the n PPDUs respectively send UL data within the TXOP after receiving a trigger frame sent by the AP.

134.

The method of claim 133, wherein in a case that the TXOP associated with the channel contention corresponding to the second MAC frame belongs to the AP, n STAs sending the n PPDUs respectively send UL data and receive downlink (DL) data within the TXOP after receiving the trigger frame sent by the AP.

135.

The method of any one of claims 127 to 134, wherein the second MAC frame is an extended Null Data Physical Protocol Data Unit Feedback Report Polling (NFRP) Trigger frame, or the second MAC frame is a MAC frame comprising an extended Triggered Response Scheduling (TRS) Control field, or the second MAC frame is a MAC frame comprising a Null Data Physical Protocol Data Unit Feedback Report (NFR) Control field.

136.

The method of claim 135, wherein in a case that the second MAC frame is the extended NFRP Trigger frame, a user information field in the second MAC frame comprises a Feedback Type field, and wherein the Feedback Type field is at least used for indicating all STAs receiving the second MAC frame to feed back whether the STAs need to acquire media to transmit UL data respectively.

137.

The method of claim 135, wherein in a case that the second MAC frame is the MAC frame comprising the extended TRS Control field, an aggregation control field in the second MAC frame is the extended TRS Control field, and wherein the extended TRS Control field comprises a Null Data Physical Protocol Data Unit (NDP) feedback request field, and the NDP feedback request field is used for triggering all STAs receiving the second MAC frame to feed back PPDUs containing the STAs' own identification information respectively.

138.

The method of claim 137, wherein each of the PPDUs containing own identification information is one of:
an Ultra High Reliability Multi-user Physical Layer Protocol Data Unit (UHR MU PPDU), an Ultra High Reliability Trigger Based Physical Layer Protocol Data Unit (UHR TB PPDU), an Ultra High Reliability Extended Range Physical Layer Protocol Data Unit (UHR ER PPDU), or an Ultra High Reliability Trigger Based Feedback Null Data Physical Protocol Data Unit (UHR TB feedback NDP).

139.

The method of claim 135, wherein in a case that the second MAC frame is an MAC frame comprising the NFR Control field, an aggregation control field in the second MAC frame is the NFR Control field, and wherein the NFR Control field comprises a Feedback Type field, and the Feedback Type field is at least used for indicating all STAs receiving the second MAC frame to feed back whether the STAs need to acquire media to transmit UL data respectively.

140.

The method of claim 139, wherein the NFR Control field further comprises at least one of a Starting AID field, a Number Of IDs field, a Target Receive Power field, or a Number Of Spatially Multiplexed Users field, and
wherein the Starting AID field is used for indicating a first AID in an AID range planned to respond to the second MAC frame, the Number Of IDs field is used for indicating a number of fields contained in a triggered PPDU containing an identification field and identifying identity of a sending device, the Target Receive Power field is used for indicating an expected Received Signal Power (RSP) measured at an antenna connector of the first STA and averaged on the antenna, and the Number Of Spatially Multiplexed Users field is used for indicating a number of STAs multiplexed on a same group of subcarriers in a same Resource Unit (RU).

**141.**

The method of any one of claims 96 to 140, wherein the first PPDU is one of an Ultra High Reliability Multi-user Physical Layer Protocol Data Unit (UHR MU PPDU), an Ultra High Reliability Trigger Based Physical Layer Protocol Data Unit (UHR TB PPDU), or an Ultra High Reliability Extended Range Physical Layer Protocol Data Unit (UHR ER PPDU).

**142.**

The method of any one of claims 96 to 141, wherein the UL data comprises at least UL delay sensitive data.

**143.**

A station (STA), which is a first STA with to-be-transmitted uplink (UL) data, the STA comprising:

> a communication unit, configured to send a first Physical Layer Protocol Data Unit (PPDU),
> wherein the first PPDU comprises a first Media Access Control (MAC) frame and a first identification (ID) field, the first MAC frame is used for channel contention, and the first ID field is used for indicating an Association Identifier (AID) of the first STA; or
> the first PPDU comprises a second MAC frame, the second MAC frame is used for channel contention, and the second MAC frame is further used for triggering all STAs receiving the second MAC frame to feed back whether the STAs need to acquire media to transmit UL data respectively.

**144.**

A station (STA), which is a second STA, the STA comprising:

> a communication unit, configured to receive a first Physical Layer Protocol Data Unit (PPDU) sent by a first STA with to-be-transmitted uplink (UL) data,
> wherein the first PPDU comprises a first Media Access Control (MAC) frame and a first identification (ID) field, the first MAC frame is used for channel contention, and the first ID field is used for indicating an Association Identifier (AID) of the first STA; or
> the first PPDU comprises a second MAC frame, the second MAC frame is used for channel contention, and the second MAC frame is further used for triggering all STAs receiving the second MAC frame to feed back whether the STAs need to acquire media to transmit UL data respectively.

**145.**

An Access Point (AP), comprising:

> a communication unit, configured to receive a first Physical Layer Protocol Data Unit (PPDU) sent by a first station (STA) with to-be-transmitted uplink (UL) data,
> wherein the first PPDU comprises a first Media Access Control (MAC) frame and a first identification (ID) field, the first MAC frame is used for channel contention, and the first ID field is used for indicating an Association Identifier (AID) of the first STA; or
> the first PPDU comprises a second MAC frame, the second MAC frame is used for channel contention, and the second MAC frame is further used for triggering all STAs receiving the second MAC frame to feed back whether the STAs need to acquire media to transmit UL data respectively.

**146.**

A station (STA), which is a first STA, the STA comprising: a processor and a memory,
wherein the memory is configured to store a computer program, and the processor is configured to call and execute the computer program stored in the memory, to enable the STA to perform the method of any one of claims 1 to 47.

**147.**

A station (STA), which is a second STA, the STA comprising: a processor and a memory,
wherein the memory is configured to store a computer program, and the processor is configured to call and execute the computer program stored in the memory, to enable the STA to perform the method of any one of claims 48 to 95.

**148.**

An Access Point (AP), comprising: a processor and a memory,

# EP 4 727 238 A1

wherein the memory is configured to store a computer program, and the processor is configured to call and execute the computer program stored in the memory, to enable the AP to perform the method of any one of claims 96 to 142.

**149.**

A chip, comprising: a processor, configured to call and execute a computer program from a memory, to enable a device mounted with the chip to perform the method of any one of claims 1 to 47.

**150.**

A chip, comprising: a processor, configured to call and execute a computer program from a memory, to enable a device mounted with the chip to perform the method of any one of claims 48 to 95.

**151.**

A chip, comprising: a processor, configured to call and execute a computer program from a memory, to enable a device mounted with the chip to perform the method of any one of claims 96 to 142.

**152.**

A computer-readable storage medium, configured to store a computer program, wherein when the computer program is executed, the method of any one of claims 1 to 47 is implemented.

**153.**

A computer-readable storage medium, configured to store a computer program, wherein when the computer program is executed, the method of any one of claims 48 to 95 is implemented.

**154.**

A computer-readable storage medium, configured to store a computer program, wherein when the computer program is executed, the method of any one of claims 96 to 142 is implemented.

**155.**

A computer program product, comprising computer program instructions, wherein when the computer program instructions are executed, the method of any one of claims 1 to 47 is implemented.

**156.**

A computer program product, comprising computer program instructions, wherein when the computer program instructions are executed, the method of any one of claims 48 to 95 is implemented.

**157.**

A computer program product, comprising computer program instructions, wherein when the computer program instructions are executed, the method of any one of claims 96 to 142 is implemented.

**158.**

A computer program, implementing the method of any one of claims 1 to 47 when the computer program is executed.

**159.**

A computer program, implementing the method of any one of claims 48 to 95 when the computer program is executed.

**160.**

A computer program, implementing the method of any one of claims 96 to 142 when the computer program is executed.

**FIG. 1**

**FIG. 2**

Medium Busy

PHY-RXEND indication

MAC slot boundaries

TxSIFS slot boundary

SIFS Time

PIFS or AIFS for AIFSN = 1

Slot Time

Slot Time

TxPIFS and AIFSN = 1 slot boundary

Slot Time

Slot Time

AIFSN = 2 slot boundary

Slot Time

AIFSN = 3 slot boundary

Decrement backoff or start rx to tx turnaround if zero when AIFSN = 2

Earliest possible transmission on-air when AIFSN = 2

Initial backoff counter value 0

Initial backoff counter value 1

Initial backoff counter value 2

DIFS

D1

M1

Rx/Tx

D2

CCAdel

M2

Rx/Tx

D1 = aRxPHYDelay

D2 = aAirPropagationTime

Rx/Tx = a RxTxTurnaroundTime

M1 = M2 = aMACProcessingDelay

CCAdel = aCCATime

**FIG. 3**

**FIG. 4**

**FIG. 5**

**FIG. 6**

**FIG. 7**

| B0 | B3 | B4 | B15 | B16 | B17 | B18 | B19 | B20 | B21 | B22 | B23 | B25 |
|----|----|----|-----|-----|-----|-----|-----|-----|-----|-----|-----|-----|
| Trigger Type | | UL Length | | More TF | CS Required | UL BW | | GI And HE-LTF Type | | MU-MIMO HE-LTF Mode | Number Of HE-LTF Symbols And Midamble Periodicity | |

Bits      4              12              1              1              2              2              1              3

| B26 | B27 | B28 | B33 | B34 | B35 | B36 | B37 | B52 | B53 | B54 | B62 | B63 |
|-----|-----|-----|-----|-----|-----|-----|-----|-----|-----|-----|-----|-----|
| UL STBC | LDPC Extra Symbol Segment | AP Tx Power | | Pre-FEC Padding Factor | | PE Disambiguity | UL Spatial Reuse | | Doppler | UL HE-SIG-A2 Reserved | | Reserved | Trigger Dependent Common Info |

Bits    1            1            6            2            1            16            1            9            1            variable

**FIG. 8**

| Starting AID | Reserved | Feedback Type | Reserved | UL Target Receive Power | Number Of Spatially Multiplexed Users |
|---|---|---|---|---|---|
| 12 | 9 | 4 | 7 | 7 | 1 |

Bits

**FIG. 9**

**FIG. 10**

**FIG. 11**

| media contention stage | media granting stage | media usage stage |
|---|---|---|

→ Time axis

**FIG. 12**

200

| First STA | | Second STA | | AP |
|---|---|---|---|---|

S210, The first STA sends a first PPDU, the first STA contains to-be-transmitted UL data. The first PPDU includes a first MAC frame and a first ID field, the first MAC frame is used for channel contention, and the first ID field is used for indicating an AID of the first STA. Or, the first PPDU includes a second MAC frame, the second MAC frame is used for channel contention, and the second MAC frame is further used for triggering all STAs receiving the second MAC frame to feed back whether acquisition of media is needed to transmit UL data;

S210, The first STA sends a first PPDU, the first STA contains to-be-transmitted UL data. The first PPDU includes a first MAC frame and a first ID field, the first MAC frame is used for channel contention, and the first ID field is used for indicating an AID of the first STA. Or, the first PPDU includes a second MAC frame, the second MAC frame is used for channel contention, and the second MAC frame is further used for triggering all STAs receiving the second MAC frame to feed back whether acquisition of media is needed to transmit UL data;

S220, Receive the first PPDU;

S230, Receive the first PPDU.

**FIG. 13**

| UIE field |
|---|

| UIE subfield | UIE subfield | ··· | UIE subfield |
|---|---|---|---|

**FIG. 14**

| UIE field | | | |
|---|---|---|---|

| UHR-STF | UIE subfield | UIE subfield | ··· | UIE subfield |
|---|---|---|---|---|

**FIG. 15**

| UIE field | | | |
|---|---|---|---|

| UHR-LTF | ··· | UHR-LTF | UIE subfield | ··· | UIE subfield |
|---|---|---|---|---|---|

**FIG. 16**

| UIE field | | | |
|---|---|---|---|

| UHR-STF | UHR-LTF | ··· | UHR-LTF | UIE subfield | ··· | UIE subfield |
|---|---|---|---|---|---|---|

**FIG. 17**

| UIE field | | | |
|---|---|---|---|

| L-STF | L-LTF | L-SIG | RL-SIG | U-SIG | UHR-STF | UIE subfield | ··· | UIE subfield |
|---|---|---|---|---|---|---|---|---|

**FIG. 18**

| UIE field | | | |
|---|---|---|---|

| L-STF | L-LTF | L-SIG | RL-SIG | U-SIG | UHR-SIG | UHR-STF | UIE subfield | ··· | UIE subfield |
|---|---|---|---|---|---|---|---|---|---|

**FIG. 19**

**FIG. 20**

**FIG. 21**

FIG. 22

**FIG. 23**

EP 4 727 238 A1

**FIG. 24**

EP 4 727 238 A1

**FIG. 25**

**FIG. 26**

**FIG. 27**

AP | STA 1 | STA 2 | STA 3

Busy Medium

AIFS · S-RTS · UIE-1 · CTS(to STA1) · SU UL data · Ack · TXOP of STA1 · AIFS · S-RTS · UIE-2 · CTS(to STA2) · SU UL data · Ack · TXOP of STA2 · S-RTS · UIE-2

| Frame Control | Duration | RA | TA | Common Info | User Info List | Padding | FCS |
|---|---|---|---|---|---|---|---|
| Octets: 2 | 2 | 6 | 6 | 8 | 5 | variable | 4 |

| Starting AID | Reserved | Feedback Type | Reserved | UL Target Receive Power | Number Of Spatially Multiplexed Users |
|---|---|---|---|---|---|
| Bits: 12 | 9 | 4 | 7 | 7 | 1 |

**FIG. 28**

| Frame Control | Duration/ID | RA | TA | Sequence Control | QoS Control | HT Control | Frame Control | FCS |
|---|---|---|---|---|---|---|---|---|
| Octets: 2 | 2 | 6 | 6 | 2 | 2 | 4 | variable | 4 |

| B0 (=1) | B1 (=1) | B2 Aggregation Control B31 |
|---|---|---|
| Bits: 1 | 1 | 30 |

Extended TRS Control field

| B0 Control ID (=0) B3 | B4 Control Information B29 |
|---|---|
| Bits: 4 | 26 |

| B0 UL Data Symbol B4 | B5 RU Allocation B12 | B13 AP Receive Power B17 | B18 UL Target Receive Power B22 | B23 UL HE-MCS B24 | B25 NDP Feedback Request |
|---|---|---|---|---|---|
| Bits: 5 | 8 | 4 | 5 | 2 | 1 |

**FIG. 29**

| Frame Control | Duration/ ID | RA | TA | Sequence Control | QoS Control | HT Control | Frame Body | FCS |
|---|---|---|---|---|---|---|---|---|

Octets:  2       2       6       6       2       2       4       variable    4

| B0 | B1 | B2                                    B31 |
|---|---|---|
| (=1) | (=1) | Aggregation Control |

Bits:    1       1                      30

NFR Control field

| B0        B3 | B4                      B29 |
|---|---|
| Control ID(=10) | Control Information |

Bits:    4                  26

| B0       B11 | B12       B15 | B16   B17 | B18       B24 | B25 |
|---|---|---|---|---|
| Starting AID | Feedback Type | Number of UIE field | Target Receive Power | Number Of Spatially Multiplexed Users |

Bits:    12          4          2          7          1

## FIG. 30

AIFS

TXOP of STA2

AP — Busy Medium — CTS(to STA2) — Ack

STA 1 — TB feedback NDP (FEEDBACK_STATUS = 0)

STA 2 — Second MAC frame — SU UL data

STA 3 — TB feedback NDP (FEEDBACK_STATUS = 0)

## FIG. 31

EP 4 727 238 A1

AIFS

TXOP of AP

| | CTS-to-self | Trigger | | Multi-STA BlockAck |

AP

| | Second MAC frame | | MU UL data |

STA 1

Busy Medium

| | TB feedback NDP (FEEDBACK_ST ATUS = 1) | | MU UL data |

STA 2

| | TB feedback NDP (FEEDBACK_ST ATUS = 1) |

STA 3

**FIG. 32**

STA 300

communication unit 310

**FIG. 33**

STA 400

communication unit 410

processing unit 420

**FIG. 34**

AP 500

communication unit 510

**FIG. 35**

communication device 600

memory
620

processor
610

transceiver
630

**FIG. 36**

**FIG. 37**

**FIG. 38**

# EP 4 727 238 A1

## INTERNATIONAL SEARCH REPORT

| | International application No. |
|---|---|
| | **PCT/CN2023/099218** |

### A. CLASSIFICATION OF SUBJECT MATTER

H04W72/1268(2023.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT; CNABS; CNKI; VEN; USTXT; EPTXT; WOTXT; 3GPP: 帧, 共享, 站点, 竞争信道, 标识符, 传输机会, frame, share, sta, txop, aid, PPDU, MAC

### C. DOCUMENTS CONSIDERED TO BE RELEVANT

| Category* | Citation of document, with indication, where appropriate, of the relevant passages | Relevant to claim No. |
|---|---|---|
| X | US 2021315009 A1 (SONY CORP.) 07 October 2021 (2021-10-07) description, paragraphs [0205]-[0418] | 1-160 |
| X | US 2021410149 A1 (SONY CORP.) 30 December 2021 (2021-12-30) description, paragraphs [0111]-[0340] | 1-160 |
| A | CN 105578423 A (ZTE CORP.) 11 May 2016 (2016-05-11) entire document | 1-160 |
| A | US 2017127451 A1 (LG ELECTRONICS INC.) 04 May 2017 (2017-05-04) entire document | 1-160 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 February 2024** | **05 February 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/099218**

| Patent document cited in search report | | | Publication date (day/month/year) | Patent family member(s) | | | Publication date (day/month/year) |
|---|---|---|---|---|---|---|---|
| US | 2021315009 | A1 | 07 October 2021 | EP | 4094542 | A1 | 30 November 2022 |
| | | | | EP | 4094542 | A4 | 31 May 2023 |
| | | | | KR | 20220141866 | A | 20 October 2022 |
| | | | | WO | 2021202372 | A1 | 07 October 2021 |
| | | | | JP | 2023520689 | A | 18 May 2023 |
| | | | | US | 11564257 | B2 | 24 January 2023 |
| US | 2021410149 | A1 | 30 December 2021 | US | 11337222 | B2 | 17 May 2022 |
| | | | | EP | 4147528 | A1 | 15 March 2023 |
| | | | | EP | 4147528 | A4 | 18 October 2023 |
| | | | | JP | 2023531684 | A | 25 July 2023 |
| | | | | WO | 2021262652 | A1 | 30 December 2021 |
| | | | | KR | 20220117321 | A | 23 August 2022 |
| CN | 105578423 | A | 11 May 2016 | EP | 3211924 | A1 | 30 August 2017 |
| | | | | EP | 3211924 | A4 | 08 November 2017 |
| | | | | US | 2017325239 | A1 | 09 November 2017 |
| | | | | WO | 2016062135 | A1 | 28 April 2016 |
| US | 2017127451 | A1 | 04 May 2017 | US | 10021722 | B2 | 10 July 2018 |
| | | | | WO | 2015190697 | A1 | 17 December 2015 |

Form PCT/ISA/210 (patent family annex) (July 2022)